(19) Europäisches Patentamt
European Patent Office
Office européen des brevets

(11) EP 3 473 690 A1

# (12) EUROPEAN PATENT APPLICATION

published in accordance with Art. 153(4) EPC

(43) Date of publication:
**24.04.2019 Bulletin 2019/17**

(21) Application number: **17813340.1**

(22) Date of filing: **14.06.2017**

(51) Int Cl.:
***C09K 3/00*** *(2006.01)*

(86) International application number:
**PCT/JP2017/021918**

(87) International publication number:
**WO 2017/217445 (21.12.2017 Gazette 2017/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.06.2016 JP 2016119813**
**14.11.2016 JP 2016221943**
**14.11.2016 JP 2016221944**

(71) Applicant: **Kao Corporation**
**Chuo-Ku**
**Tokyo 103-8210 (JP)**

(72) Inventors:
- **NAGASAWA, Koji**
  **Wakayama-shi**
  **Wakayama 640-8580 (JP)**
- **SUZUKI, Kenichi**
  **Wakayama-shi**
  **Wakayama 640-8580 (JP)**
- **TERAI, Hisato**
  **Wakayama-shi**
  **Wakayama 640-8580 (JP)**
- **KOYANAGI, Koji**
  **Wakayama-shi**
  **Wakayama 640-8580 (JP)**
- **TANIMOTO, Ryu**
  **Wakayama-shi**
  **Wakayama 640-8580 (JP)**
- **OKADA, Kohei**
  **Wakayama-shi**
  **Wakayama 640-8580 (JP)**

(74) Representative: **Hoffmann Eitle**
**Patent- und Rechtsanwälte PartmbB**
**Arabellastraße 30**
**81925 München (DE)**

## (54) RHEOLOGY MODIFIER

(57) Provided are a rheology modifier and a method for modifying water rheology for imparting thixotropy and viscosity to water, and a slurry composition having high viscosity and excellent resistance to separation in water and a method for producing such a slurry composition.

A rheology modifier containing: (A) a sulfate or a salt thereof having a hydrocarbon group with 12 or more and 22 or less carbon atoms and an average number of moles of added alkylene oxide of 0 or more and 25 or less; and (B) a fatty acid alkanolamide having a fatty acid moiety with 10 or more and 22 or less carbon atoms.

EP 3 473 690 A1

## Description

Field of the Invention

The present invention relates to a rheology modifier, a method for modifying water rheology, a slurry composition, a method for producing a slurry composition, and a kit.

Background of the Invention

Surfactants to form an extremely long cylindrical micelle have attracted attention in recent years as frictional drag reducers for piping in water circulation systems, in particular, heat exchange systems for distribution of heating and cooling. One of the important reasons for such attention is, for example, requirement for retention of laminar flows in conduits from the viewpoint of reduction of pressure-pumping energy concomitantly with generation of turbulences in heat exchangers to enhance the thermal conductivity per unit area therein. The form of a cylindrical micelle highly depends on its concentration and fluid velocity (shear force applied to the micelle), and generation of laminar flows in conduits and turbulences in heat exchangers can be achieved through suitable selection of conditions for the inside of the conduits and heat exchangers. Although the effects have been found for common polymers having covalent bonds, however, the covalent bonds of common polymers are broken by high shear force from a pressure pump to lower the molecular weight, and the effects are disadvantageously deteriorated. For cylindrical micelles, on the other hand, even if the structures of cylindrical micelles are broken, the micelles are regenerated on removal of the shear force, leading to less deterioration of the effects. For this reason, cylindrical micelles provide advantages such that conduits and exchangers each in small size can be used without need of using larger ones, or, alternatively, the number of pump stations can be reduced with the sizes of conduits unchanged.

In construction works, drilling of soil and placing of concrete are performed when a building foundation or an underground structure is constructed. In such drilling operations, a clay suspension is used for the drilling surface for the purpose of preventing strata failure and stabilizing the ground. The clay suspension is required to have functions including (1) sufficient density for stabilizing the drilling surface, (2) capability of forming a protective film on the drilling surface to prevent inflow of groundwater from the ground and outflow of the clay suspension into the ground, (3) capability of gelling in voids of soil to support soil particles on the drilling surface, and (4) capability of retaining the drilling surface for a long period of time.

To satisfy the functions, an additive for drilling mud has been proposed, the additive having stability even for strongly alkaline mud including plaster or cement, being excellent in salt resistance, and exhibiting excellent performance also in resistance to pressure filtration and resistance to flocculation (JP-A 2010-270169).

In conventional construction techniques, a thickener is typically used as an additive in construction sites where water is present in the construction environment, such as harbors, bridges, and undersea tunnels, to inhibit diffusion of cement slurry (paste, mortar, or concrete) into water. The thickener has high viscoelasticity, and retains inorganic particles within the slurry by virtue of the high viscoelasticity to significantly inhibit diffusion into water. As a result, the thickener provides significant advantages, for example, enables direct placing of cement slurry in water.

Organic polymers including high-molecular-weight polyoxyethylenes, polysaccharides, and modified celluloses are typically used for the thickener. However, the thickener with any of these organic polymers undergoes low reduction of viscoelasticity on application of shear force (thixotropy), and as a result has disadvantages including requirement of significantly higher pressure than usual when cement slurry is transported through piping. In addition, the organic polymers including polysaccharides and modified celluloses have a tendency to be adsorbed on cement particles, and, for example, this tendency disadvantageously delays hydration reaction of cement.

On the other hand, addition of a specific anionic surfactant and a specific cationic surfactant at a certain ratio into cement slurry is known to provide high viscoelasticity through formation of a pseudo-polymer called wormlike micelle (JP-A 2003-313536). The pseudo-polymer is constructed with non-covalent intermolecular interaction such as hydrophobic bonding at alkyl chain moieties and specific interaction at hydrophilic parts. For this reason, the pseudo-polymer has a character such that the pseudo-polymer structure collapses on application of a certain level of shear force and the viscoelasticity is lowered (high thixotropy). Therefore, the pseudo-polymer structure collapses to lower the viscosity during transport, which involves exposure to shear force, and the pseudo-polymer structure is regenerated to recover the viscoelasticity at a construction site for placement, where the shear force has been removed, which is a performance which none of conventional organic polymer thickeners has (simultaneous achievement of pumpability and viscoelasticity).

The wormlike micelle formed of an anionic surfactant and a cationic surfactant according to JP-A 2003-313536 is considered to be arranged in water in a manner such that the hydrophilic groups are facing to the outer (aqueous phase) side and the hydrophobic parts are facing to the inner (oil phase) side. The viscoelasticity of the wormlike micelle correlates with the number of carbon atoms of the hydrophobic parts. At a temperature equal to or higher than the Krafft

point of the surfactant, the viscoelasticity is higher at a constant temperature and constant loading as the number of carbon atoms is larger. The viscoelasticity is developed through tangling of the wormlike micelles each as a pseudo-polymer. When the wormlike micelles are tangled, the micelles slip through each other with a certain probability. At this time, the larger the number of carbon atoms of the hydrophobic parts, the larger the volume of the hydrophobic parts, which makes it difficult for the wormlike micelles to slip through each other. This is inferred to decrease the probability of slipping-through and strengthen the tangling, leading to improvement of the viscoelasticity of the whole system.

On the other hand, formulation of a rheology modifier such as a slurry into a one-component liquid has been proposed to improve the handleability. JP-A 2009-161607 discloses a one-component liquid rheology modifier containing: a compound (A) and a compound (B) selected from a group consisting of combinations (1) of a compound (A) selected from cationic surfactants and a compound (B) selected from anionic aromatic compounds and combinations (2) of a compound (A) selected from cationic surfactants and a compound (B) selected from bromide compounds, and a water-soluble organic compound (C) having a specific solubility parameter.

## Summary of the Invention

The present invention provides a rheology modifier and a method for modifying water rheology for imparting thixotropy and viscosity to water. In addition, the present invention provides a slurry composition having high viscosity and excellent resistance to separation in water and a method for producing such a slurry composition.

Further, the present invention provides a one-component liquid rheology modifier which imparts thixotropy and viscosity to aqueous solution and slurry and has a viscosity allowing good handleability.

The present invention relates to a rheology modifier containing: (A) a sulfate or a salt thereof having a hydrocarbon group with 12 or more and 22 or less carbon atoms and an average number of moles of added alkylene oxide of 0 or more and 25 or less (hereinafter, referred to as component (A)); and (B) a fatty acid alkanolamide having a fatty acid moiety with 10 or more and 22 or less carbon atoms (hereinafter, referred to as component (B)).

Further, the present invention relates to a liquid rheology modifier containing component (A), component (B), and (C) a compound having a hydroxy group with an octanol/water partition coefficient of -1.6 or more and 1.2 or less (hereinafter, referred to as component (C)), wherein the liquid rheology modifier is a liquid.

Further, the present invention relates to a method for modifying water rheology, the method including mixing (A) a sulfate or a salt thereof having a hydrocarbon group with 12 or more and 22 or less carbon atoms and an average number of moles of added alkylene oxide of 0 or more and 25 or less (hereinafter, referred to as component (A)), and (B) a fatty acid alkanolamide having a fatty acid moiety with 10 or more and 22 or less carbon atoms (hereinafter, referred to as component (B)), with water.

Further, the present invention relates to a slurry composition containing the rheology modifier, a powder, and water.

In other words, the present invention relates to a slurry composition containing: (A) a sulfate or a salt thereof having a hydrocarbon group with 12 or more and 22 or less carbon atoms and an average number of moles of added alkylene oxide of 0 or more and 25 or less (hereinafter, referred to as component (A)); and (B) a fatty acid alkanolamide having a fatty acid moiety with 10 or more and 22 or less carbon atoms (hereinafter, referred to as component (B)); a powder; and water.

Further, the present invention relates to a method for producing a slurry composition, the method including mixing the rheology modifier, a powder, and water together.

In other words, the present invention relates to a method for producing a slurry composition, the method including mixing together: (A) a sulfate or a salt thereof having a hydrocarbon group with 12 or more and 22 or less carbon atoms and an average number of moles of added alkylene oxide of 0 or more and 25 or less (hereinafter, referred to as component (A)); and (B) a fatty acid alkanolamide having a fatty acid moiety with 10 or more and 22 or less carbon atoms (hereinafter, referred to as component (B)); a powder; and water.

Further, the present invention relates to a kit including: a first agent containing (A) a sulfate or a salt thereof having a hydrocarbon group with 12 or more and 22 or less carbon atoms and an average number of moles of added alkylene oxide of 0 or more and 25 or less (hereinafter, referred to as component (A)); and a second agent containing (B) a fatty acid alkanolamide having a fatty acid moiety with 10 or more and 22 or less carbon atoms (hereinafter, referred to as component (B)).

Hereinafter, a polyoxyethylene alkyl ether sulfate or polyoxyethylene alkenyl ether sulfate having an alkyl group or alkenyl group with 12 or more and 22 or less carbon atoms and an average number of moles of added alkylene oxide of 0 or more and 25 or less is referred to as component (A), and a fatty acid alkanolamide having a fatty acid moiety with 10 or more and 22 or less carbon atoms is referred to as component (B).

The present invention provides a rheology modifier and a method for modifying water rheology for imparting thixotropy and viscosity to water. In addition, the present invention provides a slurry composition having high viscosity and excellent resistance to separation in water and a method for producing such a slurry composition.

The rheology modifier according to the present invention can impart thixotropy and viscoelasticity to water, and thus is effective for modification of water rheology. In addition, use of cationic surfactants becomes nonessential, leading to less environmental impact. The slurry composition according to the present invention has high viscosity and excellent resistance to separation in water, and thus is effective for applications requiring pumpability and resistance to material separation.
The liquid rheology modifier according to the present invention has low viscosity in spite of the form of one-component liquid, and can thicken an aqueous solution or slurry when being added to the aqueous solution or slurry.

Brief Description of Drawings

Figure 1 is a graph of the dynamic viscoelasticity characteristics of a composition of Example 1-28 at a measurement temperature of 20°C.
Figure 2 is an electron micrograph of a composition of Example 1-28.
Figure 3 is a photograph when a hydraulic slurry composition of Example 6-1 was added into water.
Figure 4 is a photograph when a hydraulic slurry composition of Comparative Example 6-1 was added into water.

Embodiments of the Invention

The present inventors examined from various viewpoints, and found that a combination of a specific sulfate or a salt thereof as component (A) and a specific fatty acid alkanolamide as component (B) allows formation of a wormlike micelle which exhibits high viscoelasticity in a low concentration. One of the factors impacting on the micelle structure of surfactant in water is the packing parameter of the surfactant. Component (A) and component (B) in the present invention have different packing parameters. Assuming that a liquid containing component (A) and component (B) mixed therein tentatively includes a mixture of component (A) and component (B), the average (average over the number of the molecules) packing parameter of the mixture is inferred to be a value suitable for formation of a wormlike micelle in the system.
In one embodiment of the present invention, the form of one-component liquid with a viscosity allowing good handleability is achieved by using a specific compound as component (C). This is presumably because component (C) intervenes in the wormlike micelle structure of component (A) and component (B) to change the average packing parameter, and as a result the wormlike micelle structure is altered to a rod-shaped or spherical micelle structure. In addition, component (C) diffuses into a slurry or aqueous solution of a hydraulic composition or the like for use to cause reformation of the wormlike micelle structure of component (A) and component (B), which provides high viscoelasticity in a low concentration.

<Rheology modifier>

The rheology modifier according to the present invention contains component (A) and component (B).
Alternatively, the rheology modifier according to the present invention contains component (A), component (B), and water.
Alternatively, the rheology modifier according to the present invention contains: a wormlike micelle formed of component (A) and component (B); and water. In a case where a wormlike micelle is formed, the dynamic viscoelasticity of the rheology modifier according to the present invention behaves like the Maxwell model.
When reference is made to the rheology modifier according to the present invention, the reference includes the above three rheology modifiers.

<Component (A)>

The rheology modifier according to the present invention contains, as component (A), a sulfate or a salt thereof having a hydrocarbon group with 12 or more and 22 or less carbon atoms and an average number of moles of added alkylene oxide of 0 or more and 25 or less.
The hydrocarbon group is preferably a linear or branched alkyl group or a linear or branched alkenyl group, more preferably a linear or branched alkenyl group, and further preferably a linear alkenyl group.
The number of carbon atoms of the hydrocarbon group is, for achievement of high viscoelasticity, 12 or more, preferably 14 or more, more preferably 16 or more, further preferably 18 or more, and, 22 or less, preferably 20 or less.
The hydrocarbon group is, for example, one or more selected from a lauryl group, a myristyl group, a palmityl group, an oleyl group, a stearyl group, and a docosyl group, preferably one or more selected from a myristyl group, a

palmityl group, an oleyl group, and a stearyl group, more preferably one or more selected from a palmityl group, an oleyl group, and a stearyl group, further preferably an oleyl group or a stearyl group, and furthermore preferably an oleyl group.

The average number of moles of an alkylene oxide added is 0 or more and 25 or less.

Examples of the alkylene oxide include alkylene oxides having two or more and four or less carbon atoms. The alkylene oxide is preferably ethylene oxide. It is preferred for component (A) to contain ethylene oxide as the alkylene oxide.

In a case where the number of carbon atoms of the hydrocarbon group is 12 or more and 16 or less, the average number of moles of added alkylene oxide is preferably 0, from the viewpoint of low environmental loads.

In a case where the number of carbon atoms of the hydrocarbon group is 12 or more and 16 or less, the average number of moles of added alkylene oxide is preferably 1 or more, more preferably 2 or more, from the viewpoint of solubility in water, and, preferably 20 or less, more preferably 16 or less, further preferably 14 or less, furthermore preferably 12 or less, furthermore preferably 10 or less, furthermore preferably 8 or less, furthermore preferably 6 or less, from the viewpoint of increase of the array density of the active agents in the wormlike micelle.

In a case where the number of carbon atoms of the hydrocarbon group is 17 or more and 22 or less, the average number of moles of added alkylene oxide is preferably 2 or more, more preferably 4 or more, further preferably 5 or more, from the viewpoint of solubility in water, and, preferably 20 or less, more preferably 18 or less, further preferably 16 or less, furthermore preferably 14 or less, furthermore preferably 12 or less, from the viewpoint of increase of the array density of the active agents in the wormlike micelle.

In a case where component (A) and component (E), which is described later, are used in combination and the number of carbon atoms of the hydrocarbon group of component (A) is 12 or more and 16 or less, the average number of moles of added alkylene oxide is, from the viewpoints of fluidity and viscosity, preferably 1 or more, more preferably 2 or more, further preferably 4 or more, furthermore preferably 5 or more, furthermore preferably 7 or more, and, preferably 20 or less, more preferably 15 or less, further preferably 12 or less.

In a case where component (A) and component (E), which is described later, are used in combination and the number of carbon atoms of the hydrocarbon group of component (A) is 17 or more and 22 or less, the average number of moles of added alkylene oxide is, from the viewpoints of fluidity and viscosity, preferably 1 or more, more preferably 2 or more, further preferably 4 or more, furthermore preferably 5 or more, furthermore preferably 7 or more, furthermore preferably 10 or more, furthermore preferably 15 or more, and furthermore preferably 20 or more.

Suitable for the salt of a sulfate as component (A) are an inorganic salt selected from a sodium salt, an ammonium salt, a potassium salt, a calcium salt, a magnesium salt, and so on, and an organic ammonium salt selected from a monoethanolammonium salt, a diethanolammonium salt, a triethanolammonium salt, a morpholinium salt, and so on.

Specific examples of component (A) include alkyl sulfate, alkenyl sulfate, polyoxyalkylene alkyl ether sulfate, polyoxyalkylene alkenyl ether sulfate, alkylphenyl sulfate, alkenylphenyl sulfate, polyoxyalkylene alkylphenyl ether sulfate, and polyoxyalkylene alkenylphenyl ether sulfate, and one or more selected from alkenyl sulfate, polyoxyalkylene alkyl ether sulfate, and polyoxyalkylene alkenyl ether sulfate are preferred, and one or more selected from polyoxyalkylene alkyl ether sulfate, and polyoxyalkylene alkenyl ether sulfate are more preferred, for achievement of high viscoelasticity.

Compounds represented by the following general formula (a1) are suitable for component (A) for achievement of high viscoelasticity:

$$R^{1a}\text{-O-}(R^{2a}O)_nSO_3M^1 \qquad (a1)$$

wherein $R^{1a}$ is a hydrocarbon group having 12 or more and 22 or less carbon atoms; $R^{2a}$ is an alkylene group having two or more and four or less carbon atoms, and preferably an ethylene group; n is an average number of added moles and is 0 or more and 25 or less; and $M^1$ is a hydrogen atom or a cation, and preferably an inorganic or organic cation.

In general formula (a1), $R^{1a}$ is preferably a linear or branched alkyl group or a linear or branched alkenyl group, more preferably a linear or branched alkenyl group, and further preferably a linear alkenyl group.

The number of carbon atoms of $R^{1a}$ is, for achievement of high viscoelasticity, 12 or more, preferably 14 or more, more preferably 16 or more, further preferably 18 or more, and, 22 or less, preferably 20 or less.

In general formula (a1), for achievement of high viscoelasticity, $R^{1a}$ is, for example, one or more selected from a lauryl group, a myristyl group, a palmityl group, an oleyl group, a linoleic group, a stearyl group, and a docosyl group, preferably one or more selected from a myristyl group, a palmityl group, a linoleic group, an oleyl group, and a stearyl group, more preferably one or more selected from a linoleic group, a palmityl group, an oleyl group, and a stearyl group, and further preferably one or more selected from a linoleic group, an oleyl group, and a stearyl group. In a case where the temperature of water to which the rheology modifier is to be added is near normal temperature, specifically, from approximately 15°C to approximately 30°C, $R^{1a}$ is furthermore preferably an oleyl group. In a case where the temperature of water to which the rheology modifier is to be added is relatively high temperature, specifically, from approximately 30°C to approximately 50°C, $R^{1a}$ is furthermore preferably a stearyl group.

In a case where the number of carbon atoms of $R^{1a}$ in general formula (a1) is 12 or more and 16 or less, n is

preferably 0 from the viewpoint of low environmental loads.

In a case where the number of carbon atoms of $R^{1a}$ in general formula (a1) is 12 or more and 16 or less, n is preferably 1 or more, more preferably 2 or more, from the viewpoint of solubility in water, and, preferably 20 or less, more preferably 16 or less, further preferably 14 or less, furthermore preferably 12 or less, furthermore preferably 10 or less, furthermore preferably 8 or less, furthermore preferably 6 or less, from the viewpoint of increase of the array density of the active agents in the wormlike micelle.

In a case where the number of carbon atoms of $R^{1a}$ in general formula (a1) is 17 or more and 22 or less, n is preferably 2 or more, more preferably 4 or more, further preferably 5 or more, from the viewpoint of solubility in water, and, preferably 20 or less, more preferably 18 or less, further preferably 16 or less, furthermore preferably 14 or less, furthermore preferably 12 or less, from the viewpoint of increase of the array density of the active agents in the wormlike micelle.

In a case where component (A) and component (E), which is described later, are used in combination and the number of carbon atoms of $R^{1a}$ in general formula (a1) is 12 or more and 16 or less, the average number of moles of added alkylene oxide, n, is, from the viewpoints of fluidity and viscosity, preferably 1 or more, more preferably 2 or more, further preferably 4 or more, furthermore preferably 5 or more, furthermore preferably 7 or more, and, preferably 20 or less, more preferably 15 or less, further preferably 12 or less.

In a case where component (A) and component (E), which is described later, are used in combination and the number of carbon atoms of $R^{1a}$ in general formula (a1) is 17 or more and 22 or less, the average number of moles of added alkylene oxide, n, is preferably 1 or more, more preferably 2 or more, further preferably 4 or more, furthermore preferably 5 or more, furthermore preferably 7 or more, furthermore preferably 10 or more, furthermore preferably 15 or more, and furthermore preferably 20 or more, from the viewpoints of fluidity and viscosity.

Examples of $M^1$ in general formula (a1) include a hydrogen atom; inorganic cations such as a sodium ion, an ammonium ion, a potassium ion, a calcium ion, and a magnesium ion; and organic cations such as a monoethanolammonium ion, a diethanolammonium ion, a triethanolammonium ion, and a morpholinium ion. $M^1$ is preferably an inorganic cation of a sodium ion, a potassium ion, an ammonium ion, a calcium ion, or a magnesium ion, and more preferably a sodium ion or an ammonium ion.

The average packing parameter of component (A) is preferably 1/3 or more and 1 or less for achievement of high viscoelasticity. In the present invention, the average packing parameter is represented as the following expression.

$$\text{Average packing parameter} = v / (a0 \times lc)$$

v: volume of hydrocarbon group
a0 : optimum head area of surfactant on water interface
lc: critical chain length of hydrocarbon chain

The HLB of component (A) derived by using the Davies' method is preferably 10 or more and 40 or less for achievement of high viscoelasticity.

<Component (B)>

The rheology modifier according to the present invention contains, as component (B), a fatty acid alkanolamide having a fatty acid moiety of 10 or more and 22 or less.

The hydrocarbon group of the fatty acid moiety is a hydrocarbon group derived from the raw material fatty acid of the fatty acid alkanolamide with the carbon atom of the carboxyl group included therein, and preferably a linear or branched alkyl group or a linear or branched alkenyl group, more preferably a linear or branched alkenyl group, and further preferably a linear alkenyl group.

The number of carbon atoms of the fatty acid moiety is the number of carbon atoms of the raw material fatty acid of the fatty acid alkanolamide with the carbon atom of the carboxyl group included therein, and is, for achievement of high viscoelasticity, 10 or more, preferably 12 or more, more preferably 14 or more, further preferably 16 or more, and, 22 or less, preferably 20 or less, further preferably 18 or less, furthermore preferably 18.

Examples of the fatty acid alkanolamide include fatty acid monoethanolamide, fatty acid methylmonoethanolamide, fatty acid ethylmonoethanolamide, fatty acid propylmonoethanolamide, fatty acid methanolethanolamide, and fatty acid diethanolamide. The fatty acid alkanolamide is preferably fatty acid diethanolamide for achievement of high viscoelasticity.

Examples of component (B) include oleic acid diethanolamide, stearic acid diethanolamide, compounds of palm kernel fatty acid diethanolamides in which the number of carbon atoms of the fatty acid part is 10 or more and 18 or

less, coconut fatty acid diethanolamides, myristic acid diethanolamide, and lauric acid diethanolamide, and two or more of them may be used in combination. From the viewpoint of retention of solubility in water and achievement of high viscoelasticity, component (B) is preferably one or more selected from oleic acid diethanolamide, the palm kernel fatty acid diethanolamides, and the coconut fatty acid diethanolamides, more preferably one or more selected from oleic acid diethanolamide and the palm kernel fatty acid diethanolamides, and further preferably oleic acid diethanolamide.

Component (B) can be obtained through reaction between a higher fatty acid and an alkanolamine, where a by-product other than the fatty acid alkanolamide is simultaneously generated. Examples of the by-product include a fatty acid monoester of a fatty acid alkanolamide and a fatty acid diester of a fatty acid alkanolamide, each of which is a product of dehydration condensation of a fatty acid alkanolamide and a fatty acid; and a fatty acid monoester of an alkanolamine and a fatty acid diester of an alkanolamine, each of which is a product of dehydration condensation of an alkanolamine and a fatty acid. Component (B) in the present invention may contain a trace amount of the by-product such that the advantageous effects of the present invention are not impaired. For achievement of high viscoelasticity, the by-product content of component (B) relative to 100 parts by mass of component (B) is preferably 10 parts by mass or less, more preferably 7 parts by mass or less, and further preferably 5 parts by mass or less.

In a case where the rheology modifier according to the present invention contains water, the total content of component (A) and component (B) relative to 100 parts by mass of water is, for achievement of high viscoelasticity, preferably 0.5 parts by mass or more, more preferably 1 part by mass or more, further preferably 2 parts by mass or more, and, preferably 99 parts by mass or less, more preferably 50 parts by mass or less, further preferably 40 parts by mass or less, furthermore preferably 30 parts by mass or less.

For achievement of a viscosity allowing good handleability, on the other hand, the total content of component (A) and component (B) in the rheology modifier according to the present invention relative to 100 parts by mass of water is preferably 25 parts by mass or less, more preferably 15 parts by mass or less, and further preferably 10 parts by mass or less.

The content of component (A) in the rheology modifier according to the present invention relative to 100 parts by mass of water is preferably 0.25 parts by mass or more, more preferably 0.5 parts by mass or more, and further preferably 1 part by mass or more, for achievement of a viscoelasticity allowing the occurrence of the phenomenon of backward motion, and, preferably 25 parts by mass or less, more preferably 20 parts by mass or less, further preferably 15 parts by mass or less, from the viewpoint of ensuring the fluidity of the composition.

For achievement of a viscosity allowing good handleability, on the other hand, the content of component (A) in the rheology modifier according to the present relative to 100 parts by mass of water is preferably 12.5 parts by mass or less, more preferably 7.5 parts by mass or less, and further preferably 5.0 parts by mass or less.

The content of component (B) in the rheology modifier according to the present invention relative to 100 parts by mass of water is preferably 0.25 parts by mass or more, more preferably 0.5 parts by mass or more, further preferably 1 part by mass or more, for achievement of a viscoelasticity allowing the occurrence of the phenomenon of backward motion, and, preferably 25 parts by mass or less, more preferably 20 parts by mass or less, and further preferably 15 parts by mass or less, from the viewpoint of ensuring the fluidity of the composition.

For achievement of a viscosity allowing good handleability, on the other hand, the content of component (B) in the rheology modifier according to the present invention relative to 100 parts by mass of water is preferably 12.5 parts by mass or less, more preferably 7.5 parts by mass or less, and further preferably 5 parts by mass or less.

It is preferable for the rheology modifier according to the present invention that the total content of component (A) and component (B) be in the specified range and the content of component (A) and the content of component (B) be each in the specified range.

The mass ratio of component (A) to component (B), (A)/(B), in the rheology modifier according to the present invention is preferably 3/97 or more and 95/5 or less for achievement of high viscoelasticity. Further, it is suitable for achievement of high viscoelasticity to control the mass ratio of component (A) to component (B), (A)/(B), through combination of component (A) and component (B) as follows.

In a case where the number of carbon atoms of the hydrocarbon group of component (A) is 12 or more and 16 or less and the number of carbon atoms of the fatty acid moiety of component (B) is 10 or more and 16 or less, the mass ratio of component (A) to component (B), (A)/(B), is, for achievement of high viscoelasticity, preferably 5/95 or more, and, preferably 25/75 or less, more preferably 15/85 or less, further preferably 7/93 or less.

In a case where the number of carbon atoms of the hydrocarbon group of component (A) is 17 or more and 22 or less and the number of carbon atoms of the fatty acid moiety of component (B) is 10 or more and 16 or less, the mass ratio of component (A) to component (B), (A)/(B), is, for achievement of high viscoelasticity, preferably 5/95 or more, more preferably 15/85 or more, and, preferably 45/55 or less, more preferably 35/65 or less.

In a case where the number of carbon atoms of the hydrocarbon group of component (A) is 17 or more and 22 or less and the number of carbon atoms of the fatty acid moiety of component (B) is 17 or more and 22 or less, the mass ratio of component (A) to component (B), (A)/(B), is, for achievement of high viscoelasticity, preferably 5/95 or more, more preferably 15/85 or more, further preferably 40/60 or more, and, preferably 55/45 or less.

In a case where the number of carbon atoms of the hydrocarbon group of component (A) is 12 or more and 16 or less and the number of carbon atoms of the fatty acid moiety of component (B) is 17 or more and 22 or less, the mass ratio of component (A) to component (B), (A)/(B), is, for achievement of high viscoelasticity, preferably 5/95 or more, more preferably 15/85 or more, further preferably 25/75 or more, and, preferably 55/45 or less, more preferably 35/65 or less.

In a case where component (A), component (B), and component (E), which is described later, are used in combination and the number of carbon atoms of the hydrocarbon group of component (A) is 12 or more and 16 or less, the mass ratio of component (A) to component (B), (A)/(B), is, for achievement of high viscoelasticity, preferably 5/95 or more, more preferably 15/85 or more, further preferably 25/75 or more, and, preferably 80/20 or less, more preferably 70/30 or less.

In a case where component (A), component (B), and component (E), which is described later, are used in combination and the number of carbon atoms of the hydrocarbon group of component (A) is 17 or more and 22 or less, the mass ratio of component (A) to component (B), (A)/(B), is, for achievement of high viscoelasticity, preferably 5/95 or more, more preferably 15/85 or more, further preferably 25/75 or more, and, preferably 80/20 or less, more preferably 70/30 or less.

The average packing parameter of component (B) is preferably 1/2 or more and 2 or less for achievement of high viscoelasticity.

The HLB of component (B) derived by using the Griffin's method is preferably 6 or more and 10.5 or less for achievement of high viscoelasticity.

<Component (C)>

To obtain a rheology modifier in the form of one-component liquid having a viscosity allowing good handleability, the rheology modifier according to the present invention preferably contains a compound having a hydroxy group with an octanol/water partition coefficient of -1.6 or more and 1.2 or less, (C) (hereinafter, referred to as component (C)).

Thus, the rheology modifier according to the present invention is, in one example, a liquid rheology modifier containing component (A), component (B), and component (C) (hereinafter, also referred to as "the liquid rheology modifier according to the present invention"). Hereinafter, when reference is made to the rheology modifier according to the present invention, the reference is intended to include the liquid rheology modifier according to the present invention.

Further, the liquid rheology modifier according to the present invention preferably contains water. The liquid rheology modifier according to the present invention is, in one example, a liquid rheology modifier containing component (A), component (B), component (C), and water. The liquid rheology modifier according to the present invention is, in another example, a rheology modifier containing component (A), component (B), component (C), and water, wherein the rheology modifier contains a wormlike micelle formed of component (A) and component (B). In a case where the wormlike micelle is formed, the dynamic viscoelasticity of the liquid rheology modifier according to the present invention behaves like the Maxwell model.

In the present invention, the octanol/water partition coefficient of component (C) is a coefficient indicating the affinity of an organic compound to water and 1-octanol and represented as a logP value. The 1-octanol/water partition coefficient, P, is a ratio between equilibrium concentrations of a compound in two liquid phases of solvents, 1-octanol and water, each containing a trace amount of the compound as a solute dissolved therein at distribution equilibrium, and typically represented as the logarithm to the base 10, logP. Values of logP have been reported for many compounds, and many values are listed in databases available from Daylight Chemical Information Systems, Inc. (Daylight CIS), etc., and can be referred to. If a measured logP value of interest is not available, the logP value can be calculated, for example, by using the program "CLOGP" available from Daylight CIS. This program outputs a "Calculated logP (ClogP)" value calculated by using a fragment approach by Hansch, Leo, together with a measured logP value of interest, if it is present.

The fragment approach is based on the chemical structure of a compound, and considers the number of atoms and the type of chemical bonding (cf. A. Leo, Comprehensive Medicinal Chemistry, Vol. 4, C. Hansch, P.G. Sammens, J.B. Taylor and C.A. Ramsden, Eds., p. 295, Pergamon Press, 1990). In selection of a compound, the ClogP value can be used in place of the measured logP value. In the present invention, a measured logP value of interest is used if it is present, and, otherwise, a ClogP value calculated by using the program CLOGP v4.01 is used. Hereinafter, the octanol/water partition coefficient is occasionally expressed as "Log Pow".

Component (C) is preferably a compound having 1 or more and 10 or less carbon atoms.

Component (C) is preferably a compound having one or more and three or less hydroxy groups. Component (C) is preferably one or more compounds selected from compounds having one hydroxy group and compounds having two hydroxy groups.

Component (C) is preferably a compound having a molecular weight of 50 or more and 200 or less.

Component (C) is preferably an organic compound having a hydroxy group, more preferably an aliphatic compound having a hydroxy group, further preferably an aliphatic compound having one or two hydroxy groups in which the carbon-carbon bonds are each a saturated bond, and furthermore preferably an aliphatic compound having five or less carbon atoms and two hydroxy groups in which the carbon-carbon bonds are each a saturated bond.

For achievement of high viscoelasticity, component (C) is preferably a compound having a solubility parameter (Fedors method) of 9 or more, further 10 or more, and, 20 or less, further 18 or less. Hereinafter, a solubility parameter (Fedors method) is occasionally expressed as "SP value".

Component (C) is preferably an organic compound having a hydroxy group. Examples of the organic compound having a hydroxy group include one or more compounds selected from the following (C1) and (C2):

(C1) a hydroxy group-containing aromatic compound, wherein
specific examples thereof include benzyl alcohol (Log Pow: 1.10/SP value: 9.3); and
(C2) a hydroxy group-containing aliphatic compound, wherein
specific examples thereof include diethylene glycol monobutyl ether (Log Pow: 0.56/SP value: 10.5), 2-butoxyethanol (Log Pow: 0.83/SP value: 10.8), ethylene glycol monoisopropyl ether (Log Pow: 0.05/SP value: 11.1), 1-butanol (Log Pow: 0.90/SP value: 11.3), 2-methoxyethanol (Log Pow: -0.77/SP value: 12.0), triethylene glycol monobutyl ether (Log Pow: 0.02/SP value: 10.3), propylene glycol monobutyl ether (Log Pow: 1.15/SP value: 10.4), propylpropylene glycol (Log Pow: 0.62/SP value: 10.5), 2-dimethylaminoethanol (Log Pow: - 0.58/SP value: 11.3), diethanolamine (Log Pow: -1.43/SP value: 15.4), 2-methylpentane-2,4-diol (Log Pow: 0.58/SP value: 13.1), dipropylene glycol (Log Pow: -0.70/SP value: 13.3), 1,3-butanediol (Log Pow: -0.85/SP value: 14.8), 1,4-butanediol (Log Pow: -1.00/SP value: 15.0), diethylene glycol (Log Pow: -1.30/SP value: 15.0), neopentyl glycol (Log Pow: 0.23/SP value: 13.8), propylene glycol (Log Pow: -0.92/SP value: 15.9), ethylene glycol (Log Pow: -1.36/SP value: 17.8), and lactic acid (Log Pow: -0.62/SP value: 14.86).

Component (C) is preferably (C2) a hydroxy group-containing aliphatic compound, more preferably an aliphatic compound having one or two hydroxy groups in which the carbon-carbon bonds are each a saturated bond, and further preferably an aliphatic compound having five or less carbon atoms and two hydroxy groups in which the carbon-carbon bonds are each a saturated bond.

Component (C) is preferably one or more compounds selected from diethanolamine (Log Pow: -1.43/SP value: 15.4), 2-methylpentane-2,4-diol (Log Pow: 0.58/SP value: 13.1), dipropylene glycol (Log Pow: -0.70/SP value: 13.3), 1,3-butanediol (Log Pow: -0.85/SP value: 14.8), 1,4-butanediol (Log Pow: -1.00/SP value: 15.0), diethylene glycol (Log Pow: -1.30/SP value: 15.0), neopentyl glycol (Log Pow: 0.23/SP value: 13.8), propylene glycol (Log Pow: -0.92/SP value: 15.9), ethylene glycol (Log Pow: - 1.36/SP value: 17.8), and lactic acid (Log Pow: -0.62/SP value: 14.86).

Component (C) is more preferably one or more compounds selected from 1,3-butanediol (Log Pow: -0.85/SP value: 14.8), 1,4-butanediol (Log Pow: -1.00/SP value: 15.0), diethylene glycol (Log Pow: -1.30/SP value: 15.0), neopentyl glycol (Log Pow: 0.23/SP value: 13.8), propylene glycol (Log Pow: -0.92/SP value: 15.9), ethylene glycol (Log Pow: -1.36/SP value: 17.8), and lactic acid (Log Pow: -0.62/SP value: 14.86).

From the viewpoints of odor and availability, component (C) is preferably one or more compounds selected from neopentyl glycol (Log Pow: 0.23/SP value: 13.8) and propylene glycol (Log Pow: -0.92/SP value: 15.9) .

To obtain a liquid rheology modifier having low viscosity with less amount of component (C) added, the octanol/water partition coefficient of component (C) is preferably 0.03 or more, more preferably 0.7 or more, and, preferably 1.15 or less, more preferably 0.85 or less. Preferred as a compound having an octanol/water partition coefficient in this range are benzyl alcohol, 1-butanol, 2-butoxyethanol, 2-methylpentane-2,4-diol, diethylene glycol monobutyl ether, neopentyl glycol, and ethylene glycol monoisopropyl ether, and more preferred is 2-butoxyethanol.

To obtain a liquid rheology modifier having low viscosity with less amount of component (C) added, the SP value of component (C) is preferably 9 or more, more preferably 10.7 or more, and, preferably 11.5 or less, more preferably 11.2 or less, further preferably 11 or less. Preferred as a compound having an SP value in this range are benzyl alcohol, diethylene glycol monobutyl ether, 2-butoxyethanol, ethylene glycol monoisopropyl ether, and 1-butanol, more preferred are benzyl alcohol, diethylene glycol monobutyl ether, 2-butoxyethanol, and ethylene glycol monoisopropyl ether, further preferred are benzyl alcohol, diethylene glycol monobutyl ether, and 2-butoxyethanol, and furthermore preferred is 2-butoxyethanol.

From the viewpoint of slurry viscosity when the rheology modifier according to the present invention is added to a cement slurry, which is described later, and from the viewpoints of odor and availability, component (C) is preferably one or more compounds selected from diethylene glycol monobutyl ether, neopentyl glycol, and propylene glycol, more preferably one or more compounds selected from neopentyl glycol and propylene glycol, and further preferably propylene glycol.

Any compound having a hydroxy group and a carboxy group with an octanol/water partition coefficient in the range for component (C), such as lactic acid (Log Pow:-0.62), can be used as component (C). For prevention of hydrolysis of component (A), component (C) is preferably a compound having no carboxy group.

In addition, any compound having a hydroxy group and an amino group with an octanol/water partition coefficient in the range for component (C), such as 2-dimethylaminoethanol (Log Pow: -0.58/SP value: 11.3) and diethanolamine (Log Pow: -1.43/SP value: 15.4), can be used as component (C). To obtain a stable rheology modifier having a viscosity allowing good handleability, component (C) is preferably a compound having no amino group.

The liquid rheology modifier according to the present invention preferably contains, as component (C), one or more compounds selected from benzyl alcohol, diethylene glycol monobutyl ether, 2-butoxyethanol, ethylene glycol monoisopropyl ether, 1-butanol, 2-methylpentane-2,4-diol, and neopentyl glycol.

To impart high viscoelasticity to an object and maintain product stability at low temperatures with less impact on component (A), the liquid rheology modifier according to the present invention preferably contains two or more compounds as component (C). From this viewpoint, the liquid rheology modifier according to the present invention preferably contains, as component (C), two or more selected from benzyl alcohol, diethylene glycol monobutyl ether, 2-butoxyethanol, ethylene glycol monoisopropyl ether, 1-butanol, 2-methylpentane-2,4-diol, propylene glycol, and neopentyl glycol, and preferably contains, as component (C), propylene glycol and neopentyl glycol. In a case where propylene glycol and neopentyl glycol are contained as component (C), the mass ratio of propylene glycol/neopentyl glycol is preferably 20/80 or more, more preferably 30/70 or more, further preferably 40/60 or more, and, preferably 80/20 or less, more preferably 70/30 or less, further preferably 60/40 or less.

Compounds which have a hydroxy group but have a Log Pow outside of the range according to the present invention, such as glycerin (Log Pow: -1.76/SP value: 16.5), and compounds which have a Log Pow within the range according to the present invention but does not have a hydroxy group, such as methylamine (Log Pow: - 0.71/SP value: 8.85), dimethylamine (Log Pow: -0.20/SP value: 7.72), and tetramethylethylenediamine (Log Pow: 0.30/SP value: 7.74), are considered to have difficulty in achieving the form of one-component liquid and thus be incapable of providing a stable rheology modifier having a viscosity allowing good handleability.

In a case where the liquid rheology modifier according to the present invention contains component (C), the liquid rheology modifier according to the present invention contains preferably 3% by mass or more, more preferably 5% by mass or more, further preferably 7.5% by mass or more, and, preferably 25% by mass or less, more preferably 20% by mass or less, further preferably 15% by mass or less of component (A).

In a case where the liquid rheology modifier according to the present invention contains component (C), the liquid rheology modifier according to the present invention contains preferably 3% by mass or more, more preferably 5% by mass or more, further preferably 7.5% by mass or more, and, preferably 25% by mass or less, more preferably 20% by mass or less, further preferably 15% by mass or less of component (B).

In a case where the liquid rheology modifier according to the present invention contains component (C), the liquid rheology modifier according to the present invention contains preferably 6% by mass or more, more preferably 10% by mass or more, further preferably 15% by mass or more, and, preferably 50% by mass or less, more preferably 40% by mass or less, further preferably 30% by mass or less of component (A) and component (B) in total.

In a case where component (C) is a compound having an octanol/water partition coefficient of 1 or more and 1.2 or less, the content of component (C) in the liquid rheology modifier according to the present invention is preferably 3% by mass or more, more preferably 4% by mass or more, and, preferably 30% by mass or less, more preferably 15% by mass or less, further preferably 7% by mass or less.

In a case where component (C) is a compound having an octanol/water partition coefficient of 0.5 or more and less than 1, the content of component (C) in the liquid rheology modifier according to the present invention is, from the viewpoint of the viscosity of the liquid rheology modifier, preferably 3% by mass or more, more preferably 7.5% by mass or more, further preferably 10% by mass or more, furthermore preferably 15% by mass or more, and, preferably 50% by mass or less, more preferably 40% by mass or less.

In a case where component (C) is a compound having an octanol/water partition coefficient of 0 or more and less than 0.5, the content of component (C) in the liquid rheology modifier according to the present invention is, from the viewpoint of the viscosity of the liquid rheology modifier, preferably 3% by mass or more, more preferably 7.5% by mass or more, further preferably 10% by mass or more, furthermore preferably 15% by mass or more, and, preferably 50% by mass or less, more preferably 40% by mass or less, further preferably 25% by mass or less.

In a case where component (C) is a compound having an octanol/water partition coefficient of -0.8 or more and less than 0, the content of component (C) in the liquid rheology modifier according to the present invention is preferably 3% by mass or more, more preferably 7% by mass or more, further preferably 10% by mass or more, furthermore preferably 15% by mass or more, and, preferably 50% by mass or less, more preferably 40% by mass or less.

In a case where component (C) is a compound having an octanol/water partition coefficient of -0.95 or more and less than -0.8, the content of component (C) in the liquid rheology modifier according to the present invention is preferably 15% by mass or more, more preferably 22% by mass or more, further preferably 30% by mass or more, furthermore preferably 35% by mass or more, and, preferably 60% by mass or less, more preferably 50% by mass or less.

In a case where component (C) is a compound having an octanol/water partition coefficient of -1.6 or more and less than -0.95, the content of component (C) in the liquid rheology modifier according to the present invention is preferably

25% by mass or more, more preferably 30% by mass or more, further preferably 35% by mass or more, and, preferably 70% by mass or less, more preferably 60% by mass or less.

In a case where the liquid rheology modifier according to the present invention contains a plurality of compounds as component (C), it is preferable that the content of at least one of the compounds be in the above range. In a case where the liquid rheology modifier according to the present invention contains two compounds as component (C), for example, it is preferable that the content of at least one of the compounds be in the above range.

In a case where component (C) is a compound having an SP value of 9 or more and less than 10, the content of component (C) in the liquid rheology modifier according to the present invention is preferably 3% by mass or more, more preferably 4% by mass or more, and, preferably 30% by mass or less, more preferably 15% by mass or less, further preferably 7% by mass or less.

In a case where component (C) is a compound having an SP value of 10 or more and less than 13, the content of component (C) in the liquid rheology modifier according to the present invention is, from the viewpoint of the viscosity of the liquid rheology modifier, preferably 3% by mass or more, more preferably 7% by mass or more, further preferably 15% by mass or more, and, preferably 60% by mass or less, more preferably 50% by mass or less, further preferably 30% by mass or less.

In a case where component (C) is a compound having an SP value of 13 or more and less than 13.5, the content of component (C) in the liquid rheology modifier according to the present invention is, from the viewpoint of the viscosity of the liquid rheology modifier, preferably 3% by mass or more, more preferably 7% by mass or more, further preferably 15% by mass or more, furthermore preferably 25% by mass or more, and, preferably 60% by mass or less, more preferably 50% by mass or less, further preferably 40% by mass or less.

In a case where component (C) is a compound having an SP value of 13.5 or more and less than 14.5, the content of component (C) in the liquid rheology modifier according to the present invention is, from the viewpoint of the viscosity of the liquid rheology modifier, preferably 3% by mass or more, more preferably 7% by mass or more, further preferably 15% by mass or more, and, preferably 60% by mass or less, more preferably 50% by mass or less, further preferably 40% by mass or less, furthermore preferably 25% by mass or less.

In a case where component (C) is a compound having an SP value of 14.5 or more and less than 15.5, the content of component (C) in the liquid rheology modifier according to the present invention is, from the viewpoint of the viscosity of the liquid rheology, preferably 3% by mass or more, more preferably 7% by mass or more, further preferably 15% by mass or more, furthermore preferably 25% by mass or more, furthermore preferably 35% by mass or more, and, preferably 70% by mass or less, more preferably 60% by mass or less, further preferably 45% by mass or less.

In a case where component (C) is a compound having an SP value of 15.5 or more and less than 18, the content of component (C) in the liquid rheology modifier according to the present invention is, from the viewpoint of the viscosity of the liquid rheology modifier, preferably 3% by mass or more, more preferably 7% by mass or more, further preferably 15% by mass or more, furthermore preferably 25% by mass or more, furthermore preferably 35% by mass or more, furthermore preferably 45% by mass or more, and, preferably 70% by mass or less, more preferably 60% by mass or less.

In a case where component (C) is a compound having an SP value of 18 or more and 20 or less, the content of component (C) in the liquid rheology modifier according to the present invention is, from the viewpoint of the viscosity of the liquid rheology modifier, preferably 25% by mass or more, more preferably 35% by mass or more, further preferably 45% by mass or more, and, preferably 55% by mass or less, more preferably 80% by mass or less, further preferably 70% by mass or less.

The liquid rheology modifier according to the present invention contains preferably 10% by mass or more, more preferably 15% by mass or more, further preferably 20% by mass or more, and, preferably 50% by mass or less, more preferably 40% by mass or less, further preferably 35% by mass or less of water. It is preferred to use water as the balance of the liquid rheology modifier according to the present invention.

The rheology modifier according to the present invention preferably contains (D) one or more compounds selected from polyethylene glycols with a weight-average molecular weight of 500 or more, polypropylene glycols with a weight-average molecular weight of 500 or more, copolymers of ethylene oxide and propylene oxide with a weight-average molecular weight of 500 or more, and ether compounds having a hydrocarbon group and a polyoxyalkylene group) (hereinafter, referred to as component (D)). Component (D) is a preferred component because good rheology-modifying effect is developed even in a case where an object to which the rheology modifier according to the present invention is to be applied, such as a hydraulic slurry composition, contains an aggregate containing a bentonite or clay mineral.

The crystal structure of the bentonite as a clay mineral is formed of a lamination of layers each of which is formed of a silicate tetrahedron layer and an alumina octahedron layer two-dimensionally bonded together. Some of the silicon atoms in the silicate tetrahedron layers and some of the aluminum atoms in the alumina octahedron layers are each replaced with an aluminum atom and a magnesium atom, respectively, leading to deficiency of positive charge. To compensate such deficiency of positive charge, cations such as sodium ions, potassium ions, and calcium ions are present between layers and neutralize the deficiency of charge to maintain a stable state. When a bentonite, in which

the bonding strength of each of the interlayer cations is weak, is dispersed in an aqueous solution containing another ion or a surfactant having a shared electron pair such as component (A) and component (B), however, ion exchange occurs to generate an interaction. As a result, the rheology-modifying effect of component (A) and component (B) tends to be deteriorated.

In view of this, component (D) is further used in combination for the rheology modifier according to the present invention to allow the shared electron pairs of component (D) to be adsorbed on a bentonite or clay mineral. Probably for this reason, excellent viscoelasticity was successfully imparted even in the case of a hydraulic slurry composition containing a large amount of a bentonite or clay mineral.

For sufficient viscoelasticity for practical use, the weight-average molecular weight of the polyethylene glycol as component (D) is preferably 500 or more, more preferably 2000 or more, further preferably 4000 or more, and, preferably 200000 or less, more preferably 110000 or less, further preferably 80000 or less.

In a case where the rheology modifier according to the present invention contains component (C), the weight-average molecular weight of the polyethylene glycol as component (D) is, from the viewpoint of the viscosity of the liquid rheology modifier, preferably 1000 or more, more preferably 2000 or more, further preferably 5000 or more, and, preferably 200000 or less, preferably 150000 or less, more preferably 120000 or less, further preferably 90000 or less, furthermore preferably 50000 or less, furthermore preferably 20000 or less.

In a case where the rheology modifier according to the present invention contains component (C), the weight-average molecular weight of the polyethylene glycol of component (D) is, from the viewpoint of the viscosity of a bentonite slurry, which is described later, preferably 1000 or more, more preferably 2000 or more, further preferably 5000 or more, and, preferably 200000 or less, preferably 150000 or less, more preferably 120000 or less, further preferably 90000 or less, furthermore preferably 50000 or less, furthermore preferably 20000 or less.

From the viewpoints of the viscosity of the rheology modifier, the viscosity of a bentonite slurry, which is described later, and achievement of sufficient viscoelasticity for practical use, the weight-average molecular weight of the polyethylene glycol as component (D) is preferably 500 or more, more preferably 1000 or more, further preferably 2000 or more, furthermore preferably 4000 or more, furthermore preferably 5000 or more, and, preferably 200000 or less, more preferably 150000 or less, further preferably 120000 or less, furthermore preferably 110000 or less, furthermore preferably 90000 or less, furthermore preferably 80000 or less, furthermore preferably 50000 or less, furthermore preferably 20000 or less.

For sufficient viscoelasticity for practical use, the weight-average molecular weight of the polypropylene glycol as component (D) is preferably 500 or more, more preferably 700 or more, and, preferably 5000 or less, more preferably 3000 or less.

For sufficient viscoelasticity for practical use, the weight-average molecular weight of the copolymer of ethylene oxide and propylene oxide as component (D) is preferably 500 or more, more preferably 1000 or more, and, preferably 30000 or less, more preferably 20000 or less.

In a case where the rheology modifier according to the present invention contains component (C), the weight-average molecular weight of the copolymer of ethylene oxide and propylene oxide as component (D) is preferably 1000 or more, more preferably 2000 or more, and, preferably 25000 or less, more preferably 20000 or less.

For sufficient viscoelasticity for practical use, the weight-average molecular weight of the copolymer of ethylene oxide and propylene oxide as component (D) is preferably 500 or more, more preferably 1000 or more, further preferably 2000 or more, and, preferably 30000 or less, more preferably 25000 or less, further preferably 20000 or less.

The weight-average molecular weight of component (D) is a value measured in gel permeation chromatography (GPC) using polystyrene as a standard. In a case where component (D) is polyethylene glycol, water/ethanol can be used as a solvent.

In one or more compounds selected from ether compounds having a hydrocarbon group and a polyoxyalkylene group as component (D), the number of carbon atoms of the hydrocarbon group is preferably 10 or more and 22 or less. The polyoxyalkylene group is preferably a group selected from a polyoxyethylene group and a polyoxypropylene group, and more preferably a polyoxyethylene group. The average number of moles of added polyoxyalkylene group is preferably 9 or more and 5000 or less.

For sufficient viscoelasticity for practical use, component (D) is preferably one or more polymers selected from polyethylene glycols with a weight-average molecular weight of 500 or more, polypropylene glycols with a weight-average molecular weight of 500 or more, and copolymers of ethylene oxide and propylene oxide with a weight-average molecular weight of 500 or more. In particular, one or more polymers selected from polyethylene glycols with a weight-average molecular weight of 500 or more are more preferred because sufficient viscoelasticity for practical use can be achieved for polymers in a broad range of molecular weight.

In a case where the rheology modifier according to the present invention contains water and component (D), the content of component (D) relative to 100 parts by mass of water is, for sufficient viscoelasticity for practical use, preferably 5 parts by mass or more, more preferably 7.5 parts by mass or more, further preferably 10 parts by mass or more, and, preferably 70 parts by mass or less, more preferably 60 parts by mass or less, further preferably 50 parts by

mass or less.

In a case where the rheology modifier according to the present invention contains component (C) and component (D), the rheology modifier according to the present invention contains preferably 5% by mass or more, more preferably 6% by mass or more, further preferably 7.5% by mass or more, and, preferably 20% by mass or less, more preferably 15% by mass or less, further preferably 13% by mass or less of component (D).

In a case where the rheology modifier according to the present invention contains component (C) and component (D), the content of component (D) in the modifier is, from the viewpoint of the viscosity of a bentonite slurry, preferably 3% by mass or more, more preferably 7% by mass or more, further preferably 10% by mass or more, furthermore preferably 12% by mass or more, and, preferably 20% by mass or less, more preferably 17% by mass or less.

In a case where the rheology modifier according to the present invention contains component (C) and component (D), the content of component (D) in the modifier is, from the viewpoint of the viscosity of the liquid rheology modifier, preferably 3% by mass or more, and, preferably 20% by mass or less, more preferably 13% by mass or less, further preferably 7% by mass or less.

From the viewpoint of workability, the viscosity of the liquid rheology modifier according to the present invention is preferably 1500 mPa·s or less, more preferably 1000 mPa·s or less, further preferably 800 mPa·s or less, furthermore preferably 500 mPa·s or less, and, preferably 0 or more, more preferably more than 0 at 20°C. Here, the viscosity of a liquid rheology modifier is a value measured by using a B-type viscometer (manufactured by Toki Sangyo Co., Ltd., VISCOMETER TVB-10, Rotor M21) 3 minutes after stirring of 50 g of a liquid rheology modifier to be measured in a screw tube (manufactured by Maruemu Corporation, No. 7, 35 mm × 78 mm) at a rotational frequency of 12 rpm.

In a case where the rheology modifier according to the present invention contains water, the rheology modifier according to the present invention contains a wormlike micelle formed of component (A) and component (B). When being added to water to be pressure-pumped through piping, this wormlike micelle has an effect to reduce loss of pressure-pumping energy through prevention of the occurrence of turbulences and reduction of the frictional drag between the water and the piping. Even when the wormlike micelle structure is broken by strong shear force from a pressure pump, in contrast to conventional polymers, the wormlike micelle structure is regenerated after the wormlike micelle has passed through the pump and the shear force applied has been lowered. Therefore, the rheology modifier according to the present invention which contains the wormlike micelle is suitable as a composition to reduce pressure-pumping energy for water.

Because of such characteristics, the rheology modifier according to the present invention is suitably used as a thickener or thixotropy-imparting agent even for applications requiring appropriate viscoelasticity. For example, the rheology modifier according to the present invention is useful as a thickening and gelling agent, a frictional drag reducer for piping, an additive for inks, an agricultural aid, a lubricant, a wax, etc.

The rheology modifier according to the present invention is more useful as a rheology modifier for a hydraulic slurry. Specifically, the rheology modifier according to the present invention is more useful as a rheology modifier for a slurry containing a hydraulic powder. The rheology modifier according to the present invention can impart, for example, an effect to inhibit material separation and an effect to inhibit separation in water, to a hydraulic slurry. The rheology modifier according to the present invention can be used, for example, for underwater inseparable concrete, concrete for spraying, repair of tunnels, application to non-horizontal walls, an additive for well drilling, and a shield method. In addition, the rheology modifier according to the present invention can be used for applications of coastal or river protection works without discharge of water from the inside of a frame surrounding a construction area.

The wormlike micelle formed of component (A) and component (B) in the rheology modifier according to the present invention can be confirmed through electron microscope photography.

In a case where the wormlike micelle formed of component (A) and component (B) is present in the rheology modifier according to the present invention, the dynamic viscoelasticity of the composition behaves like the Maxwell model. According to a description in "Viscoelasticity Characteristics of Surfactant Aqueous Solution" (Toshiyuki Shikata, Surface vol. 29, No. 5 (1991), p399-499), this behavior suggests tangling of polymeric structures with finite molecular weights, not a complete wormlike micelle shape with the infinite molecular weight. Nevertheless, the wormlike micelle formed is expected to have a sufficient length to develop viscoelasticity useful for practical use.

The rheology modifier according to the present invention can be used as a frictional drag reducer for piping.

The frictional drag reducer for piping is an agent such that the agent is added in water in piping forming a closed circulation system, and reduces the conveyance power (pressure-pumping energy) of a hot/cold water pump through prevention of the occurrence of turbulences of the water and reduction of the frictional drag between the piping and the water.

For the frictional drag reducer for piping, the matters described for the rheology modifier according to the present invention can be appropriately applied.

When the friction reducer for piping according to the present invention is added to water in a closed circulation system with a hot/cold water pump, component (A) and component (B) form a wormlike micelle, and the wormlike micelle can absorb the turbulent energy (turbulent eddies) of the circulating water to alter the flow of the circulating water from

turbulence to a laminar flow. The friction in the piping is thereby reduced, and thus the conveyance power of the hot/cold water pump can be reduced.

Frictional reducers for piping containing a cationic surfactant and an aromatic anion active agent have been proposed, and examples thereof include that disclosed in JP-A 58-185692.

The rheology modifier according to the present invention can be used as a thickening and gelling agent.

For the thickening and gelling agent, the matters described for the rheology modifier according to the present invention can be appropriately applied.

The thickening and gelling agent according to the present invention has high viscoelasticity due to formation of a wormlike micelle formed of component (A) and component (B). For this reason, when being added to a detergent composition, for example, the thickening and gelling agent according to the present invention can allow the detergent composition to attach to a vertical or inclined, e.g., hard surface with stains for a longer period of time, leading to achievement of a high washing effect.

In a case where the rheology modifier according to the present invention is used as a rheology modifier for a hydraulic slurry composition, the rheology modifier according to the present invention even allows use of sand with clay and works in a place with clay because no cationic surfactant is contained. The rheology modifier according to the present invention can be used in combination with bentonite, which is widely used as a rheology modifier for civil engineering and construction.

The present invention provides use of a mixture as a rheology modifier, the mixture containing component (A), component (B), and water.

In addition, the present invention provides use of a mixture as a rheology modifier, the mixture containing component (A), component (B), component (C), and water.

In addition, the present invention provides an application of a mixture as a rheology modifier, the mixture containing component (A), component (B), and water.

In addition, the present invention provides an application of a mixture as a rheology modifier, the mixture containing component (A), component (B), component (C), and water.

In addition, the present invention provides use of a mixture as a rheology modifier, the mixture containing a wormlike micelle formed of component (A) and component (B) and water.

In addition, the present invention provides use of a mixture as a rheology modifier, the mixture containing component (A), component (B), component (C), and water, wherein the mixture contains a wormlike micelle formed of component (A) and component (B).

For the uses or applications, the matters described in the above, for example, the preferred embodiments of component (A), component (B), and component (C) can be appropriately applied.

The rheology modifier according to the present invention can contain (E) a dispersant (hereinafter, referred to as component (E)). In a case where an object to which the rheology modifier according to the present invention is to be applied is a hydraulic slurry composition, component (E) is a preferred component because a good rheology-modifying effect and fluidity are developed.

In other words, the present invention provides a rheology modifier containing component (A), component (B), and component (E).

In addition, the present invention provides a rheology modifier containing component (A), component (B), component (C), and component (E).

In addition, the present invention provides a rheology modifier containing component (A), component (B), component (C), component (D), and component (E).

For sufficient viscoelasticity for practical use, the rheology modifier according to the present invention is used such that the total of component (A) and component (B) relative to 100 parts by mass of an object, specifically, water or water in a slurry or aqueous solution, is preferably 0.5 parts by mass or more, more preferably 1 part by mass or more, further preferably 2 parts by mass or more, furthermore preferably 3 parts by mass or more, and, preferably 30 parts by mass or less, more preferably 10 parts by mass or less, further preferably 8 parts by mass or less, furthermore preferably 6 parts by mass or less, furthermore preferably 5 parts by mass or less.

<Admixture for hydraulic slurry composition>

The rheology modifier according to the present invention containing component (E) is useful as an admixture for a hydraulic slurry composition.

In other words, the present invention provides an admixture for a hydraulic slurry composition, the admixture containing component (A), component (B), and component (E).

In addition, the present invention provides an admixture for a hydraulic slurry composition, the admixture containing component (A), component (B), component (E), and water.

When reference is made to the admixture for a hydraulic slurry composition according to the present invention,

the reference includes the above two rheology modifiers.

For the admixture for a hydraulic slurry composition according to the present invention, the matters described for the rheology modifier according to the present invention can be appropriately applied.

Examples of the dispersant as component (E) in the admixture for a hydraulic slurry composition according to the present invention include naphthalene-based polymer, polycarboxylic acid-based polymer, melamine-based polymer, phenolic polymer, and lignin-based polymer.

Examples of the naphthalene-based polymer for use include a naphthalenesulfonic acid-formaldehyde condensate (e.g., MIGHTY 150 manufactured by Kao Corporation); examples of the melamine-based polymer for use include a melaminesulfonic acid-formaldehyde condensate (e.g., MIGHTY 150-V2 manufactured by Kao Corporation); examples of the phenolic polymer for use include a phenolsulfonic acid-formaldehyde condensate (e.g., a compound described in JP-A 49-104919); and examples of the lignin-based polymer for use include a ligninsulfonate (e.g., UltraZin NA manufactured by BORREGAARD; and SAN X, VANILLEX, and PEARLLEX manufactured by NIPPON PAPER Chemicals CO., LTD.).

Examples of the polycarboxylic acid-based copolymer for use include a copolymer of a monoester between polyalkylene glycol and (meth)acrylic acid and a carboxylic acid such as (meth)acrylic acid (e.g., a compound described in JP-A 8-12397); a copolymer of an unsaturated alcohol having polyalkylene glycol and a carboxylic acid such as (meth)acrylic acid; and a copolymer of an unsaturated alcohol having polyalkylene glycol and a dicarboxylic acid such as maleic acid. Here, "(meth)acrylic acid" signifies a carboxylic acid selected from acrylic acid and methacrylic acid.

More specifically, component (E) is, in one example, one or more dispersants selected from (E1) naphthalene-based dispersants, (E2) polycarboxylic acid-based dispersants, (E3) dispersants consisting of the following polycondensation products (hereinafter, also referred to as "PAE-based dispersant"), (E4) lignin-based dispersants, and (E5) melamine-based dispersants:
<polycondensation products>
polycondensation products consisting of the following component E31, component E33, and optional component E32:

[component E31]
an aromatic compound or heteroaromatic compound having 5 to 10 carbon atoms or heteroatoms, and having 1 to 300 oxyethylene and/or oxypropylene groups, on average per molecule, bonded to the aromatic compound or heteroaromatic compound via an O atom or an N atom;
[component E32]
at least one aromatic compound, as an optional component, selected from the group consisting of (E32-1) phenol, (E32-2) phenol ether, (E32-3) naphthol, (E32-4) naphthol ether, (E32-5) aniline, (E32-6) furfuryl alcohol, and (E32-7) an aminoplast-forming agent selected from the group consisting of melamine or derivatives thereof, urea or derivatives thereof, and carboxamides; and
[component E33]
an aldehyde selected from the group consisting of formaldehyde, glyoxylic acid, and benzaldehyde, and mixtures thereof, the benzaldehyde optionally and further having an acidic group represented by a formula $COOM_a$, $SO_3M_a$, or $PO_3M_a$, wherein M represents H, an alkali metal or an alkali earth metal, ammonium, or an organic amine group, and a may be 1/2, 1, or 2.

From the viewpoint of the fluidity of a hydraulic slurry composition, component (E) is preferably one or more selected from (E1) naphthalene-based dispersants, (E2) polycarboxylic acid-based dispersants, and (E4) lignin-based dispersants, more preferably one or more selected from (E1) naphthalene-based dispersants and (E2) polycarboxylic acid-based dispersants, and further preferably (E2) polycarboxylic acid-based dispersants. Now, the dispersant will be described.

(E1) Naphthalene-based dispersant

Preferred examples of the naphthalene-based dispersant include a naphthalenesulfonic acid-formaldehyde condensate or salt thereof. The naphthalenesulfonic acid-formaldehyde condensate or salt thereof is a condensate of naphthalenesulfonic acid and formaldehyde or salt thereof. The naphthalenesulfonic acid-formaldehyde condensate may be co-condensed with an aromatic compound capable of co-condensing with naphthalenesulfonic acid, as a monomer, such as methylnaphthalene, ethylnaphthalene, butylnaphthalene, hydroxynaphthalene, naphthalenecarboxylic acid, anthracene, phenol, cresol, creosote oil, tar, melamine, urea, sulfanilic acid, and/or a derivative thereof, such that the performance is not impaired.

Any commercially available product of the naphthalenesulfonic acid-formaldehyde condensate or salt thereof can be used, such as MIGHTY 150, DEMOL N, DEMOL RN, DEMOL MS, DEMOL SN-B, and DEMOL SS-L (all manufactured by Kao Corporation); and CELLFLOW 120, LAVELIN FD-40, and LAVELIN FM-45 (all manufactured by DKS

Co. Ltd.).

From the viewpoint of improving the fluidity of a hydraulic slurry composition, the weight-average molecular weight of the naphthalenesulfonic acid-formaldehyde condensate or salt thereof is preferably 200,000 or less, more preferably 100,000 or less, further preferably 80,000 or less, furthermore preferably 50,000 or less, furthermore preferably 30,000 or less. From the viewpoint of improving the fluidity of a hydraulic slurry composition, at the same time, the weight-average molecular weight of the naphthalenesulfonic acid-formaldehyde condensate or salt thereof is preferably 1,000 or more, more preferably 3,000 or more, further preferably 4,000 or more, furthermore preferably 5,000 or more. The naphthalenesulfonic acid-formaldehyde condensate may be present as an acid or a neutralized product.

The molecular weight of the naphthalenesulfonic acid-formaldehyde condensate or salt thereof can be measured in gel permeation chromatography under the following conditions.

[GPC conditions]

Column: G4000SWXL + G2000SWXL (Tosoh Corporation)
Eluent: 30 mM $CH_3COONa/CH_3CN$ = 6/4
Flow rate: 0.7 ml/min
Detection: UV 280 nm
Sample size: 0.2 mg/ml
Standard materials: calculated based on the form of sodium polystyrene sulfonate manufactured by Nishio Kogyo K.K. (monodispersed sodium polystyrene sulfonate; molecular weight: 206, 1,800, 4,000, 8,000, 18,000, 35,000, 88,000, 780,000)
Detector: UV-8020 from Tosoh Corporation

In one exemplary method for producing the naphthalenesulfonic acid-formaldehyde condensate or salt thereof, naphthalenesulfonic acid and formaldehyde are subjected to condensation reaction to obtain a condensate. The condensate may be neutralized. In addition, a water-insoluble product as a by-product of the neutralization may be removed. Specifically, 1.2 to 1.4 mol of sulfuric acid is used per 1 mol of naphthalene to obtain naphthalenesulfonic acid. The sulfuric acid and naphthalene are reacted together at 150 to 165°C for 2 to 5 hours to obtain a sulfonated product. Then, formalin in a quantity corresponding to 0.93 to 0.99 mol of formaldehyde per 1 mol of the sulfonated product is added dropwise thereto at 85 to 105°C over 3 to 6 hours, and the resultant after the dropwise addition is subjected to condensation reaction at 95 to 105°C. Since an aqueous solution of a condensate to be obtained is highly acidic, water and a neutralizer can be further added to the resulting condensate for a neutralization process at 80 to 95°C to prevent a tank or the like from undergoing metal corrosion. The quantity of the neutralizer to be added is preferably 1.0 to 1.1 times the moles of the naphthalenesulfonic acid and unreacted sulfuric acid. In addition, a water-insoluble product produced in the neutralization can be removed, and preferred examples of the method include separation through filtration. After these processes, an aqueous solution of a water-soluble salt of the naphthalenesulfonic acid-formaldehyde condensate can be obtained. This aqueous solution can be directly used as an aqueous solution of a naphthalene-based dispersant. Further, the aqueous solution can be dried and powdered to obtain a powdery salt of the naphthalenesulfonic acid-formaldehyde condensate, as necessary, and this can be used as a powdery naphthalene-based dispersant. Spray drying, drum drying, freeze drying, etc., can be used for the drying and powdering.

(E2) Polycarboxylic acid-based dispersant

From the viewpoint of initial fluidity, the polycarboxylic acid-based dispersant is preferably a copolymer including constituent monomer units of monomer (e21) represented by general formula (e21).

The polycarboxylic acid-based dispersant is more preferably a copolymer including constituent monomer units of monomer (e21) represented by general formula (e21) and monomer (e22) represented by general formula (e22).

[Formula 1]

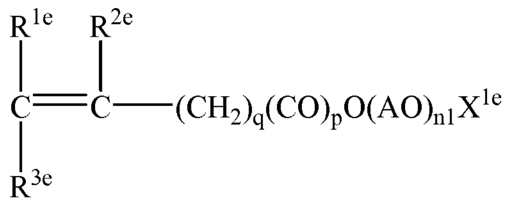

(e21)

In the formula,

$R^{1e}$ and $R^{2e}$ may be identical or different, and each represent a hydrogen atom or a methyl group;
$R^{3e}$ represents a hydrogen atom or $-COO(AO)_{n1}X^{1e}$;
$X^{1e}$ represents a hydrogen atom or an alkyl group having one or more and four or less carbon atoms;
AO represents a group selected from an oxyethylene group and an oxypropylene group;
n1 represents the average number of moles of added AO, and a number of 1 or more and 300 or less;
q represents a number of 0 or more and 2 or less; and
p represents a number of 0 or 1.

[Formula 2]

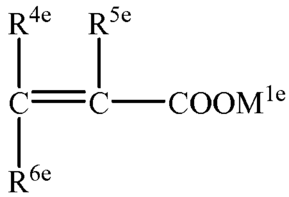

(e22)

In the formula,

$R^{4e}$, $R^{5e}$, and $R^{6e}$ may be identical or different, and each represent a hydrogen atom, a methyl group, or $(CH_2)_rCOOM^{2e}$, wherein $(CH_2)_rCOOM^{2e}$ may be forming an anhydride with $COOM^{1e}$ or another $(CH_2)_rCOOM^{2e}$ and in this case $M^{1e}$ or $M^{2e}$ in the group is absent;
$M^{1e}$ and $M^{2e}$ may be identical or different, and each represent a hydrogen atom, an alkali metal, an alkali earth metal (1/2 atoms), an ammonium group, an alkylammonium group, a substituted alkylammonium group, an alkyl group, a hydroalkyl group, or an alkenyl group; and
r represents a number of 0 or more and 2 or less.

In general formula (e21), $R^{1e}$ is preferably a hydrogen atom from the viewpoint of fluidity retention.
In general formula (e21), $R^{2e}$ is preferably a methyl group from the viewpoint of fluidity retention.
In general formula (e21), $R^{3e}$ is preferably a hydrogen atom from the viewpoint of fluidity retention.
In general formula (e21), $X^{1e}$ is preferably a hydrogen atom or a methyl group, and more preferably a methyl group, from the viewpoint of fluidity retention.
In general formula (e21), AO is preferably an oxyethylene group from the viewpoint of fluidity retention. AO preferably includes an oxyethylene group.
In general formula (e21), n1 represents the average number of moles of added AO. From the viewpoints of the fluidity, viscosity and resistance to material separation of a hydraulic slurry composition, n1 is preferably 5 or more, more preferably 10 or more, further preferably 15 or more, furthermore preferably 20 or more, and, preferably 300 or less, more preferably 200 or less, further preferably 150 or less, furthermore preferably 130 or less.
In general formula (e21), p is preferably 1 from the viewpoint of fluidity retention.
In general formula (e22), $R^{4e}$ is preferably a hydrogen atom from the viewpoint of fluidity retention.
In general formula (e22), $R^{5e}$ is preferably a methyl group from the viewpoint of fluidity retention.
In general formula (e22), $R^{6e}$ is preferably a hydrogen atom from the viewpoint of fluidity retention.
$(CH_2)_rCOOM^{2e}$ may be forming an anhydride with $COOM^{1e}$ or another $(CH_2)_rCOOM^{2e}$ and in this case $M^{1e}$ or $M^{2e}$ in the group is absent.
$M^{1e}$ and $M^{2e}$ may be identical or different, and each represent a hydrogen atom, an alkali metal, an alkali earth metal (1/2 atoms), an ammonium group, an alkylammonium group, a substituted alkylammonium group, an alkyl group, a hydroalkyl group, or an alkenyl group.
Each of the alkyl group, hydroalkyl group, and alkenyl group as $M^{1e}$ or $M^{2e}$ preferably has one or more and four or less carbon atoms.
$M^{1e}$ and $M^{2e}$ may be identical or different, and are each preferably a hydrogen atom, an alkali metal, an alkali earth metal (1/2 atoms), an ammonium group, or an alkylammonium group, more preferably a hydrogen atom, an alkali metal, an alkali earth metal (1/2 atoms), or an ammonium group, further preferably a hydrogen atom, an alkali metal, or an alkali earth metal (1/2 atoms), and furthermore preferably a hydrogen atom or an alkali metal.
In general formula (e22), r of $(CH_2)_rCOOM^{2e}$ is preferably 1 from the viewpoint of fluidity retention.
In the copolymer including constituent monomer units of monomer (e21), the total amount of monomer (e21) in the constituent monomer units is, from the viewpoint of fluidity retention, preferably 70% by mass or more, more preferably 75% by mass or more, further preferably 80% by mass or more, and, preferably 100% by mass or less.
In the copolymer including constituent monomer units of monomer (e21) and monomer (e22), the total amount

of monomer (e21) and monomer (e22) in the constituent monomer units is, from the viewpoint of fluidity retention, preferably 80% by mass or more, more preferably 85% by mass or more, further preferably 90% by mass or more, and, preferably 100% by mass or less. The total amount may be 100% by mass.

In the copolymer including constituent monomer units of monomer (e21) and monomer (e22), the fraction of monomer (e22) to the total constituent monomer units of monomer (e21) and monomer (e22) is, from the viewpoint of fluidity retention for a hydraulic slurry composition, preferably 40% by mole or more, and, preferably 99% by mole or less, more preferably 97% by mole or less, further preferably 95% by mole or less.

From the viewpoint of fluidity retention for a hydraulic slurry composition, the weight-average molecular weight of each of the polycarboxylic acid-based dispersant, the copolymer including constituent monomer units of monomer (e21), and the copolymer including constituent monomer units of monomer (e21) and monomer (e22) is preferably 20,000 or more, more preferably 30,000 or more, further preferably 40,000 or more, and, preferably 100,000 or less, more preferably less than 100,000, further preferably 80,000 or less.

The weight-average molecular weight and number-average molecular weight of each of the polycarboxylic acid-based dispersant, the copolymer including constituent monomer units of monomer (e21), and the copolymer including constituent monomer units of monomer (e21) and monomer (e22) are each a value measured in gel permeation chromatography (GPC) under the following conditions.

* GPC conditions

Apparatus: GPC (HLC-8320GPC) manufactured by Tosoh Corporation
Column: G4000PWXL + G2500PWXL (manufactured by Tosoh Corporation)
Eluent: 0.2 M phosphate buffer/$CH_3CN$ = 9/1
Flow rate: 1.0 mL/min
Column temperature: 40°C
Detection: RI
Sample size: 0.2 mg/mL
Standard materials: calculated based on the form of polyethylene glycol (monodispersed polyethylene glycol with known molecular weight; molecular weight: 87500, 250000, 145000, 46000, 24000)

For the polycarboxylic acid-based dispersant, two or more dispersants, for example, with different average numbers of moles of AO added or different ratios of monomer (e21) and monomer (e22) can be used.

(E3) PAE-based dispersant (E3)

The PAE-based dispersant consists of the following component E31, component E33, and optional component E32:

[component E31]
an aromatic compound or heteroaromatic compound having 5 to 10 carbon atoms or heteroatoms, and having 1 to 300 oxyethylene and/or oxypropylene groups, on average per molecule, bonded to the aromatic compound or heteroaromatic compound via an O atom or an N atom;
[component E32]
at least one aromatic compound, as an optional component, selected from the group consisting of (E32-1) phenol, (E32-2) phenol ether, (E32-3) naphthol, (E32-4) naphthol ether, (E32-5) aniline, (E32-6) furfuryl alcohol, and (E32-7) an aminoplast-forming agent selected from the group consisting of melamine or derivatives thereof, urea or derivatives thereof, and carboxamides; and
[component E33]
an aldehyde selected from the group consisting of formaldehyde, glyoxylic acid, and benzaldehyde, and mixtures thereof, the benzaldehyde optionally and further having an acidic group represented by a formula $COOM_a$, $SO_3M_a$, or $PO_3M_a$, wherein M represents H, an alkali metal or an alkali earth metal, ammonium, or an organic amine group, and a may be 1/2, 1, or 2.

The PAE-based dispersant contains up to three constituents of components E31, E32, and E33. Optionally, component E32 is not used.

Component E31 is an aromatic compound or heteroaromatic compound having 5 to 10 carbon atoms, and in a case where component E31 is a heteroaromatic compound, several carbon atoms, preferably one to five carbon atoms, more preferably one to three carbon atoms, the most preferably one or two carbon atoms which are each substituted with a heteroatom. For example, O, N, S, and/or P are/is suitable as the heteroatoms. The compound has one or more groups, preferably one group on average. The group(s) possessed by the compound is/are 1 to 300 groups selected

from the group consisting of oxyethylene [$-CH_2-CH_2-O-$] and oxypropylene [$-CH(CH_3)-CH_2-O-$ and/or ($-CH_2-CH(CH_3)-O-$)] per molecule, wherein the groups are bonded to the aromatic compound or heteroaromatic compound via an O atom or an N atom.

Although the compound can be homogeneous with respect to such groups, a mixture of components which have different numbers of oxyalkylene groups having two or three carbon atoms (i.e., oxyethylene and/or oxypropylene) and are common in the chemical structure of the end unit of the oxyalkylene groups will be advantageous. Optionally, a mixture of chemically different aromatic compounds can be used. The average number of oxyalkylene groups having two or three carbon atoms per molecule present in components providing such a mixture is 1 to 300, preferably 2 to 280, and particularly preferably 10 to 200. Compounds having at least three, particularly at least four, preferably at least 5, the most preferably at least 20 oxyalkylene groups are also preferred.

In embodiments, a derivative of phenol, naphthol, aniline, or furfuryl alcohol is preferably used for the aromatic compound or heteroaromatic compound as E31. For the purpose of the present invention, component E31 can have a substituent selected from the group consisting of OH, $OR^{7e}$, $NH_2$, $NHR^{7e}$, $N(R^{7e})_2$, $C_1$-$C_{10}$ alkyl, $SO_3H$, COOH, $PO_3H_2$, and $OPO_3H_2$, where the $C_1$-$C_{10}$ alkyl group may have a phenyl or 4-hydroxyphenyl group, and $R^{7e}$ represents a $C_1$-$C_4$ alkyl group.

A specific example of component E31 is an adduct of 1 mol of phenol, cresol, resorcinol, nonylphenol, methoxyphenol, naphthol, methylnaphthol, butylnaphthol, bisphenol A, aniline, methylaniline, hydroxyaniline, methoxyaniline, furfuryl alcohol, and/or salicylic acid with 1 to 300 mol of oxyethylene and/or oxypropylene radicals. Because of easiness in performing condensation with formaldehyde, component E31 is preferably an adduct compound of a benzene derivative which can have a $C_1$-$C_{10}$ alkyl group (e.g., phenol). Component E31 is more preferably an adduct compound of an alkylene oxide and phenol.

Optionally, the starting aromatic component for component E31 can have one or more oxyalkylene groups having two or three carbon atoms in advance. In this case, the summation of the number of oxyalkylene groups derived from a component having oxyalkylene groups from the starting material and the number of oxyalkylene groups derived from a component having oxyalkylene groups added through addition reaction ranges from 1 to 300 per molecule.

Materials introduced into the starting aromatic component for component E31 to obtain the poly(oxyalkylene) group are ethylene oxide and propylene oxide. Addition reaction can be performed either in a random order or in the form of block structure. The end unit of the poly(oxyalkylene) group of component E31 is not limited to a hydroxyl group, and can consist of any alkyl ether or carboxylate as long as it does not interfere with condensation with formaldehyde or an aldehydic acid component.

Component E32 is at least one aromatic compound selected from the group consisting of (E32-1) phenol, (E32-2) phenol ether, (E32-3) naphthol, (E32-4) naphthol ether, (E32-5) aniline, (E32-6) furfuryl alcohol, and (E32-7) an aminoplast-forming agent selected from the group consisting of melamine or derivatives thereof, urea or derivatives thereof, and carboxamides.

In preferred embodiments, component E32 as an aromatic compound has a substituent selected from the group consisting of OH, $NH_2$, $OR^{8e}$, $NHR^{8e}$, $NR^{8e}R^{8e}$, COOH, $C_1$-$C_4$ alkyl, $SO_3H$, $PO_3H_2$, and $OPO_3H_2$, where the alkyl group may have a phenyl or 4-hydroxyphenyl group, $R^{8e}$ represents a $C_1$-$C_4$ alkyl group or a (poly)oxy $C_2$-$C_3$ alkylene group having 1 to 300 ethylene oxide and/or propylene oxide units, and $R^{8e}$ may have a substituent selected from the group consisting of OH, COOH, $SO_3H$, $PO_3H_2$, and $OPO_3H_2$. Examples of component E32 include phenol, phenoxyacetic acid, phenoxyethanol, phenoxyethanol phosphate (mono-, di-, or triester, or a mixture thereof), phenoxydiglycol, or phenoxy(poly)ethylene glycol phosphate (mono-, di-, or triester, or a mixture thereof), phenoxydiglycolphosphate, methoxyphenol, resorcinol, cresol, bisphenol A, nonylphenol, aniline, methylaniline, N-phenyldiethanolamine, N-phenyl-N,N-dipropanoic acid, N-phenyl-N,N-diacetic acid, N-phenyldiethanolamine diphosphate, phenolsulfonic acid, anthranilic acid, succinic acid monoamide, furfuryl alcohol, melamine, and urea.

Component E33 is an aldehyde compound selected from the group consisting of formaldehyde, glyoxylic acid, and benzaldehyde, and mixtures thereof, the benzaldehyde optionally and further having an acidic group represented by a formula $COOM_a$, $SO_3M_a$, or $PO_3M_a$, wherein M represents H, an alkali metal (e.g., Li, Na, K, Rb, Cs, in particular, Na, K) or alkali earth metal (e.g., Mg, Ca, Sr, Ba), ammonium, or an organic amine group, and a is 1/2, 1, or 2. Typically, formaldehyde is used in combination with an additional aldehyde having an acidic group or a suitable salt thereof. Polycondensation can be performed even in the absence of formaldehyde. It is preferable for use of a polymer to be obtained as a plasticizer that an acidic group be present in at least one of aldehyde components, and this is because the acidic group allows the polymer to be adsorbed on the surfaces of cement particles, and this adsorption is required for the plasticizing effect. If the acidic group is introduced via suitable component E32, however, use of the aldehyde having an acidic group can be omitted. Preferred examples of the acid derivative of aldehyde include aldehydecarboxylic acid, aldehydesulfonic acid, and aldehydephosphonic acid. Use of formaldehyde, glyoxylic acid, benzaldehydesulfonic acid, or benzaldehydedisulfonic acid is particularly preferred.

Preferred for a monovalent salt or divalent salt of the acid derivative of aldehyde is use of an alkali metal salt such as a sodium or potassium salt, an alkali earth metal salt such as a calcium salt, and an ammonium salt, or an

organic amine salt. In preferred embodiments, the ratio of formaldehyde to the aldehydic acid component is 1:0.1 to 1:100, more preferably 1:0.5 to 1:50, and the most preferably 1:0.5 to 1:20.

The aldehyde component is preferably used in the form of an aqueous solution thereof. If the aldehyde component is used in the form of an aqueous solution, weighing or mixing of components in synthesis industrially performed can be significantly simplified. However, use of a pure crystal or powdery material, or a hydrate thereof is also acceptable.

Although the mole ratio of components E31, E32, and E33 can vary in a broad numerical range, the mole ratio of component E33 : component E31 (component E31 + component E32, if applicable) is preferably 1:0.01 to 1:10, and more preferably set to 1:0.1 to 1:8. It is particularly advantageous to set the mole ratio of component E31:component E32 to 10:1 to 1:10.

From the viewpoints of initial fluidity and fluidity retention, component E31 is preferably polyoxyethylene monophenyl ether. From the viewpoints of initial fluidity and fluidity retention, the average number of moles of added oxyethylene is preferably 5 or more, more preferably 10 or more, further preferably 15 or more, furthermore preferably 25 or more, furthermore preferably 30 or more, and, preferably 300 or less, more preferably 200 or less, further preferably 100 or less, furthermore preferably 50 or less.

From the viewpoints of initial fluidity and fluidity retention, component E32 is preferably phenoxyethanol phosphate, phenol, phenoxyethanol, anthranilic acid, or phenoxyacetic acid, and more preferably phenoxyethanol phosphate.

From the viewpoints of initial fluidity and fluidity retention, component E33 is preferably formaldehyde or glyoxylic acid, and more preferably formaldehyde.

From the viewpoints of initial fluidity and fluidity retention, the mole ratio of component E31, component E32, and component E33 in charging can be, for example, 1 mol : 2 mol : 3 mol.

The weight-average molecular weight of the PAE-based dispersant is, from the viewpoints of initial fluidity and fluidity retention, preferably 10000 or more, more preferably 15000 or more, further preferably 18000 or more, and, preferably 50000 or less, more preferably 40000 or less, further preferably 35000 or less, furthermore preferably 30000 or less, furthermore preferably 25000 or less.

A polycondensation product as the PAE-based dispersant can be produced in accordance with a method described in JP-A 2008-517080.

One preferred example of the PAE-based dispersant is a dispersant consisting of a polycondensation product consisting of the following component E31, component E32, and component E33, wherein the molar ratio of component E33:(component E31 + component E32) is 1:0.01 to 1:10, and the mole ratio of component E31:component E32 is 10:1 to 1:10:

[component E31]
an aromatic compound selected from the group consisting of phenol, cresol, resorcinol, nonylphenol, methoxyphenol, naphthol, methylnaphthol, butylnaphthol, and bisphenol A, having 1 to 300 oxyethylene and/or oxypropylene groups, on average per molecule, bonded to the aromatic compound or heteroaromatic compound via an O atom or an N atom;
[component E32]
at least one aromatic compound selected from the group consisting of phenoxyacetic acid, phenoxyethanol, phenoxyethanol phosphate, phenoxydiglycol, and phenoxy(poly)ethylene glycol phosphate; and
[component E33]
an aldehyde selected from the group consisting of formaldehyde, glyoxylic acid, and benzaldehyde, and mixtures thereof, the benzaldehyde optionally and further having an acidic group represented by a formula $COOM_a$, $SO_3M_a$, or $PO_3M_a$, wherein M represents H, an alkali metal or an alkali earth metal, ammonium, or an organic amine group, and a may be 1/2, 1, or 2.

In the polycondensation product, component E33 as an aldehyde component is preferably a compound selected from the group consisting of formaldehyde, glyoxylic acid, benzaldehyde, benzaldehydesulfonic acid, and benzaldehydedisulfonic acid.

In the polycondensation product, the mole ratio of component E33:(E31 + E32) is preferably 1:0.1 to 1:8.

(E4) Ligninsulfonic acid-based dispersant

The ligninsulfonic acid-based dispersant is a ligninsulfonate or derivative thereof. The ligninsulfonate or derivative thereof may be one having a function as a dispersant, a water reducer, or an AE agent in a hydraulic slurry composition.

A commercially available product of the ligninsulfonate or derivative thereof can be used. Examples thereof include, as water reducers and AE water reducers, MasterPozzolith No. 70 and MasterPolyheed 15S series from BASF Japan Ltd.; FLOWRIC S series and FLOWRIC R series from FLOWRIC CO., LTD.; DAREX WRDA from Grace Chamicals; Plastcrete NC and Plastcrete R from Sika Ltd.; Yamaso 80P, Yamaso 90 series, Yamaso 98 series, Yamaso 02NL-P,

Yamaso 02NLR-P, Yamaso 09NL-P, and Yamaso NLR-P from YAMASO CHEMICAL Co., Ltd.; CHUPOL EX60 series and CHUPOL LS-A series from TAKEMOTO OIL & FAT Co., Ltd.; and Ligace UA series, Ligace UR series, and Ligace VF series from Ligace K.K.

Specific examples of the ligninsulfonate or derivative thereof are listed as follows.

(I) An alkali metal salt, alkali earth metal salt, ammonium salt, or amine salt of ligninsulfonic acid
(II) A lignin derivative formed through introduction of an amine compound or an amino group into a ligninsulfonate (e.g., JP-A 2016-108183)
(III) A lignin derivative formed through reaction of a ligninsulfonate and formaldehyde (e.g., JP-A 2015-229764)
(IV) A modified lignin such as oxidized lignin and sulfonated lignin (e.g., JP-A 2003-2714)
(V) A ligninsulfonic acid compound-polyol complex (e.g., JP-A 2007-105899)
(VI) A modified product of ligninsulfonate as any of the following 1) to 3) (e.g., JP-A 2007-261119)

1) A modified product of ligninsulfonate formed through graft copolymerization of ligninsulfonic acid or a salt thereof and an acrylic monomer having a functional group
2) A modified product of ligninsulfonate formed through graft copolymerization of ligninsulfonic acid or a salt thereof and a vinyl monomer having a functional group
3) A modified product of ligninsulfonate formed through addition of a naphthalenesulfonate-formaldehyde condensate to ligninsulfonic acid or a salt thereof

(VII) A lignin derivative formed through introduction of a polyalkylene glycol compound into ligninsulfonate (e.g., JP-A 2015-193804)
(VIII) A reaction product between a ligninsulfonic acid-based compound and a water-soluble monomer (e.g, JP-A 2011-240224)

Here, examples of the ligninsulfonic acid-based compound include a compound having a backbone formed through cleavage of the hydroxyphenylpropane structure of lignin at the $\alpha$ position for a side chain followed by introduction of a sulfone group therein.

Examples of the water-soluble monomer include a compound having at least one or more ionic functional groups or other polar groups such as a carboxyl group, a hydroxyl group, a sulfone group, a nitroxyl group, a carbonyl group, a phosphate group, an amino group, and an epoxy group.

(IX) A ligninsulfonic acid derivative as any of the following 4) and 5) (e.g., JP-A 2015-212216)

4) A lignin derivative obtained by reacting a functional group such as a phenolic hydroxy group, an alcoholic hydroxy group, and a thiol group possessed by a ligninsulfonic acid-based compound with at least one water-soluble monomer
5) A lignin derivative obtained by radical-copolymerizing a ligninsulfonic acid-based compound (typically, a functional group of the compound) with at least one water-soluble monomer by using a radical initiator

Here, the ligninsulfonic acid-based compound is not limited, and examples thereof include those obtained through digestion of woods by the sulfite process.

Examples of the water-soluble monomer capable of reacting with a phenolic hydroxyl group and/or alcoholic hydroxyl group possessed by the ligninsulfonic acid-based compound include an alkylene oxide such as ethylene oxide and propylene oxide.

Examples of the water-soluble monomer capable of reacting with a thiol group possessed by the ligninsulfonic acid-based compound include an alkylene oxide such as ethylene oxide and propylene oxide, and alkyleneimine such as ethyleneimine and propyleneimine.

Examples of the water-soluble monomer for radical copolymerization include monomers described in [0071] to [0074] of JP-A 2015-212216, specifically, adducts of acrylic acid, methacrylic acid, or (meth)acrylic acid with 1 to 500 mol of an alkylene oxide having 2 to 18 carbon atoms, and alkylene oxide adduct compounds obtained by adding 2 to 300 mol of an alkylene oxide to allyl alcohol.

(E5) Melamine-based dispersant

Examples of the melamine-based dispersant are as follows.

A melaminesulfonic acid-formaldehyde condensate or salt thereof is a known compound obtained such that N-methylolated melamine obtained by reacting melamine and formaldehyde is reacted with a bisulfite to sulfomethylate some of the methylol groups, and an acid is then added for dehydration condensation of the methylol groups to form a formaldehyde condensate, which is neutralized with an alkali (e.g., see JP-B2 63-37058). Examples of the alkali include

hydroxides of alkali metal or alkali earth metal; ammonia; mono-, di-, or trialkylamine (two to eight carbon atoms); and mono-, di-, or trialkanolamine (two to eight carbon atoms).

Examples of the melamine-based dispersant as a commercially available product include MIGHTY 150V-2 (manufactured by Kao Corporation); SMF-PG (Nissan Chemical Industries, Ltd.); Melflow (Mitsui Chemicals, Inc.); Melment F-10 (manufactured by Showa Denko K.K.); Super Melamine (manufactured by Nissan Chemical Corporation); FLOWRIC MS (manufactured by FLOWRIC CO., LTD.); and Melment F4000, Melment F10M, and Melment F245 (all manufactured by BASF Japan Ltd.).

The molecular weight of the melaminesulfonic acid-formaldehyde condensate is preferably 1000 or more, more preferably 5000 or more, further preferably 5000 or more, and, preferably 100000 or less, more preferably 50000 or less, further preferably 20000 or less (by gel permeation chromatography, calculated based on the form of polystyrenesulfonic acid).

In a case where the admixture for a hydraulic slurry composition according to the present invention contains water and component (E), the content of component (E) relative to 100 parts by mass of water is, from the viewpoints of achievement of sufficient fluidity for practical use for a hydraulic slurry composition and good long-term storage stability for the admixture for a hydraulic slurry composition, preferably 5 parts by mass or more, more preferably 8 parts by mass or more, further preferably 10 parts by mass or more, and, preferably 200 parts by mass or less, more preferably 100 parts by mass or less, further preferably 80 parts by mass or less.

From the viewpoints of achievement of good viscoelasticity for a hydraulic slurry composition and the long-term storage stability of the admixture for a hydraulic slurry composition, the mass ratio of the total of the content of component (A) and the content of component (B) to the content of component (E), [(A)+(B)]/(E), in the admixture for a hydraulic slurry composition according to the present invention is preferably 3/97 or more, more preferably 5/95 or more, further preferably 10/90 or more, and, preferably 97/3 or less, more preferably 95/5 or less, 90/10 or less.

The present invention provides use of a mixture as an admixture for a hydraulic slurry composition, the mixture containing component (A), component (B), component (E), and water.

In addition, the present invention provides an application of a mixture as an admixture for a hydraulic slurry composition, the mixture containing component (A), component (B), component (E), and water.

For preferred embodiments of component (A), component (B), and component (E), the matters described in the above can be appropriately applied.

<Method for modifying water rheology>

The method for modifying water rheology according to the present invention is a method for modifying water rheology, the method including mixing component (A) and component (B) with water.

Alternatively, the method for modifying water rheology according to the present invention is a method for modifying water rheology, the method including mixing component (A) and component (B) with water, wherein component (A) and component (B) form a wormlike micelle.

When reference is made to the method for modifying water rheology according to the present invention, the reference includes the above two methods for modifying water rheology.

For the method for modifying water rheology according to the present invention, the matters described for the rheology modifier according to the present invention and the admixture for a hydraulic slurry composition according to the present invention can be appropriately applied.

Here, the concept of the water in the method for modifying water rheology according to the present invention encompasses, in addition to water itself, water in an aqueous solution and water in a slurry. Accordingly, the method for modifying water rheology according to the present invention can be also said to be a method for modifying the rheology of water or a liquid composition containing water.

In the method for modifying water rheology according to the present invention, from the viewpoint of reducing foaming of component (A), it is preferred that component (B) be mixed with water, and component (A) be then added thereto and mixed together.

Specifically, the method for modifying water rheology according to the present invention is preferably a method for modifying water rheology, the method including mixing (B) a fatty acid alkanolamide having a fatty acid moiety with 10 or more and 22 or less carbon atoms with water; then adding (A) a sulfate or a salt thereof having a hydrocarbon group with 12 or more and 22 or less carbon atoms and an average number of moles of added alkylene oxide of 0 or more and 25 or less thereto and mixing together.

In the method for modifying water rheology according to the present invention, component (A) and component (B) are used, for sufficient viscoelasticity for practical use, such that the total of component (A) and component (B) relative to 100 parts by mass of an object, specifically, water or water in a slurry or aqueous solution, is preferably 0.5 parts by mass or more, more preferably 1 part by mass or more, further preferably 2 parts by mass or more, furthermore preferably 3 parts by mass or more, and, preferably 30 parts by mass or less, more preferably 10 parts by mass or less,

further preferably 8 parts by mass or less, furthermore preferably 6 parts by mass or less, furthermore preferably 5 parts by mass or less.

<Slurry composition>

The slurry composition according to the present invention contains component (A), component (B), a powder, and water.

Alternatively, the slurry composition according to the present invention contains a wormlike micelle formed of component (A) and component (B), a powder, and water. In a case where the wormlike micelle is formed, the dynamic viscoelasticity of an aqueous solution prepared with the composition of component (A), component (B), and water of the slurry composition according to the present invention behaves like the Maxwell model.

When reference is made to the slurry composition according to the present invention, the reference includes the above two slurry compositions.

For the slurry composition according to the present invention, the matters described for the rheology modifier according to the present invention, the admixture for a hydraulic slurry composition according to the present invention, and the method for modifying water rheology according to the present invention can be appropriately applied.

For the powder in the present invention, any inorganic powder can be used as long as it does not affect the advantageous effects of the present invention. The inorganic powder is not limited, and examples thereof are as listed below. Hydraulic slurry compositions are slurry compositions using a hydraulic powder among inorganic powders.

(1) Hydraulic powders such as cement and plaster
(2) Powders having pozzolanic activity such as fly ash, silica fume, volcanic ash, and silicate clay
(3) Latent hydraulic powders such as coal ash, blast-furnace slag, and diatomaceous earth
(4) Silicates such as kaolin, aluminum silicate, clay, talc, mica, calcium silicate, sericite, and bentonite
(5) Carbonates such as calcium carbonate, magnesium carbonate, barium carbonate, and basic lead carbonate
(6) Sulfates such as calcium sulfate and barium sulfate
(7) Chromates such as strontium chromate and pigment yellow
(8) Molybdates such as zinc molybdate, calcium zinc molybdate, and magnesium molybdate
(9) Metal oxides such as alumina, antimony oxide, titanium oxide, cobalt oxide, triiron tetraoxide, diiron trioxide, trilead tetraoxide, lead monoxide, chromium oxide green, tungsten trioxide, and yttrium oxide
(10) Metal hydroxides such as aluminum hydroxide, magnesium hydroxide, calcium hydroxide, iron hydroxide, and metatitanic acid
(11) Metal carbides such as silicon carbide, tungsten carbide, boron carbide, and titanium carbide
(12) Inorganic powders which do not fall within any of (1) to (11) such as aluminum nitride, silicon nitride, boron nitride, zirconia, barium titanate, satin white, carbon black, graphite, chrome yellow, mercury sulfide, ultramarine, Paris blue, titanium yellow, chrome vermilion, lithopone, copper acetoarsenite, nickel, silver, palladium, and lead zirconate titanate

The powder is, in an example, a hydraulic powder or a mixture of a hydraulic powder and bentonite. The powder is, in another example, cement or a mixed powder of cement and bentonite.

For sufficient viscoelasticity for practical use, the total content of component (A) and component (B) in the slurry composition according to the present invention relative to 100 parts by mass of water is preferably 0.5 parts by mass or more, more preferably 1 part by mass or more, further preferably 2 parts by mass or more, furthermore preferably 3 parts by mass or more, and, preferably 30 parts by mass or less, more preferably 10 parts by mass or less, further preferably 8 parts by mass or less, furthermore preferably 6 parts by mass or less, furthermore preferably 5 parts by mass or less. Here, the water is one in the aqueous phase of the slurry composition.

The content of component (A) in the slurry composition according to the present invention relative to 100 parts by mass of water is preferably 0.25 parts by mass or more, more preferably 0.5 parts by mass or more, further preferably 1 part by mass or more, for sufficient viscoelasticity for practical use, and, preferably 5 parts by mass or less, more preferably 4 parts by mass or less, further preferably 3 parts by mass or less, for prevention of foaming in the slurry composition. Here, the water is one in the aqueous phase of the slurry composition.

The content of component (B) in the slurry composition according to the present invention relative to 100 parts by mass of water is, for sufficient viscoelasticity for practical use, preferably 0.25 parts by mass or more, more preferably 0.5 parts by mass or more, further preferably 1 part by mass or more, and, preferably 5 parts by mass or less, more preferably 4 parts by mass or less, further preferably 3 parts by mass or less. Here, the water is one in the aqueous phase of the slurry composition.

It is preferable for the slurry composition according to the present invention that the total content of component (A) and component (B) be in the specified range and the content of component (A) and the content of component (B)

be each in the specified range.

The slurry composition according to the present invention can contain component (C).

In a case where the slurry composition according to the present invention contains component (C), the content of component (C) in the slurry composition according to the present invention relative to 100 parts by mass of water is preferably 0.2 parts by mass or more, more preferably 0.4 parts by mass or more, further preferably 0.8 parts by mass or more, from the viewpoint of the workability of the liquid rheology modifier, and, preferably 6 parts by mass or less, more preferably 5 parts by mass or less, further preferably 4 parts by mass or less, for the purpose of imparting excellent viscoelasticity. Here, the water is one in the aqueous phase of the slurry composition.

The slurry composition according to the present invention can contain component (D).

In a case where the slurry composition according to the present invention contains component (D), the content of component (D) in the slurry composition according to the present invention relative to 100 parts by mass of water is, for sufficient viscoelasticity for practical use, preferably 0.15 parts by mass or more, more preferably 0.25 parts by mass or more, further preferably 0.5 parts by mass or more, and, preferably 5 parts by mass or less, more preferably 4 parts by mass or less, further preferably 3 parts by mass or less. Here, the water is one in the aqueous phase of the slurry composition.

In a case where the slurry composition according to the present invention contains component (C) and component (D), the content of component (D) in the slurry composition according to the present invention relative to 100 parts by mass of water is preferably 0.25 parts by mass or more, more preferably 0.35 parts by mass or more, further preferably 0.45 parts by mass or more, for development of a rheology effect when the slurry composition contains a bentonite or clay mineral, and, preferably 2 parts by mass or less, more preferably 1.5 parts by mass or less, further preferably 1 part by mass or less, for prevention of thickening of the slurry composition. Here, the water is one in the aqueous phase of the slurry composition.

In a case where the slurry composition according to the present invention contains component (D), the content of component (D) in the slurry composition according to the present invention relative to 100 parts by mass of water is preferably 0.15 parts by mass or more, more preferably 0.25 parts by mass or more, further preferably 0.35 parts by mass or more, furthermore preferably 0.45 parts by mass or more, further preferably 0.5 parts by mass or more, for development of a rheology effect when the slurry composition contains a bentonite or clay mineral, and for sufficient viscoelasticity for practical use, and, preferably 5 parts by mass or less, more preferably 4 parts by mass or less, further preferably 3 parts by mass or less, furthermore preferably 2 parts by mass or less, furthermore preferably 1.5 parts by mass or less, furthermore preferably 1 part by mass or less, for prevention of thickening of the slurry composition. Here, the water is one in the aqueous phase of the slurry composition.

The water/powder ratio (W/P) of the slurry composition according to the present invention is preferably 12% by mass or more, more preferably 30% by mass or more, further preferably 50% by mass or more, furthermore preferably 100% by mass or more, furthermore preferably 150% by mass or more, for obtaining fluidity of the slurry composition, and, preferably 1000% by mass or less, more preferably 500% by mass or less, further preferably 300% by mass or less, for prevention of contraction of the slurry composition due to drying.

Here, the water/powder ratio (W/P) is the percentage by mass (% by mass) of water to the powder in the slurry composition, and calculated as water/powder $\times$ 100.

<Method for producing slurry composition>

The method for producing a slurry composition according to the present invention is a method for producing a slurry composition, the method including mixing the rheology modifier according to the present invention, a powder, and water together.

Alternatively, the method for producing a slurry composition according to the present invention is a method for producing a slurry composition, the method including mixing the rheology modifier according to the present invention, a powder, and water together, to prepare a slurry composition containing a wormlike micelle formed of component (A) and component (B).

When reference is made to the method for producing a slurry composition according to the present invention, the reference includes the above two methods for producing a slurry composition.

For the method for producing a slurry composition according to the present invention, the matters described for the rheology modifier according to the present invention, the admixture for a hydraulic slurry composition according to the present invention, the method for modifying water rheology according to the present invention, and the slurry composition according to the present invention can be appropriately applied.

In the method for producing a slurry composition according to the present invention, it is preferable that a slurry containing water and a powder be prepared in advance and the rheology modifier according to the present invention be added to the slurry and mixed together to produce a slurry composition.

Component (A) and component (B), as components of the rheology modifier according to the present invention,

may be separately added. In this case, it is preferable that a slurry containing water and a powder be prepared in advance, component (B) be added thereto and mixed together, and component (A) be then added thereto and mixed together to produce a slurry composition. In a case where the rheology modifier according to the present invention contains component (A), component (B), and component (C), it is preferable that a slurry containing water and a powder be prepared in advance and the rheology modifier according to the present invention be added to the slurry at once and mixed together to produce a slurry composition.

The powder is, in an example, a hydraulic powder or a mixture of a hydraulic powder and bentonite. The powder is, in another example, cement or a mixed powder of cement and bentonite.

The slurry composition according to the present invention and the method for producing a slurry composition according to the present invention provide excellent resistance to material separation, and are useful as a hydraulic slurry composition and method for producing a hydraulic slurry composition below.

The slurry composition according to the present invention not only has high viscosity but also has high viscoelasticity in combination, and thus is expected to be excellent in resistance to material separation. The reason is that viscoelasticity is necessary in combination with high viscosity because particles in a slurry slowly sink only with high viscosity.

<Hydraulic slurry composition>

The present invention provides a hydraulic slurry composition containing the rheology modifier according to the present invention, water, and a hydraulic powder. In other words, the hydraulic slurry composition according to the present invention contains component (A), component (B), water, and a hydraulic powder.

Alternatively, the hydraulic slurry composition according to the present invention contains the rheology modifier according to the present invention, water, and a hydraulic powder, and contains a wormlike micelle formed of component (A) and component (B). In a case where the wormlike micelle is formed, the dynamic viscoelasticity of an aqueous solution prepared with the composition of component (A), component (B), and water of the hydraulic slurry composition according to the present invention behaves like the Maxwell model.

When reference is made to the hydraulic slurry composition according to the present invention, the reference includes the above two hydraulic slurry composition.

For the hydraulic slurry composition according to the present invention, the matters described for the rheology modifier according to the present invention, the admixture for a hydraulic slurry composition according to the present invention, the method for modifying water rheology according to the present invention, the slurry composition according to the present invention, and the method for producing a slurry composition according to the present invention can be appropriately applied.

The hydraulic powder used for the hydraulic slurry composition according to the present invention is a powder which cures when being mixed with water, and examples thereof include ordinary Portland cement, high-early-strength Portland cement, ultra-high-early-strength Portland cement, sulfate-resistant Portland cement, low-heat Portland cement, white Portland cement, and eco-cement (e.g., JIS R5214). Among them, cements selected from high-early-strength Portland cement, ordinary Portland cement, sulfate-resistant Portland cement, and white Portland cement are preferred, and cements selected from high-early-strength Portland cement and ordinary Portland cement are more preferred, for the purpose of reducing time needed for the hydraulic slurry composition to attain a required strength.

The hydraulic powder may contain blast-furnace slag, fly ash, silica fume, anhydrous plaster, or the like, and may contain a non-hydraulic limestone fine powder or the like. Blast-furnace cement, fly ash cement, or silica fume cement, each containing a mixture of cement with blast-furnace slag, fly ash, silica fume, or the like, may be used as the hydraulic powder.

The hydraulic powder is, in one example, cement or a mixed powder of cement and bentonite.

The hydraulic slurry composition according to the present invention preferably contains an aggregate. Examples of the aggregate include a fine aggregate and a coarse aggregate, and the fine aggregate is preferably mountain sand, land sand, river sand, or crushed sand, and the coarse aggregate is preferably mountain gravel, land gravel, river gravel, or crushed stone. A lightweight aggregate may be used for some applications. The terms for aggregates are based on "Concrete Souran" ("Overview of Concrete" in English) (June 10, 1998, published by Gijutsu Shoin).

A dispersant as component (E) can be used for the hydraulic slurry composition according to the present invention, from the viewpoint of the fluidity of the hydraulic slurry composition. Component (E) described for the admixture for a hydraulic slurry composition can be used, and the preferred embodiments are also as described above. In other words, the present invention can provide a hydraulic slurry composition containing an admixture for a hydraulic slurry composition, water, and a hydraulic powder.

In a case where the hydraulic slurry composition contains component (E), it is preferable that in adding water to the hydraulic powder, component (E) and the rheology modifier according to the present invention be added together with water. After kneading of water, the powder, and component (E), the rheology modifier according to the present

invention may be added thereto and mixed together.

The hydraulic slurry composition can contain, in addition to components (A) to (E), any additional component as long as it does not affect the advantageous effects of the present invention. Examples of the additional component include AE agents, retarders, foaming agents, thickeners, blowing agents, waterproofing agents, fluidizers, and defoaming agents.

The total content of component (A) and component (B) in the hydraulic slurry composition according to the present invention relative to 100 parts by mass of water is preferably 0.5 parts by mass or more, more preferably 1 part by mass or more, further preferably 2 parts by mass or more, furthermore preferably 3 parts by mass or more, for sufficient viscoelasticity for practical use, and, preferably 30 parts by mass or less, more preferably 10 parts by mass or less, further preferably 8 parts by mass or less, furthermore preferably 6 parts by mass or less, furthermore preferably 5 parts by mass or less, for avoidance of inhibiting hydration reaction of the hydraulic slurry composition.

In a case where the hydraulic slurry composition according to the present invention contains component (E), the total content of component (A) and component (B) relative to 100 parts by mass of water is preferably 0.03 parts by mass or more, more preferably 0.05 parts by mass or more, further preferably 0.07 parts by mass or more, for resistance to material separation and sufficient viscoelasticity for practical use, and, preferably 30 parts by mass or less, more preferably 10 parts by mass or less, further preferably 8 parts by mass or less, furthermore preferably 6 parts by mass or less, furthermore preferably 5 parts by mass or less, furthermore preferably 3 parts by mass or less, for resistance to material separation and avoidance of inhibiting hydration reaction of the hydraulic slurry composition.

The content of component (A) in the hydraulic slurry composition according to the present invention is preferably 0.25 parts by mass or more, more preferably 0.5 parts by mass or more, further preferably 1 part by mass or more, for sufficient viscoelasticity for practical use, and, preferably 5 parts by mass or less, more preferably 4 parts by mass or less, further preferably 3 parts by mass or less, for prevention of foaming in the hydraulic slurry composition.

In a case where the hydraulic slurry composition according to the present invention contains component (E), the content of component (A) relative to 100 parts by mass of water is preferably 0.01 part by mass or more, more preferably 0.02 parts by mass or more, for sufficient viscoelasticity for practical use, and, preferably 5 parts by mass or less, more preferably 4 parts by mass or less, further preferably 3 parts by mass or less, furthermore preferably 2 parts by mass or less, for prevention of foaming in the hydraulic slurry composition.

The content of component (B) in the hydraulic slurry composition according to the present invention relative to 100 parts by mass of water is preferably 0.25 parts by mass or more, more preferably 0.5 parts by mass or more, further preferably 1 part by mass or more, for sufficient viscoelasticity for practical use, and, preferably 5 parts by mass or less, more preferably 4 parts by mass or less, further preferably 3 parts by mass or less, for avoidance of inhibiting hydration reaction of the hydraulic slurry composition.

In a case where the hydraulic slurry composition according to the present invention contains component (E), the content of component (B) relative to 100 parts by mass of water is preferably 0.02 parts by mass or more, more preferably 0.04 parts by mass or more, further preferably 0.05 parts by mass or more, furthermore preferably 0.07 parts by mass or more, for sufficient viscoelasticity for practical use, and, preferably 5 parts by mass or less, more preferably 4 parts by mass or less, further preferably 3 parts by mass or less, furthermore preferably 2 parts by mass or less, for avoidance of inhibiting hydration reaction of the hydraulic slurry composition.

It is preferable for the hydraulic slurry composition according to the present invention that the total content of component (A) and component (B) be in the specified range and the content of component (A) and the content of component (B) be each in the specified range.

Here, the water is one in the aqueous phase of the hydraulic slurry composition.

The mass ratio of component (A) to component (B), (A)/(B), in the hydraulic slurry composition according to the present invention is preferably 5/95 or more and 95/5 or less for achievement of high viscoelasticity. Further, it is suitable for achievement of high viscoelasticity to control the mass ratio of component (A) to component (B), (A)/(B), through combination of component (A) and component (B) as follows.

In a case where the number of carbon atoms of the hydrocarbon group of component (A) is 12 or more and 16 or less and the number of carbon atoms of the fatty acid moiety of component (B) is 10 or more and 16 or less, the mass ratio of component (A) to component (B), (A)/(B), is preferably 25/75 or less, and more preferably 15/85 or less, for achievement of high viscoelasticity.

In a case where the number of carbon atoms of the hydrocarbon group of component (A) is 17 or more and 22 or less and the number of carbon atoms of the fatty acid moiety of component (B) is 10 or more and 16 or less, the mass ratio of component (A) to component (B), (A)/(B), is, for achievement of high viscoelasticity, preferably 15/85 or more, and, preferably 55/45 or less, more preferably 45/55 or less.

In a case where the number of carbon atoms of the hydrocarbon group of component (A) is 17 or more and 22 or less and the number of carbon atoms of the fatty acid moiety of component (B) is 17 or more and 22 or less, the mass ratio of component (A) to component (B), (A)/(B), is, for achievement of high viscoelasticity, preferably 45/55 or more, and, preferably 65/45 or less.

In a case where the number of carbon atoms of the hydrocarbon group of component (A) is 12 or more and 16 or less and the number of carbon atoms of the fatty acid moiety of component (B) is 17 or more and 22 or less, the mass ratio of component (A) to component (B), (A)/(B), is, for achievement of high viscoelasticity, preferably 45/55 or more, more preferably 55/45 or more, further preferably 65/45 or more, and, preferably 85/15 or less, more preferably 75/25 or less.

In a case where the number of carbon atoms of the hydrocarbon group of component (A) is 12 or more and 16 or less and the number of carbon atoms of the fatty acid moiety of component (B) is 17 or more and 22 or less in the hydraulic slurry composition according to the present invention, it is suitable for achievement of high viscoelasticity to control the mass ratio of component (A) to component (B), (A)/(B), through conditions for the average number of moles of added alkylene oxide in component (A) as follows.

In a case where the average number of moles of added alkylene oxide in component (A) is 0 or more and 5 or less, the mass ratio of component (A) to component (B), (A)/(B), is preferably 65/35 or more, and, preferably 75/25 or less.

In a case where the average number of moles of added alkylene oxide in component (A) is 6 or more and 10 or less, the mass ratio of component (A) to component (B), (A)/(B), is preferably 55/45 or more, and, preferably 65/35 or less.

In a case where the average number of moles of added alkylene oxide in component (A) is 11 or more and 15 or less, the mass ratio of component (A) to component (B), (A)/(B), is preferably 45/55 or more, and, preferably 55/45 or less.

In a case where the number of carbon atoms of the hydrocarbon group of component (A) is 17 or more and 22 or less and the number of carbon atoms of the fatty acid moiety of component (B) is 17 or more and 22 or less in the hydraulic slurry composition according to the present invention, it is suitable for achievement of high viscoelasticity to control the mass ratio of component (A) to component (B), (A)/(B), through conditions for the average number of moles of added alkylene oxide in component (A) as follows.

In a case where the average number of moles of added alkylene oxide in component (A) is 0 or more and 3 or less, the mass ratio of component (A) to component (B), (A)/(B), is preferably 90/10 or more, and, preferably 97/3 or less.

In a case where the average number of moles of added alkylene oxide in component (A) is 4 or more and 7 or less, the mass ratio of component (A) to component (B), (A)/(B), is preferably 55/45 or more, and, preferably 65/35 or less.

In a case where the average number of moles of added alkylene oxide in component (A) is 8 or more and 16 or less, the mass ratio of component (A) to component (B), (A)/(B), is preferably 45/55 or more, and, preferably 55/45 or less.

In a case where the hydraulic slurry composition according to the present invention contains component (E) and the number of carbon atoms of the hydrocarbon group of component (A) is 12 or more and 16 or less, the mass ratio of component (A) to component (B), (A)/(B), is, for achievement of high viscoelasticity, preferably 5/95 or more, more preferably 15/85 or more, further preferably 25/75 or more, and, preferably 80/20 or less, more preferably 70/30 or less.

In a case where the hydraulic slurry composition according to the present invention contains component (E) and the number of carbon atoms of the hydrocarbon group of component (A) is 17 or more and 22 or less, the mass ratio of component (A) to component (B), (A)/(B), is, for achievement of high viscoelasticity, preferably 5/95 or more, more preferably 15/85 or more, further preferably 25/75 or more, and, preferably 80/20 or less, more preferably 70/30 or less.

In a case where the number of carbon atoms of the hydrocarbon group of component (A) is 12 or more and 16 or less and the number of carbon atoms of the fatty acid moiety of component (B) is 17 or more and 22 or less in the hydraulic slurry composition according to the present invention, the average number of moles of added alkylene oxide in component (A) is, for achievement of high viscoelasticity, preferably 0 or more, and, preferably 2 or less.

In a case where the number of carbon atoms of the hydrocarbon group of component (A) is 17 or more and 22 or less and the number of carbon atoms of the fatty acid moiety of component (B) is 17 or more and 22 or less in the hydraulic slurry composition according to the present invention, the average number of moles of added alkylene oxide in component (A) is, for achievement of high viscoelasticity, preferably 4 or more, and, preferably 16 or less, more preferably 14 or less, further preferably 12 or less.

In a case where the hydraulic slurry composition according to the present invention contains component (E) and the number of carbon atoms of the hydrocarbon group of component (A) is 12 or more and 16 or less, the average number of moles of added alkylene oxide is, from the viewpoints of fluidity and viscosity, preferably 1 or more, more preferably 2 or more, further preferably 4 or more, furthermore preferably 5 or more, furthermore preferably 7 or more, and, preferably 20 or less, more preferably 15 or less, further preferably 12 or less.

In a case where the hydraulic slurry composition according to the present invention contains component (E) and the number of carbon atoms of the hydrocarbon group of component (A) is 17 or more and 22 or less, the average number of moles of added alkylene oxide is, from the viewpoints of fluidity and viscosity, preferably 1 or more, more preferably 2 or more, further preferably 4 or more, furthermore preferably 5 or more, furthermore preferably 7 or more,

furthermore preferably 10 or more, furthermore preferably 15 or more, furthermore preferably 20 or more.

The hydraulic slurry composition according to the present invention can contain component (C). In a case where the hydraulic slurry composition according to the present invention contains component (C), the content of component (C) in the hydraulic slurry composition according to the present invention relative to 100 parts by mass of water is preferably 0.2 parts by mass or more, more preferably 0.4 parts by mass or more, further preferably 0.8 parts by mass or more, from the viewpoint of the workability of the rheology modifier, and, preferably 6 parts by mass or less, more preferably 5 parts by mass or less, further preferably 4 parts by mass or less, for the purpose of imparting excellent viscoelasticity. Here, the water is one in the aqueous phase of the hydraulic slurry composition.

The hydraulic slurry composition according to the present invention can contain component (D). In a case where the powder for the hydraulic slurry composition according to the present invention contains a hydraulic powder and bentonite and further contains cement and bentonite, it is preferred for the hydraulic slurry composition according to the present invention to contain component (D).

In a case where the hydraulic slurry composition according to the present invention contains component (D), the content of component (D) in the hydraulic slurry composition according to the present invention relative to 100 parts by mass of water is, for sufficient viscoelasticity for practical use, preferably 0.15 parts by mass or more, more preferably 0.25 parts by mass or more, further preferably 0.5 parts by mass or more, and, preferably 5 parts by mass or less, more preferably 4 parts by mass or less, further preferably 3 parts by mass or less.

In a case where the hydraulic slurry composition according to the present invention contains component (D), the content of component (D) in the hydraulic slurry composition according to the present invention relative to 100 parts by mass of water is preferably 0.25 parts by mass or more, more preferably 0.35 parts by mass or more, further preferably 0.45 parts by mass or more, for development of a rheology effect when the hydraulic slurry composition contains a bentonite or clay mineral, and, preferably 2 parts by mass or less, more preferably 1.5 parts by mass or less, further preferably 1 part by mass or less, for prevention of thickening of the hydraulic slurry composition.

In a case where the hydraulic slurry composition according to the present invention contains component (D), the content of component (D) in the hydraulic slurry composition according to the present invention relative to 100 parts by mass of water is preferably 0.15 parts by mass or more, more preferably 0.25 parts by mass or more, further preferably 0.35 parts by mass or more, furthermore preferably 0.45 parts by mass or more, furthermore preferably 0.5 parts by mass or more, for development of a rheology effect when the hydraulic slurry composition contains a bentonite or clay mineral and achievement of sufficient viscoelasticity for practical use, and, preferably 5 parts by mass or less, more preferably 4 parts by mass or less, further preferably 3 parts by mass or less, furthermore preferably 2 parts by mass or less, furthermore preferably 1.5 parts by mass or less, furthermore preferably 1 part by mass or less, for prevention of thickening of the hydraulic slurry composition.

Here, the water is one in the aqueous phase of the hydraulic slurry composition.

In a case where the hydraulic slurry composition according to the present invention contains component (E), the content of component (E) relative to 100 parts by mass of the hydraulic powder is preferably 0.06 parts by mass or more, more preferably 0.09 parts by mass or more, further preferably 0.12 parts by mass or more, for achievement of sufficient fluidity for practical use, and, preferably 1.0 part by mass or less, more preferably 0.8 parts by mass or less, further preferably 0.6 parts by mass or less, for avoidance of inhibiting hydration reaction of the hydraulic slurry composition.

In a case where the hydraulic slurry composition according to the present invention contains component (E), the mass ratio of the total of the content of component (A) and the content of component (B) to the content of component (E), [(A)+(B)]/(E), is preferably 3/97 or more, more preferably 5/95 or more, further preferably 10/90 or more, and, preferably 97/3 or less, more preferably 95/5 or less, 90/10 or less, from the viewpoints of achievement of good viscoelasticity for the hydraulic slurry and the long-term storage stability of the admixture for a hydraulic slurry composition.

The water/hydraulic powder ratio (W/P) in the hydraulic slurry composition according to the present invention is preferably 12% by mass or more, more preferably 30% by mass or more, further preferably 40% by mass or more, furthermore preferably 50% by mass or more, for the purpose of ensuring the fluidity of the hydraulic slurry composition, and, preferably 500% by mass or less, more preferably 400% by mass or less, further preferably 300% by mass or less, for the purpose of ensuring the hydraulic properties of the hydraulic slurry composition.

In a case where the hydraulic slurry composition according to the present invention contains component (E), the water/hydraulic powder ratio (W/P) is preferably 20% by mass or more, more preferably 25% by mass or more, further preferably 30% by mass or more, for resistance to material separation and for the purpose of ensuring the fluidity of the hydraulic slurry composition, and, preferably 70% by mass or less, more preferably 60% by mass or less, further preferably 55% by mass or less, from the viewpoint of ensuring the hydraulic properties of the hydraulic slurry composition.

Here, the water/hydraulic powder ratio (W/P) is the percentage by mass (% by mass) of water to the hydraulic powder in the hydraulic slurry composition, and calculated as water/hydraulic powder $\times$ 100. The water/hydraulic powder ratio is calculated based on the amount of a powder having physical properties allowing hardening through hydration reaction. W/P is expressed as W/C in a case where the hydraulic powder is cement.

In a case where the hydraulic powder contains a powder selected from powders having pozzolanic activity, latent hydraulic powders, and powdered limestone (calcium carbonate powders) in addition to a powder having physical properties allowing hardening through hydration reaction such as cement, the amounts of them are included in the amount of the hydraulic powder for calculation in the present invention. In a case where the powder having physical properties allowing hardening through hydration reaction contains a high-strength admixture, the amount of the high-strength admixture is also included in the amount of the hydraulic powder for calculation. The same is applied to any part by mass related to the mass of the hydraulic powder.

<Method for producing hydraulic slurry composition, method for pressure-pumping the same>

The method for producing a hydraulic slurry composition according to the present invention is a method for producing a hydraulic slurry composition, the method including mixing the rheology modifier according to the present invention, a hydraulic powder, and water together.

Alternatively, the method for producing a hydraulic slurry composition according to the present invention is a method for producing a hydraulic slurry composition, the method including mixing the rheology modifier according to the present invention, a hydraulic powder, and water together to prepare a hydraulic slurry composition containing a wormlike micelle formed of component (A) and component (B).

When reference is made to the method for producing a hydraulic slurry composition according to the present invention, the reference includes the above two methods for producing a hydraulic slurry composition.

For the method for producing a hydraulic slurry composition according to the present invention, the matters described for the rheology modifier according to the present invention, the admixture for a hydraulic slurry composition according to the present invention, the method for modifying water rheology according to the present invention, the slurry composition according to the present invention, the method for producing a slurry composition according to the present invention, and the hydraulic slurry composition according to the present invention can be appropriately applied.

In the method for producing a hydraulic slurry composition according to the present invention, it is preferable that a slurry containing water and a hydraulic powder be prepared in advance and the rheology modifier according to the present invention be added to the slurry and mixed together to produce a hydraulic slurry composition.

In other words, one example of the method for producing a hydraulic slurry composition according to the present invention is a method for producing a hydraulic slurry composition, the method including preparing a slurry containing water and a hydraulic powder, and adding the rheology modifier according to the present invention to the slurry and mixing together.

In a case where component (E) is added in the method for producing a hydraulic slurry composition according to the present invention, it is preferable from the viewpoint of resistance to material separation that the rheology modifier according to the present invention containing component (D) and water be added to a hydraulic powder and mixed together to produce a hydraulic slurry composition.

All of the existing apparatuses can be used in mixing of the components in the method for producing a hydraulic slurry composition according to the present invention, and examples thereof include inclined mixers, pan mixers, biaxial forced mixers, Omni mixers, Henschel mixers, V mixers, and Nauta mixers.

One example of the method for placing a hydraulic slurry composition according to the present invention is a method including a step of pressure-pumping a hydraulic slurry composition with a pump, and a step of placing the hydraulic slurry composition pressure-pumped with the pump.

In the present invention, the hydraulic slurry composition according to the present invention is transported to a site for placement, and thereafter cast into a formwork for placement. Examples of the transporting method include, but are not limited to, common transporting methods such as a method of pressure-pumping with a pump, a method of transporting on a mixer truck, and a method of pouring from a mixing apparatus to a hopper for transfer. When placement is performed at a site which does not allow transport with a mixer truck or a hopper, the transporting method of pressure-pumping with a pump is particularly suitable because of the advantage that even a pump of low performance can perform pressure-pumping by virtue of the feature that reduction of viscoelasticity can be achieved through application of shear force.

To pressure-pump the hydraulic slurry composition according to the present invention with a pump, the hydraulic slurry composition finished through kneading with the physical properties adjusted as desired is pressure-pumped with a pump to appropriately arranged piping. Alternatively, the hydraulic slurry composition after being transported on a mixer truck or the like can be pressure-pumped, for example, with a pump of a pumper truck.

Examples of the pump include, but are not limited to, common squeeze pumps and piston pumps.

<Kit>

The kit according to the present invention is a kit including a first agent containing component (A) and a second

agent containing component (B).

Specifically, the kit according to the present invention is a kit including an aqueous solution containing component (A) and an aqueous solution containing component (B), wherein the aqueous solutions are separated from each other.

Alternatively, the kit according to the present invention is a kit including a first agent containing component (A) and a second agent containing component (B), wherein the first agent containing component (A) and the second agent containing component (B) are mixed together to form a wormlike micelle. When mixing is performed to form a wormlike micelle, the dynamic viscoelasticity of the composition mixed behaves like the Maxwell model.

When reference is made to the kit according to the present invention, the reference includes the above three kits.

For the kit according to the present invention, the matters described for the rheology modifier according to the present invention, the admixture for a hydraulic slurry composition according to the present invention, the method for modifying water rheology according to the present invention, the slurry composition according to the present invention, the method for producing a slurry composition according to the present invention, the hydraulic slurry composition according to the present invention, and the method for producing a hydraulic slurry composition according to the present invention can be appropriately applied.

The components in the kit according to the present invention are contained in a container in which they can be separately stored, and they are mixed together for use. Particularly preferred is a kit configured with a container packed with the first agent containing component (A) and the second agent containing component (B), wherein the first agent and the second agent stored are separated from each other.

From the viewpoint of the handleability of the aqueous solutions constituting the kit according to the present invention, it is preferable that at least one of the first agent containing component (A) and the second agent containing component (B) contain component (D).

For fluidity adjustment for the hydraulic slurry composition, it is preferable for the kit according to the present invention that at least one of the first agent containing component (A) and the second agent containing component (B) contain component (E). Alternatively, it is preferred to provide the kit with a third agent containing component (E) separately from the first agent containing component (A) and the second agent containing component (B) to form a kit including the first agent containing component (A), the second agent containing component (B), and the third agent containing component (E).

In the kit according to the present invention, the first agent containing component (A) and the second agent containing component (B) are mixed together, for achievement of high viscoelasticity, such that the mass ratio of component (A) to component (B), (A)/(B), is preferably 3/97 or more and 95/5 or less. Further, it is suitable for achievement of high viscoelasticity to control the mass ratio of component (A) to component (B), (A)/(B), through combination of component (A) and component (B) as follows.

In a case where the number of carbon atoms of the hydrocarbon group of component (A) is 12 or more and 16 or less and the number of carbon atoms of the fatty acid moiety of component (B) is 10 or more and 16 or less, the first agent containing component (A) and the second agent containing component (B) are mixed together, for achievement of high viscoelasticity, such that the mass ratio of component (A) to component (B), (A)/(B), is preferably 5/95 or more, and, preferably 25/75 or less, more preferably 15/85 or less, further preferably 7/93 or less.

In a case where the number of carbon atoms of the hydrocarbon group of component (A) is 17 or more and 22 or less and the number of carbon atoms of the fatty acid moiety of component (B) is 10 or more and 16 or less, the first agent containing component (A) and the second agent containing component (B) are mixed together, for achievement of high viscoelasticity, such that the mass ratio of component (A) to component (B), (A)/(B), is preferably 5/95 or more, more preferably 15/85 or more, and, preferably 45/55 or less, more preferably 35/65 or less.

In a case where the number of carbon atoms of the hydrocarbon group of component (A) is 17 or more and 22 or less and the number of carbon atoms of the fatty acid moiety of component (B) is 17 or more and 22 or less, the first agent containing component (A) and the second agent containing component (B) are mixed together, for achievement of high viscoelasticity, such that the mass ratio of component (A) to component (B), (A)/(B), is preferably 5/95 or more, more preferably 15/85 or more, further preferably 40/60 or more, and, preferably 55/45 or less.

In a case where the number of carbon atoms of the hydrocarbon group of component (A) is 12 or more and 16 or less and the number of carbon atoms of the fatty acid moiety of component (B) is 17 or more and 22 or less, the first agent containing component (A) and the second agent containing component (B) are mixed together, for achievement of high viscoelasticity, such that the mass ratio of component (A) to component (B), (A)/(B), is preferably 5/95 or more, more preferably 15/85 or more, further preferably 25/75 or more, and, preferably 55/45 or less, more preferably 35/65 or less.

In a case where at least one of the first agent containing component (A) and the second agent containing component (B) contains component (E) and the number of carbon atoms of the hydrocarbon group of component (A) is 12 or more and 16 or less in the kit according to the present invention, the first agent containing component (A) and the second agent containing component (B) are mixed together, for achievement of high viscoelasticity, such that the mass ratio of component (A) to component (B), (A)/(B), is preferably 5/95 or more, more preferably 15/85 or more, further

preferably 25/75 or more, and preferably 80/20 or less, more preferably 70/30 or less.

In a case where at least one of the first agent containing component (A) and the second agent containing component (B) contains component (E) and the number of carbon atoms of the hydrocarbon group of component (A) is 17 or more and 22 or less, the first agent containing component (A) and the second agent containing component (B) are mixed together, for achievement of high viscoelasticity, such that the mass ratio of component (A) to component (B), (A)/(B), is preferably 5/95 or more, more preferably 15/85 or more, further preferably 25/75 or more, and, preferably 80/20 or less, more preferably 70/30 or less.

The first agent containing component (A) and the second agent containing component (B) in the kit according to the present invention are mixed with water for use, for achievement of high viscoelasticity, such that the total content of component (A) and component (B) relative to 100 parts by mass of water is preferably 0.5 parts by mass or more, more preferably 1 part by mass or more, further preferably 2 parts by mass or more, and, preferably 99 parts by mass or less, more preferably 50 parts by mass or less, further preferably 40 parts by mass or less, furthermore preferably 30 parts by mass or less.

On the other hand, the first agent containing component (A) and the second agent containing component (B) in the kit according to the present invention are mixed with water for use, for achievement of viscoelasticity allowing good handleability, such that the total content of component (A) and component (B) relative to 100 parts by mass of water is preferably 25 parts by mass or less, more preferably 15 parts by mass or less, further preferably 10 parts by mass or less.

In a case where at least one of the first agent containing component (A) and the second agent containing component (B) contains component (D) in the kit according to the present invention, the first agent containing component (A) and the second agent containing component (B) are mixed together, for the purpose of imparting high viscoelasticity to a slurry containing bentonite (clay mineral), such that the total content of component (D) relative to 100 parts by mass of water is preferably 5 parts by mass or more, more preferably 7.5 parts by mass or more, further preferably 10 parts by mass or more, and, preferably 70 parts by mass or less, more preferably 60 parts by mass or less, further preferably 50 parts by mass or less.

In a case where at least one of the first agent containing component (A) and the second agent containing component (B) contains component (E) in the kit according to the present invention, the first agent containing component (A) and the second agent containing component (B) are mixed together, for achievement of sufficient fluidity for practical use for the hydraulic slurry composition and good long-term storage stability for the admixture for a hydraulic slurry composition, such that the total content of component (E) relative to 100 parts by mass of water is preferably 5 parts by mass or more, more preferably 8 parts by mass or more, further preferably 10 parts by mass or more, and, preferably 200 parts by mass or less, more preferably 100 parts by mass or less, further preferably 80 parts by mass or less.

In a case where at least one of the first agent containing component (A) and the second agent containing component (B) contains component (E) in the kit according to the present invention, the first agent containing component (A) and the second agent containing component (B) are mixed together, for achievement of good viscoelasticity for the hydraulic slurry composition and long-term storage stability for the admixture for a hydraulic slurry composition, in such a manner that the mass ratio of the total of the content of component (A) and the content of component (B) to the content of component (E), [(A)+(B)]/(E), is preferably 3/97 or more, more preferably 5/95 or more, further preferably 10/90 or more, and, preferably 97/3 or less, more preferably 95/5 or less, 90/10 or less.

Use of a mixture obtained from the kit according to the present invention as a rheology modifier or admixture for a hydraulic slurry composition provides the slurry composition or hydraulic slurry composition according to the present invention. That is, the kit according to the present invention is suitable for production of a rheology modifier, production of a slurry composition, or production of a hydraulic slurry composition. The kit according to the present invention is also suitable for production of a frictional drag reducer for piping or production of a thickening and gelling agent.

<Other aspects>

The present invention provides, as another aspect of the present invention, a rheology modifier containing an association between an anionic surfactant and a nonionic surfactant.

In addition, the present invention provides a rheology modifier containing an anionic surfactant and a nonionic surfactant, wherein

the viscosity of an aqueous solution containing 5% by mass of the anionic surfactant and 5% by mass of the nonionic surfactant at 20°C is two times or more higher than any of the viscosity of a liquid of the anionic surfactant as a single substance at 20°C, the viscosity of a mixture containing 10% by mass or more of the anionic surfactant and water at 20°C, the viscosity of a liquid of the nonionic surfactant as a single substance at 20°C, and the viscosity of a mixture containing 10% by mass or more of the nonionic surfactant and water at 20°C.

In addition, the present invention provides a method for modifying water rheology, the method including mixing any of the above two rheology modifiers with water.

In addition, the present invention provides use of a mixture as a rheology modifier, the mixture containing an anionic surfactant and a nonionic surfactant and water.

In addition, the present invention provides use of a mixture as a rheology modifier, the mixture containing an anionic surfactant and a nonionic surfactant and water, wherein the viscosity of an aqueous solution containing 5% by mass of the anionic surfactant and 5% by mass of the nonionic surfactant at 20°C is two times or more higher than any of the viscosity of a liquid of the anionic surfactant as a single substance at 20°C, the viscosity of a mixture containing 10% by mass or more of the anionic surfactant and water at 20°C, the viscosity of a liquid of the nonionic surfactant as a single substance at 20°C, and the viscosity of a mixture containing 10% by mass or more of the nonionic surfactant and water at 20°C.

For the rheology modifiers, the method for modifying water rheology, and the uses as a rheology modifier, the matters described for the rheology modifier according to the present invention, the admixture for a hydraulic slurry composition according to the present invention, the method for modifying water rheology according to the present invention, the slurry composition according to the present invention, the method for producing a slurry composition according to the present invention, the hydraulic slurry composition according to the present invention, the method for producing a hydraulic slurry composition according to the present invention, and the kit according to the present invention can be appropriately applied.

Component (A) is suitable for the anionic surfactant for achievement of high viscoelasticity.

Component (B) is suitable for the nonionic surfactant for achievement of high viscoelasticity.

The association between an anionic surfactant and a nonionic surfactant is preferably a wormlike micelle, and more preferably a wormlike micelle formed of component (A) and component (B), for achievement of high viscoelasticity. The wormlike micelle formed can be confirmed through electron microscope photography, and determination of the viscoelasticity and the presence or absence of stringiness as described in Examples.

In the rheology modifier containing an association between an anionic surfactant and a nonionic surfactant, the viscosity of an aqueous solution containing 5% by mass of the anionic surfactant and 5% by mass of the nonionic surfactant at 20°C is two times or more, preferably 3 to 30 times higher than any of the viscosity of a liquid of the anionic surfactant as a single substance at 20°C, the viscosity of a mixture containing 10% by mass or more of the anionic surfactant and water at 20°C, the viscosity of a liquid of the nonionic surfactant as a single substance at 20°C, and the viscosity of a mixture containing 10% by mass or more of the nonionic surfactant and water at 20°C.

Viscosity at 20°C is a value measured by using a B-type viscometer (manufactured by Toki Sangyo Co., Ltd., VISCOMETER TVB-10, Rotor M2) 3 minutes after stirring of 50 g of a rheology modifier to be measured in a screw tube (manufactured by Maruemu Corporation, No. 7, 35 mm × 78 mm) at a rotational frequency of 6 rpm.

The present invention provides, as another aspect, a component for a rheology modifier, wherein the component consists of component (A) and the rheology modifier contains component (B).

In addition, the present invention provides a component for a rheology modifier, wherein the component consists of component (A) and is for use in combination with component (B) for producing a rheology modifier.

In addition, the present invention provides a component for a rheology modifier, wherein the component consists of component (B) and the rheology modifier contains component (A).

In addition, the present invention provides a component for a rheology modifier, wherein the component consists of component (B) and is for use in combination with component (A) for producing a rheology modifier.

For the components for a rheology modifier according to the present invention, the matters described for the rheology modifier according to the present invention, the admixture for a hydraulic slurry composition according to the present invention, the method for modifying water rheology according to the present invention, the slurry composition according to the present invention, the method for producing a slurry composition according to the present invention, the hydraulic slurry composition according to the present invention, the method for producing a hydraulic slurry composition according to the present invention, and the kit according to the present invention can be appropriately applied.

Regarding the above-described embodiments, the present invention further discloses rheology modifiers, slurry compositions, methods for modifying water rheology, methods for producing slurry composition, kits, uses as a rheology modifier, admixtures for a hydraulic slurry composition, and components for a rheology modifier below. For these aspects, the matters described for the rheology modifier according to the present invention, the slurry composition according to the present invention, the method for modifying water rheology according to the present invention, the method for producing a slurry composition according to the present invention, the kit according to the present invention, the use as a rheology modifier according to the present invention, the admixture for a hydraulic slurry composition according to the present invention, and the component for a rheology modifier according to the present invention can be appropriately applied in an interchangeable manner.

<1>
A rheology modifier containing: (A) a sulfate or a salt thereof having a hydrocarbon group with 12 or more and 22 or less carbon atoms and an average number of moles of added alkylene oxide of 0 or more and 25 or less (hereinafter,

referred to as component (A)); and (B) a fatty acid alkanolamide having a fatty acid moiety with 10 or more and 22 or less carbon atoms (hereinafter, referred to as component (B)).

<2>

The rheology modifier according to <1>, wherein component (A) is one or more selected from alkyl sulfate, alkenyl sulfate, polyoxyalkylene alkyl ether sulfate, polyoxyalkylene alkenyl ether sulfate, alkylphenyl sulfate, alkenylphenyl sulfate, polyoxyalkylene alkylphenyl ether sulfate, and polyoxyalkylene alkenylphenyl ether sulfate, preferably one or more selected from alkenyl sulfate, polyoxyalkylene alkyl ether sulfate, and polyoxyalkylene alkenyl ether sulfate, and more preferably one or more selected from polyoxyalkylene alkyl ether sulfate and polyoxyalkylene alkenyl ether sulfate.

<3>

The rheology modifier according to <1> or <2>, wherein component (A) is a compound represented by general formula (a1):

$$R^{1a}\text{-O-}(R^{2a}O)_nSO_3M^1 \qquad (a1)$$

wherein $R^{1a}$ is a hydrocarbon group having 12 or more and 22 or less carbon atoms; $R^{2a}$ is an alkylene group having two or more and four or less carbon atoms, and preferably an ethylene group; n is an average number of added moles and is 0 or more and 25 or less; and $M^1$ is a hydrogen atom or a cation, and preferably an inorganic or organic cation.

<4>

The rheology modifier according to <3>, wherein, in general formula (a1), $R^{1a}$ is one or more selected from a lauryl group, a myristyl group, a palmityl group, an oleyl group, a linoleic group, a stearyl group, and a docosyl group, preferably one or more selected from a myristyl group, a palmityl group, a linoleic group, an oleyl group, and a stearyl group, more preferably one or more selected from a linoleic group, a palmityl group, an oleyl group, and a stearyl group, and further preferably one or more selected from a linoleic group, an oleyl group, and a stearyl group.

<5>

The rheology modifier according to <3>, wherein the number of carbon atoms of $R^{1a}$ is 12 or more and 16 or less and n is 0.

<6>

The rheology modifier according to <3>, wherein, in general formula (a1), the number of carbon atoms of $R^{1a}$ is 12 or more and 16 or less, and n is preferably 1 or more, more preferably 2 or more, and, preferably 20 or less, more preferably 16 or less, further preferably 14 or less, furthermore preferably 12 or less, furthermore preferably 10 or less, furthermore preferably 8 or less, furthermore preferably 6 or less.

<7>

The rheology modifier according to <3>, wherein, in general formula (a1), the number of carbon atoms of $R^{1a}$ is 17 or more and 22 or less, and n is preferably 2 or more, more preferably 4 or more, further preferably 5 or more, and, preferably 20 or less, more preferably 18 or less, further preferably 16 or less, furthermore preferably 14 or less, furthermore preferably 12 or less.

<8>

The rheology modifier according to any one of <1> to <7>, wherein the hydrocarbon group of the fatty acid moiety of component (B) is a hydrocarbon group derived from the raw material fatty acid of the fatty acid alkanolamide with the carbon atom of the carboxy group included therein, and preferably a linear or branched alkyl group or a linear or branched alkenyl group, more preferably a linear or branched alkenyl group, and further preferably a linear alkenyl group.

<9>

The rheology modifier according to any one of <1> to <8>, wherein the number of carbon atoms of the fatty acid moiety of component (B) is the number of carbon atoms of the raw material fatty acid of the fatty acid alkanolamide with the carbon atom of the carboxy group included therein, and is 10 or more, preferably 12 or more, more preferably 14 or more, further preferably 16 or more, and, 22 or less, preferably 20 or less, further preferably 18 or less, furthermore preferably 18.

<10>

The rheology modifier according to any one of <1> to <9>, wherein component (B) is one or more selected from fatty acid monoethanolamide, fatty acid methylmonoethanolamide, fatty acid ethylmonoethanolamide, fatty acid propylmonoethanolamide, fatty acid methanolethanolamide, and fatty acid diethanolamide, and preferably fatty acid diethanolamide.

<11>

The rheology modifier according to any one of <1> to <10>, wherein component (B) is one or more selected from oleic acid diethanolamide, stearic acid diethanolamide, compounds of palm kernel fatty acid diethanolamides in

which the number of carbon atoms of the fatty acid part is 10 or more and 18 or less, coconut fatty acid diethanolamides, myristic acid diethanolamide, and lauric acid diethanolamide, preferably one or more selected from oleic acid diethanolamide, palm kernel fatty acid diethanolamides in which the number of carbon atoms of the fatty acid part is 10 or more and 18 or less, and coconut fatty acid diethanolamides, more preferably one or more selected from oleic acid diethanolamide and palm kernel fatty acid diethanolamides in which the number of carbon atoms of the fatty acid part is 10 or more and 18 or less, and further preferably oleic acid diethanolamide.

<12>

The rheology modifier according to any one of <1> to <11>, wherein the mass ratio of component (A) to component (B), (A)/(B), is 3/97 or more and 95/5 or less.

<13>

The rheology modifier according to <12>, wherein the number of carbon atoms of the hydrocarbon group of component (A) is 12 or more and 16 or less, the number of carbon atoms of the fatty acid moiety of component (B) is 10 or more and 16 or less, and the mass ratio of component (A) to component (B), (A)/(B), is preferably 5/95 or more, and, preferably 25/75 or less, more preferably 15/85 or less, further preferably 7/93 or less.

<14>

The rheology modifier according to <12>, wherein the number of carbon atoms of the hydrocarbon group of component (A) is 17 or more and 22 or less, the number of carbon atoms of the fatty acid moiety of component (B) is 10 or more and 16 or less, and the mass ratio of component (A) to component (B), (A)/(B), is preferably 5/95 or more, more preferably 15/85 or more, and, preferably 45/55 or less, more preferably 35/65 or less.

<15>

The rheology modifier according to <12>, wherein the number of carbon atoms of the hydrocarbon group of component (A) is 17 or more and 22 or less, the number of carbon atoms of the fatty acid moiety of component (B) is 17 or more and 22 or less, and the mass ratio of component (A) to component (B), (A)/(B), is preferably 5/95 or more, more preferably 15/85 or more, further preferably 40/60 or more, and, preferably 55/45 or less.

<16>

The rheology modifier according to <12>, wherein the number of carbon atoms of the hydrocarbon group of component (A) is 12 or more and 16 or less, the number of carbon atoms of the fatty acid moiety of component (B) is 17 or more and 22 or less, and the mass ratio of component (A) to component (B), (A)/(B), is preferably 5/95 or more, more preferably 15/85 or more, further preferably 25/75 or more, and, preferably 55/45 or less, more preferably 35/65 or less.

<17>

The rheology modifier according to any one of <1> to <16>, further containing water, wherein the total of the content of component (A) and the content of component (B) relative to 100 parts by mass of water is preferably 0.5 parts by mass or more, more preferably 1 part by mass or more, further preferably 2 parts by mass or more, furthermore preferably 3 parts by mass or more, and, preferably 99 parts by mass or less, more preferably 50 parts by mass or less, further preferably 40 parts by mass or less, furthermore preferably 30 parts by mass or less, furthermore preferably 10 parts by mass or less, furthermore preferably 9 parts by mass or less, furthermore preferably 6 parts by mass or less, furthermore preferably 5 parts by mass or less.

<18>

The rheology modifier according to <17>, wherein the content of component (A) relative to 100 parts by mass of water is preferably 0.25 parts by mass or more, more preferably 0.5 parts by mass or more, further preferably 1 part by mass or more, and, preferably 25 parts by mass or less, more preferably 20 parts by mass or less, further preferably 15 parts by mass or less.

<19>

The rheology modifier according to <17> or <18>, wherein the content of component (B) relative to 100 parts by mass of water is preferably 0.25 parts by mass or more, more preferably 0.5 parts by mass or more, further preferably 1 part by mass or more, and, preferably 25 parts by mass or less, more preferably 20 parts by mass or less, further preferably 15 parts by mass or less.

<20>

The rheology modifier according to any one of <1> to <16>, further containing water, wherein the total of the content of component (A) and the content of component (B) relative to 100 parts by mass of water is preferably 25 parts by mass or less, more preferably 15 parts by mass or less, and further preferably 10 parts by mass or less.

<21>

The rheology modifier according to <20>, wherein the content of component (A) relative to 100 parts by mass of water is preferably 12.5 parts by mass or less, more preferably 7.5 parts by mass or less, and further preferably 5.0 parts by mass or less.

<22>

The rheology modifier according to <20> or <21>, wherein the content of component (B) relative to 100 parts by

mass of water is preferably 12.5 parts by mass or less, more preferably 7.5 parts by mass or less, and further preferably 5 parts by mass or less.

<23>

The rheology modifier according to any one of <17> to <22>, wherein the rheology modifier contains a wormlike micelle formed of component (A) and component (B) .

<24>

The rheology modifier according to any one of <1> to <16>, further containing (C) a compound having a hydroxy group with an octanol/water partition coefficient of -1.6 or more and 1.2 or less (hereinafter, referred to as component (C)), wherein the rheology modifier is a liquid.

<25>

The rheology modifier according to <24>, wherein component (C) is a compound having 1 or more and 10 or less carbon atoms.

<26>

The rheology modifier according to <24> or <25>, wherein component (C) is a compound having one or more and three or less hydroxy groups, and preferably one or more compounds selected from compounds having one hydroxy group and compounds having two hydroxy groups.

<27>

The rheology modifier according to any one of <24> to <26>, wherein component (C) is a compound having a molecular weight of 50 or more and 200 or less.

<28>

The rheology modifier according to any one of <24> to <27>, wherein component (C) is preferably an organic compound having a hydroxy group, more preferably an aliphatic compound having a hydroxy group, further preferably an aliphatic compound having one or two hydroxy groups in which the carbon-carbon bonds are each a saturated bond, and furthermore preferably an aliphatic compound having five or less carbon atoms and two hydroxy groups in which the carbon-carbon bonds are each a saturated bond.

<29>

The rheology modifier according to any one of <24> to <28>, wherein component (C) is a compound having a solubility parameter (Fedors method) of 9 or more, further 10 or more, and, 20 or less, further 18 or less.

<30>

The rheology modifier according to any one of <24> to <29>, wherein component (C) is preferably an organic compound having a hydroxy group, and more preferably one or more compounds selected from the following (C1) and (C2) :

(C1): hydroxy group-containing aromatic compound; and
(C2): hydroxy group-containing aliphatic compound.

<31>

The rheology modifier according to <30>, wherein component (C) is preferably hydroxy group-containing aliphatic compound (C2), more preferably an aliphatic compound having one or two hydroxy groups in which the carbon-carbon bonds are each a saturated bond, and further preferably an aliphatic compound having five or less carbon atoms and two hydroxy groups in which the carbon-carbon bonds are each a saturated bond.

<32>

The rheology modifier according to any one of <24> to <31>, wherein component (C) is preferably one or more compounds selected from diethylene glycol monobutyl ether, neopentyl glycol, and propylene glycol, more preferably one or more compounds selected from neopentyl glycol and propylene glycol, and further preferably propylene glycol.

<33>

The rheology modifier according to any one of <24> to <31>, containing, as component (C), one or more compounds selected from benzyl alcohol, diethylene glycol monobutyl ether, 2-butoxyethanol, ethylene glycol monoisopropyl ether, 1-butanol, 2-methylpentane-2,4-diol, and neopentyl glycol.

<34>

The rheology modifier according to any one of <24> to <31>, preferably containing, as component (C), two or more selected from benzyl alcohol, diethylene glycol monobutyl ether, 2-butoxyethanol, ethylene glycol monoisopropyl ether, 1-butanol, 2-methylpentane-2,4-diol, propylene glycol, and neopentyl glycol, and containing propylene glycol and neopentyl glycol.

<35>

The rheology modifier according to any one of <24> to <31>, containing, as component (C), propylene glycol and neopentyl glycol, wherein the mass ratio of propylene glycol/neopentyl glycol is preferably 20/80 or more, more preferably 30/70 or more, further preferably 40/60 or more, and, preferably 80/20 or less, more preferably 70/30 or

less, further preferably 60/40 or less.

<36>

The rheology modifier according to any one of <24> to <35>, further containing water.

<37>

The rheology modifier according to <36>, containing preferably 3% by mass or more, more preferably 5% by mass or more, further preferably 7.5% by mass or more, and, preferably 25% by mass or less, more preferably 20% by mass or less, further preferably 15% by mass or less of component (A).

<38>

The rheology modifier according to <36> or <37>, containing preferably 3% by mass or more, more preferably 5% by mass or more, further preferably 7.5% by mass or more, and, preferably 25% by mass or less, more preferably 20% by mass or less, further preferably 15% by mass or less of component (B).

<39>

The rheology modifier according to any one of <36> to <38>, containing preferably 6% by mass or more, more preferably 10% by mass or more, further preferably 15% by mass or more, and, preferably 50% by mass or less, more preferably 40% by mass or less, further preferably 30% by mass or less of component (A) and component (B) in total.

<40>

The rheology modifier according to any one of <36> to <39>, wherein component (C) is a compound having an octanol/water partition coefficient of 1 or more and 1.2 or less, and the content of component (C) in the rheology modifier is preferably 3% by mass or more, more preferably 4% by mass or more, and, preferably 30% by mass or less, more preferably 15% by mass or less, further preferably 7% by mass or less.

<41>

The rheology modifier according to any one of <36> to <39>, wherein component (C) is a compound having an octanol/water partition coefficient of 0.5 or more and less than 1, and the content of component (C) in the rheology modifier is preferably 3% by mass or more, more preferably 7.5% by mass or more, further preferably 10% by mass or more, furthermore preferably 15% by mass or more, and, preferably 50% by mass or less, more preferably 40% by mass or less.

<42>

The rheology modifier according to any one of <36> to <39>, wherein component (C) is a compound having an octanol/water partition coefficient of 0 or more and less than 0.5, and the content of component (C) in the rheology modifier is preferably 3% by mass or more, more preferably 7.5% by mass or more, further preferably 10% by mass or more, furthermore preferably 15% by mass or more, and, preferably 50% by mass or less, more preferably 40% by mass or less, further preferably 25% by mass or less.

<43>

The rheology modifier according to any one of <36> to <39>, wherein component (C) is a compound having an octanol/water partition coefficient of -0.8 or more and less than 0, and the content of component (C) in the rheology modifier is preferably 3% by mass or more, more preferably 7% by mass or more, further preferably 10% by mass or more, furthermore preferably 15% by mass or more, and, preferably 50% by mass or less, more preferably 40% by mass or less.

<44>

The rheology modifier according to any one of <36> to <39>, wherein component (C) is a compound having an octanol/water partition coefficient of -0.95 or more and less than -0.8, and the content of component (C) in the rheology modifier is preferably 15% by mass or more, more preferably 22% by mass or more, further preferably 30% by mass or more, furthermore preferably 35% by mass or more, and, preferably 60% by mass or less, more preferably 50% by mass or less.

<45>

The rheology modifier according to any one of <36> to <39>, wherein component (C) is a compound having an octanol/water partition coefficient of -1.6 or more and less than -0.95, and the content of component (C) in the rheology modifier is preferably 25% by mass or more, more preferably 30% by mass or more, further preferably 35% by mass or more, and, preferably 70% by mass or less, more preferably 60% by mass or less.

<46>

The rheology modifier according to any one of <36> to <45>, containing preferably 10% by mass or more, more preferably 15% by mass or more, further preferably 20% by mass or more, and, preferably 50% by mass or less, more preferably 40% by mass or less, further preferably 35% by mass or less of water.

<47>

The rheology modifier according to any one of <1> to <46>, further containing (D) one or more compounds selected from polyethylene glycols with a weight-average molecular weight of 500 or more, polypropylene glycols with a weight-average molecular weight of 500 or more, copolymers of ethylene oxide and propylene oxide with a weight-average molecular weight of 500 or more, and ether compounds having a hydrocarbon group and a polyoxyalkylene group (hereinafter, referred to as component (D)).

<48>

The rheology modifier according to <47>, wherein component (D) is polyethylene glycol, and the weight-average molecular weight of the polyethylene glycol as component (D) is preferably 500 or more, more preferably 1000 or more, further preferably 2000 or more, furthermore preferably 4000 or more, furthermore preferably 5000 or more, and, preferably 200000 or less, more preferably 150000 or less, further preferably 120000 or less, furthermore preferably 110000 or less, furthermore preferably 90000 or less, furthermore preferably 80000 or less, furthermore preferably 50000 or less, furthermore preferably 20000 or less.

<49>

The rheology modifier according to <47>, wherein component (D) is polypropylene glycol, and the weight-average molecular weight of the polypropylene glycol as component (D) is preferably 500 or more, more preferably 700 or more, and, preferably 5000 or less, more preferably 3000 or less.

<50>

The rheology modifier according to <47>, wherein component (D) is a copolymer of ethylene oxide and propylene oxide, and the weight-average molecular weight of the copolymer of ethylene oxide and propylene oxide as component (D) is preferably 500 or more, more preferably 1000 or more, further preferably 2000 or more, and, preferably 30000 or less, more preferably 25000 or less, further preferably 20000 or less.

<51>

The rheology modifier according to any one of <47> to <50>, wherein the content of component (D) relative to 100 parts by mass of water is preferably 5 parts by mass or more, more preferably 7.5 parts by mass or more, further preferably 10 parts by mass or more, and, preferably 70 parts by mass or less, more preferably 60 parts by mass or less, further preferably 50 parts by mass or less.

<52>

The rheology modifier according to any one of <47> to <50>, containing preferably 5% by mass or more, more preferably 6% by mass or more, further preferably 7.5% by mass or more, and, preferably 20% by mass or less, more preferably 15% by mass or less, further preferably 13% by mass or less of component (D).

<53>

The rheology modifier according to any one of <47> to <50>, wherein the content of component (D) in the rheology modifier is preferably 3% by mass or more, more preferably 7% by mass or more, further preferably 10% by mass or more, furthermore preferably 12% by mass or more, and, preferably 20% by mass or less, more preferably 17% by mass or less.

<54>

The rheology modifier according to any one of <47> to <50>, wherein the content of component (D) in the rheology modifier is preferably 3% by mass or more, and, preferably 20% by mass or less, more preferably 13% by mass or less, further preferably 7% by mass or less.

<55>

The rheology modifier according to any one of <1> to <54> for a hydraulic slurry.

<56>

A slurry composition containing the rheology modifier according to any one of <1> to <54>, water, and a powder.

<57>

A slurry composition containing: (A) a sulfate or a salt thereof having a hydrocarbon group with 12 or more and 22 or less carbon atoms and an average number of moles of added alkylene oxide of 0 or more and 25 or less (hereinafter, referred to as component (A)); and (B) a fatty acid alkanolamide having a fatty acid moiety with 10 or more and 22 or less carbon atoms (hereinafter, referred to as component (B)).

<58>

The slurry composition according to <56> or <57>, wherein the powder is an inorganic powder selected from:

(1) a hydraulic powder selected from cement and plaster;
(2) a powder having pozzolanic activity selected from fly ash, silica fume, volcanic ash, and silicate clay;
(3) a latent hydraulic powder selected from coal ash, blast-furnace slag, and diatomaceous earth;
(4) a silicate selected from kaolin, aluminum silicate, clay, talc, mica, calcium silicate, sericite, and bentonite;
(5) a carbonate selected from calcium carbonate, magnesium carbonate, barium carbonate, and basic lead carbonate;
(6) a sulfate selected from calcium sulfate and barium sulfate;
(7) a chromate selected from strontium chromate and pigment yellow;
(8) a molybdate selected from zinc molybdate, calcium zinc molybdate, and magnesium molybdate;
(9) a metal oxide selected from alumina, antimony oxide, titanium oxide, cobalt oxide, triiron tetraoxide, diiron

trioxide, trilead tetraoxide, lead monoxide, chromium oxide green, tungsten trioxide, and yttrium oxide;
(10) a metal hydroxide selected from aluminum hydroxide, magnesium hydroxide, calcium hydroxide, iron hydroxide, and metatitanic acid;
(11) a metal carbide selected from silicon carbide, tungsten carbide, boron carbide, and titanium carbide; and
(12) an inorganic powder which does not fall within any of (1) to (11) selected from aluminum nitride, silicon nitride, boron nitride, zirconia, barium titanate, satin white, carbon black, graphite, chrome yellow, mercury sulfide, ultramarine, Paris blue, titanium yellow, chrome vermilion, lithopone, copper acetoarsenite, nickel, silver, palladium, and lead zirconate titanate.

<59>
The slurry composition according to <56> or <57>, wherein the powder is a hydraulic powder or a mixture of a hydraulic powder and bentonite.
<60>
The slurry composition according to <56> or <57>, wherein the powder is cement or a mixed powder of cement and bentonite.
<61>
The slurry composition according to any one of <56> to <60>, wherein the total content of component (A) and component (B) relative to 100 parts by mass of water is preferably 0.5 parts by mass or more, more preferably 1 part by mass or more, further preferably 2 parts by mass or more, furthermore preferably 3 parts by mass or more, and, preferably 30 parts by mass or less, more preferably 10 parts by mass or less, further preferably 8 parts by mass or less, furthermore preferably 6 parts by mass or less, furthermore preferably 5 parts by mass or less.
<62>
The slurry composition according to <61>, wherein the content of component (A) relative to 100 parts by mass of water is preferably 0.25 parts by mass or more, more preferably 0.5 parts by mass or more, further preferably 1 part by mass or more, and, preferably 5 parts by mass or less, more preferably 4 parts by mass or less, further preferably 3 parts by mass or less.
<63>
The slurry composition according to <61> or <62>, wherein the content of component (B) relative to 100 parts by mass of water is preferably 0.25 parts by mass or more, more preferably 0.5 parts by mass or more, further preferably 1 part by mass or more, and, preferably 5 parts by mass or less, more preferably 4 parts by mass or less, further preferably 3 parts by mass or less.
<64>
The slurry composition according to any one of <57> to <63>, further containing (C) a compound having a hydroxy group with an octanol/water partition coefficient of -1.6 or more and 1.2 or less (hereinafter, referred to as component (C)).
<65>
The slurry composition according to <64>, wherein the content of component (C) relative to 100 parts by mass of water is preferably 0.2 parts by mass or more, more preferably 0.4 parts by mass or more, further preferably 0.8 parts by mass or more, and, preferably 6 parts by mass or less, more preferably 5 parts by mass or less, further preferably 4 parts by mass or less.
<66>
The slurry composition according to any one of <57> to <65>, further containing (D) one or more compounds selected from polyethylene glycols with a weight-average molecular weight of 500 or more, polypropylene glycols with a weight-average molecular weight of 500 or more, copolymers of ethylene oxide and propylene oxide with a weight-average molecular weight of 500 or more, and ether compounds having a hydrocarbon group and a polyoxyalkylene group (hereinafter, referred to as component (D)).
<67>
The slurry composition according to <66>, wherein the content of component (D) relative to 100 parts by mass of water is preferably 0.15 parts by mass or more, more preferably 0.25 parts by mass or more, further preferably 0.35 parts by mass or more, furthermore preferably 0.45 parts by mass or more, further preferably 0.5 parts by mass or more, and, preferably 5 parts by mass or less, more preferably 4 parts by mass or less, further preferably 3 parts by mass or less, furthermore preferably 2 parts by mass or less, furthermore preferably 1.5 parts by mass or less, furthermore preferably 1 part by mass or less.
<68>
The slurry composition according to any one of <56> to <67>, wherein the water/powder ratio (W/P) is preferably 12% by mass or more, more preferably 30% by mass or more, further preferably 50% by mass or more, furthermore preferably 100% by mass or more, furthermore preferably 150% by mass or more, and, preferably 1000% by mass or less, more preferably 500% by mass or less, further preferably 300% by mass or less.

<69>
A method for modifying water rheology, the method including mixing (A) a sulfate or a salt thereof having a hydrocarbon group with 12 or more and 22 or less carbon atoms and an average number of moles of added alkylene oxide of 0 or more and 25 or less (hereinafter, referred to as component (A)); and (B) a fatty acid alkanolamide having a fatty acid moiety with 10 or more and 22 or less carbon atoms (hereinafter, referred to as component (B)), with water.
<70>
The method for modifying water rheology according to <69>, wherein component (A) and component (B) form a wormlike micelle.
<71>
The method for modifying water rheology according to <69> or <70>, wherein component (B) and water are mixed together, and component (A) is then added thereto and mixed together.
<72>
A method for producing a slurry composition, the method including mixing the rheology modifier according to any one of <1> to <54>, a powder, and water, or including mixing component (A), component (B), a powder, and water.
<73>
The method for producing a slurry composition according to <72>, wherein a slurry containing water and a powder is prepared and the rheology modifier is added to the slurry and mixed together, or wherein a slurry containing water and a powder is prepared, and component (B) is added to the slurry and mixed together and component (A) is then added thereto and mixed together.
<74>
The method for producing a slurry composition according to <72> or <73>, wherein the powder is a hydraulic powder or a mixture of a hydraulic powder and bentonite.
<75>
A kit including: a first agent containing (A) a sulfate or a salt thereof having a hydrocarbon group with 12 or more and 22 or less carbon atoms and an average number of moles of added alkylene oxide of 0 or more and 25 or less (hereinafter, referred to as component (A)); and a second agent containing (B) a fatty acid alkanolamide having a fatty acid moiety with 10 or more and 22 or less carbon atoms (hereinafter, referred to as component (B)).
<76>
The kit according to <75>, wherein the first agent containing component (A) and the second agent containing component (B) are each an aqueous solution.
<77>
The kit according to <75> or <76>, wherein the first agent containing component (A) and the second agent containing component (B) are mixed together to form a wormlike micelle.
<78>
The kit according to any one of <75> to <77>, wherein the first agent containing component (A) and the second agent containing component (B) are mixed together such that the mass ratio of component (A) to component (B), (A)/(B), is 3/97 or more and 95/5 or less.
<79>
The kit according to <78>, wherein the number of carbon atoms of the hydrocarbon group of component (A) is 12 or more and 16 or less, the number of carbon atoms of the fatty acid moiety of component (B) is 10 or more and 16 or less, and the first agent containing component (A) and the second agent containing component (B) are mixed together such that the mass ratio of component (A) to component (B), (A)/(B), is preferably 5/95 or more, and, preferably 25/75 or less, more preferably 15/85 or less, further preferably 7/93 or less.
<80>
The kit according to <78>, wherein the number of carbon atoms of the hydrocarbon group of component (A) is 17 or more and 22 or less, the number of carbon atoms of the fatty acid moiety of component (B) is 10 or more and 16 or less, and the first agent containing component (A) and the second agent containing component (B) are mixed together such that the mass ratio of component (A) to component (B), (A)/(B), is preferably 5/95 or more, more preferably 15/85 or more, and, preferably 45/55 or less, more preferably 35/65 or less.
<81>
The kit according to <78>, wherein the number of carbon atoms of the hydrocarbon group of component (A) is 17 or more and 22 or less, the number of carbon atoms of the fatty acid moiety of component (B) is 17 or more and 22 or less, and the first agent containing component (A) and the second agent containing component (B) are mixed together such that the mass ratio of component (A) to component (B), (A)/(B), is preferably 5/95 or more, more preferably 15/85 or more, further preferably 40/60 or more, and, preferably 55/45 or less.
<82>
The kit according to <78>, wherein the number of carbon atoms of the hydrocarbon group of component (A) is 12

or more and 16 or less, the number of carbon atoms of the fatty acid moiety of component (B) is 17 or more and 22 or less, and the first agent containing component (A) and the second agent containing component (B) are mixed together such that the mass ratio of component (A) to component (B), (A)/(B), is preferably 5/95 or more, more preferably 15/85 or more, further preferably 25/75 or more, and, preferably 55/45 or less, more preferably 35/65 or less.

<83>

The kit according to any one of <75> to <82>, wherein the first agent containing component (A) and the second agent containing component (B) are mixed together with water for use such that the total of the content of component (A) and the content of component (B) relative to 100 parts by mass of water is preferably 0.5 parts by mass or more, more preferably 1 part by mass or more, further preferably 2 parts by mass or more, and, preferably 99 parts by mass or less, more preferably 50 parts by mass or less, further preferably 40 parts by mass or less, furthermore preferably 30 parts by mass or less, furthermore preferably 25 parts by mass or less, furthermore preferably 15 parts by mass or less, furthermore preferably 10 parts by mass or less.

<84>

The kit according to <75> or <76>, wherein at least one of the first agent containing component (A) and the second agent containing component (B) further contains (E) a dispersant (hereinafter, referred to as component (E)).

<85>

The kit according to <75> or <76>, further including a third agent containing (E) a dispersant (hereinafter, referred to as component (E)).

<86>

The kit according to <84> or <85>, wherein the number of carbon atoms of the hydrocarbon group of component (A) is 12 or more and 16 or less, and the first agent containing component (A) and the second agent containing component (B) are mixed together such that the mass ratio of component (A) to component (B), (A)/(B), is preferably 5/95 or more, more preferably 15/85 or more, further preferably 25/75 or more, and, preferably 80/20 or less, more preferably 70/30 or less.

<87>

The kit according to <84> or <85>, wherein the number of carbon atoms of the hydrocarbon group of component (A) is 17 or more and 22 or less, and the first agent containing component (A) and the second agent containing component (B) are mixed together such that the mass ratio of component (A) to component (B), (A)/(B), is preferably 5/95 or more, more preferably 15/85 or more, further preferably 25/75 or more, and, preferably 80/20 or less, more preferably 70/30 or less.

<88>

The kit according to any one of <84> to <87>, wherein the first agent containing component (A) and the second agent containing component (B) are mixed together such that the total content of component (E) relative to 100 parts by mass of water is preferably 5 parts by mass or more, more preferably 8 parts by mass or more, further preferably 10 parts by mass or more, and, preferably 200 parts by mass or less, more preferably 100 parts by mass or less, further preferably 80 parts by mass or less.

<89>

The kit according to any one of <84> to <89>, wherein the first agent containing component (A) and the second agent containing component (B) are mixed together such that the mass ratio of the total of the content of component (A) and the content of component (B) to the content of component (E), [(A)+(B)]/(E), is preferably 3/97 or more, more preferably 5/95 or more, further preferably 10/90 or more, and, preferably 97/3 or less, more preferably 95/5 or less, 90/10 or less.

<90>

The kit according to any one of <75> to <89>, wherein at least one of the first agent containing component (A) and the second agent containing component (B) further contains (D) one or more compounds selected from polyethylene glycols with a weight-average molecular weight of 500 or more, polypropylene glycols with a weight-average molecular weight of 500 or more, copolymers of ethylene oxide and propylene oxide with a weight-average molecular weight of 500 or more, and ether compounds having a hydrocarbon group and a polyoxyalkylene group (hereinafter, referred to as component (D)).

<91>

The kit according to <90>, wherein the first agent containing component (A) and the second agent containing component (B) are mixed together such that the total content of component (D) relative to 100 parts by mass of water is preferably 5 parts by mass or more, more preferably 7.5 parts by mass or more, further preferably 10 parts by mass or more, and, preferably 70 parts by mass or less, more preferably 60 parts by mass or less, further preferably 50 parts by mass or less.

<92>

The kit according to any one of <75> to <91>, for rheology modification.

<93>
The kit according to any one of <75> to <91>, for producing a slurry composition.
<94>
The kit according to any one of <75> to <91>, for producing a hydraulic slurry composition.
<95>
The kit according to any one of <75> to <91>, for a frictional drag reducer for piping or for a thickening and gelling agent.
<96>
Use of a mixture as a rheology modifier, the mixture containing: (A) a sulfate or a salt thereof having a hydrocarbon group with 12 or more and 22 or less carbon atoms and an average number of moles of added alkylene oxide of 0 or more and 25 or less (hereinafter, referred to as component (A)); and (B) a fatty acid alkanolamide having a fatty acid moiety with 10 or more and 22 or less carbon atoms (hereinafter, referred to as component (B)); and water.
<97>
The use as a rheology modifier according to <96>, wherein the mixture further contains (C) a compound having a hydroxy group with an octanol/water partition coefficient of -1.6 or more and 1.2 or less (hereinafter, referred to as component (C)).
<98>
The use as a rheology modifier according to <96> or <97>, wherein the mixture contains a wormlike micelle formed of component (A) and component (B).
<99>
An admixture for a hydraulic slurry composition, the admixture containing: (A) a sulfate or a salt thereof having a hydrocarbon group with 12 or more and 22 or less carbon atoms and an average number of moles of added alkylene oxide of 0 or more and 25 or less (hereinafter, referred to as component (A)); and (B) a fatty acid alkanolamide having a fatty acid moiety with 10 or more and 22 or less carbon atoms (hereinafter, referred to as component (B)); and (E) a dispersant (hereinafter, referred to as component (E)).
<100>
The admixture for a hydraulic slurry composition according to <99>, wherein component (E) is one or more selected from naphthalene-based polymer, polycarboxylic acid-based polymer, melamine-based polymer, phenolic polymer, and lignin-based polymer.
<101>
The admixture for a hydraulic slurry composition according to <99> or <100>, wherein component (E) is one or more dispersants selected from (E1) naphthalene-based dispersants, (E2) polycarboxylic acid-based dispersants, (E3) dispersants consisting of the following polycondensation products, (E4) lignin-based dispersants, and (E5) melamine-based dispersants:
<polycondensation products>
polycondensation products consisting of the following component E31, component E33, and optional component E32:

[component E31]
an aromatic compound or heteroaromatic compound having 5 to 10 carbon atoms or heteroatoms, and having 1 to 300 oxyethylene and/or oxypropylene groups, on average per molecule, bonded to the aromatic compound or heteroaromatic compound via an O atom or an N atom;
[component E32]
at least one aromatic compound, as an optional component, selected from the group consisting of (E32-1) phenol, (E32-2) phenol ether, (E32-3) naphthol, (E32-4) naphthol ether, (E32-5) aniline, (E32-6) furfuryl alcohol, and (E32-7) aminoplast-forming agent selected from the group consisting of melamine or derivatives thereof, urea or derivatives thereof, and carboxamides; and
[component E33]
an aldehyde selected from the group consisting of formaldehyde, glyoxylic acid, and benzaldehyde, and mixtures thereof, the benzaldehyde optionally and further having an acidic group represented by a formula $COOM_a$, $SO_3M_a$, or $PO_3M_a$, wherein M represents H, an alkali metal or an alkali earth metal, ammonium, or an organic amine group, and a may be 1/2, 1, or 2.

<102>
The admixture for a hydraulic slurry composition according to <101>, wherein component (E) is one or more selected from (E1) naphthalene-based dispersants, (E2) polycarboxylic acid-based dispersants, and (E4) lignin-based dispersants, preferably one or more selected from (E1) naphthalene-based dispersants and (E2) polycarboxylic acid-based dispersants, and more preferably (E2) polycarboxylic acid-based dispersants.
<103>

The admixture for a hydraulic slurry composition according to any one of <99> to <102>, wherein component (A) is a compound represented by general formula (a1):

$$R^{1a}\text{-O-}(R^{2a}O)_nSO_3M^1 \qquad (a1)$$

wherein $R^{1a}$ is a hydrocarbon group having 12 or more and 22 or less carbon atoms; $R^{2a}$ is an alkylene group having two or more and four or less carbon atoms, and preferably an ethylene group; n is an average number of added moles and is 0 or more and 25 or less; and $M^1$ is a hydrogen atom or a cation, and preferably an inorganic or organic cation.

<104>

The admixture for a hydraulic slurry composition according to <103>, wherein the number of carbon atoms of $R^{1a}$ is 12 or more and 16 or less, and the average number of moles of added alkylene oxide, n, is preferably 1 or more, more preferably 2 or more, further preferably 4 or more, furthermore preferably 5 or more, furthermore preferably 7 or more, and, preferably 20 or less, more preferably 15 or less, further preferably 12 or less.

<105>

The admixture for a hydraulic slurry composition according to <103>, wherein the number of carbon atoms of $R^{1a}$ is 17 or more and 22 or less, and the average number of moles of added alkylene oxide, n, is preferably 1 or more, more preferably 2 or more, further preferably 4 or more, furthermore preferably 5 or more, furthermore preferably 7 or more, furthermore preferably 10 or more, furthermore preferably 15 or more, and furthermore preferably 20 or more.

<106>

The admixture for a hydraulic slurry composition according to any one of <99> to <105>, wherein the mass ratio of component (A) to component (B), (A)/(B), is 3/97 or more and 95/5 or less.

<107>

The admixture for a hydraulic slurry composition according to <106>, wherein the number of carbon atoms of the hydrocarbon group of component (A) is 12 or more and 16 or less, and the mass ratio of component (A) to component (B), (A)/(B), is preferably 5/95 or more, more preferably 15/85 or more, further preferably 25/75 or more, and, preferably 80/20 or less, more preferably 70/30 or less.

<108>

The admixture for a hydraulic slurry composition according to <106>, wherein the number of carbon atoms of the hydrocarbon group of component (A) is 17 or more and 22 or less, and the mass ratio of component (A) to component (B), (A)/(B), is preferably 5/95 or more, more preferably 15/85 or more, further preferably 25/75 or more, and, preferably 80/20 or less, more preferably 70/30 or less.

<109>

The admixture for a hydraulic slurry composition according to any one of <99> to <108>, wherein the mass ratio of the total of the content of component (A) and the content of component (B) to the content of component (E), [(A)+(B)]/(E), is preferably 3/97 or more, more preferably 5/95 or more, further preferably 10/90 or more, and, preferably 97/3 or less, more preferably 95/5 or less, 90/10 or less.

<110>

A hydraulic slurry composition containing the rheology modifier according to any one of <1> to <54>, water, and a hydraulic powder.

<111>

A hydraulic slurry composition containing the admixture for a hydraulic slurry composition according to any one of <99> to <109>, water, and a hydraulic powder.

<112>

A hydraulic slurry composition containing: (A) a sulfate or a salt thereof having a hydrocarbon group with 12 or more and 22 or less carbon atoms and an average number of moles of added alkylene oxide of 0 or more and 25 or less (hereinafter, referred to as component (A)); and (B) a fatty acid alkanolamide having a fatty acid moiety with 10 or more and 22 or less carbon atoms (hereinafter, referred to as component (B)); water; and a hydraulic powder.

<113>

The hydraulic slurry composition according to any one of <110> to <112>, wherein the hydraulic powder is a cement selected from ordinary Portland cement, high-early-strength Portland cement, ultra-high-early-strength Portland cement, sulfate-resistant Portland cement, low-heat Portland cement, white Portland cement, and eco-cement, preferably a cement selected from high-early-strength Portland cement, ordinary Portland cement, sulfuric acid-resistant Portland cement, and white Portland cement, and more preferably a cement selected from high-early-strength Portland cement and ordinary Portland cement.

<114>

The hydraulic slurry composition according to any one of <110> to <113>, wherein the hydraulic powder contains

one or more selected from bentonite, blast-furnace slag, fly ash, silica fume, and anhydrous plaster, and preferably contains bentonite.

<115>

The hydraulic slurry composition according to any one of <110> to <114>, wherein the total content of component (A) and component (B) relative to 100 parts by mass of water is preferably 0.5 parts by mass or more, more preferably 1 part by mass or more, further preferably 2 parts by mass or more, furthermore preferably 3 parts by mass or more, and, preferably 30 parts by mass or less, more preferably 10 parts by mass or less, further preferably 8 parts by mass or less, furthermore preferably 6 parts by mass or less, furthermore preferably 5 parts by mass or less.

<116>

The hydraulic slurry composition according to <115>, wherein the content of component (A) relative to 100 parts by mass of water is preferably 0.25 parts by mass or more, more preferably 0.5 parts by mass or more, further preferably 1 part by mass or more, and, preferably 5 parts by mass or less, more preferably 4 parts by mass or less, further preferably 3 parts by mass or less.

<117>

The hydraulic slurry composition according to <115> or <116>, wherein the content of component (B) relative to 100 parts by mass of water is preferably 0.25 parts by mass or more, more preferably 0.5 parts by mass or more, further preferably 1 part by mass or more, and, preferably 5 parts by mass or less, more preferably 4 parts by mass or less, further preferably 3 parts by mass or less.

<118>

The hydraulic slurry composition according to any one of <112> to <117>, wherein the mass ratio of component (A) to component (B), (A)/(B), is preferably 5/95 or more and 95/5 or less.

<119>

The hydraulic slurry composition according to <118>, wherein the number of carbon atoms of the hydrocarbon group of component (A) is 12 or more and 16 or less, the number of carbon atoms of the fatty acid moiety of component (B) is 10 or more and 16 or less, and the mass ratio of component (A) to component (B), (A)/(B), is preferably 25/75 or less, and more preferably 15/85 or less.

<120>

The hydraulic slurry composition according to <118>, wherein the number of carbon atoms of the hydrocarbon group of component (A) is 17 or more and 22 or less, the number of carbon atoms of the fatty acid moiety of component (B) is 10 or more and 16 or less, and the mass ratio of component (A) to component (B), (A)/(B), is preferably 15/85 or more, and, preferably 55/45 or less, more preferably 45/55 or less.

<121>

The hydraulic slurry composition according to <118>, wherein the number of carbon atoms of the hydrocarbon group of component (A) is 17 or more and 22 or less, the number of carbon atoms of the fatty acid moiety of component (B) is 17 or more and 22 or less, and the mass ratio of component (A) to component (B), (A)/(B), is preferably 45/55 or more, and, preferably 65/45 or less.

<122>

The hydraulic slurry composition according to <118>, wherein the number of carbon atoms of the hydrocarbon group of component (A) is 12 or more and 16 or less, the number of carbon atoms of the fatty acid moiety of component (B) is 17 or more and 22 or less, and the mass ratio of component (A) to component (B), (A)/(B), is preferably 45/55 or more, more preferably 55/45 or more, further preferably 65/45 or more, and, preferably 85/15 or less, more preferably 75/25 or less.

<123>

The hydraulic slurry composition according to <118>, wherein the number of carbon atoms of the hydrocarbon group of component (A) is 12 or more and 16 or less, the average number of moles of added alkylene oxide is 0 or more and 5 or less, the number of carbon atoms of the fatty acid moiety of component (B) is 17 or more and 22 or less, and the mass ratio of component (A) to component (B), (A)/(B), is preferably 65/35 or more, and, preferably 75/25 or less.

<124>

The hydraulic slurry composition according to <118>, wherein the number of carbon atoms of the hydrocarbon group of component (A) is 12 or more and 16 or less, the average number of moles of added alkylene oxide is 6 or more and 10 or less, the number of carbon atoms of the fatty acid moiety of component (B) is 17 or more and 22 or less, and the mass ratio of component (A) to component (B), (A)/(B), is preferably 55/45 or more, and, preferably 65/35 or less.

<125>

The hydraulic slurry composition according to <118>, wherein the number of carbon atoms of the hydrocarbon group of component (A) is 12 or more and 16 or less, the average number of moles of added alkylene oxide is 11 or more and 15 or less, the number of carbon atoms of the fatty acid moiety of component (B) is 17 or more and 22 or less,

and the mass ratio of component (A) to component (B), (A)/(B), is preferably 45/55 or more, and, preferably 55/45 or less.

<126>

The hydraulic slurry composition according to <118>, wherein the number of carbon atoms of the hydrocarbon group of component (A) is 17 or more and 22 or less, the average number of moles of added alkylene oxide is 0 or more and 3 or less, the number of carbon atoms of the fatty acid moiety of component (B) is 17 or more and 22 or less, and the mass ratio of component (A) to component (B), (A)/(B), is preferably 90/10 or more, and, preferably 97/3 or less.

<127>

The hydraulic slurry composition according to <118>, wherein the number of carbon atoms of the hydrocarbon group of component (A) is 17 or more and 22 or less, the average number of moles of added alkylene oxide is 4 or more and 7 or less, the number of carbon atoms of the fatty acid moiety of component (B) is 17 or more and 22 or less, and the mass ratio of component (A) to component (B), (A)/(B), is preferably 55/45 or more, and, preferably 65/35 or less.

<128>

The hydraulic slurry composition according to <118>, wherein the number of carbon atoms of the hydrocarbon group of component (A) is 17 or more and 22 or less, the average number of moles of added alkylene oxide is 8 or more and 16 or less, the number of carbon atoms of the fatty acid moiety of component (B) is 17 or more and 22 or less, and the mass ratio of component (A) to component (B), (A)/(B), is preferably 45/55 or more, and, preferably 55/45 or less.

<129>

The hydraulic slurry composition according to any one of <112> to <117>, wherein the number of carbon atoms of the hydrocarbon group of component (A) is 12 or more and 16 or less, the number of carbon atoms of the fatty acid moiety of component (B) is 17 or more and 22 or less, and the average number of moles of added alkylene oxide in component (A) is preferably 0 or more, and, preferably 2 or less.

<130>

The hydraulic slurry composition according to any one of <112> to <117>, wherein the number of carbon atoms of the hydrocarbon group of component (A) is 17 or more and 22 or less, the number of carbon atoms of the fatty acid moiety of component (B) is 17 or more and 22 or less, and the average number of moles of added alkylene oxide in component (A) is preferably 4 or more, and, preferably 16 or less, more preferably 14 or less, further preferably 12 or less.

<131>

The hydraulic slurry composition according to any one of <110> to <130>, wherein the water/hydraulic powder ratio (W/P) is preferably 12% by mass or more, more preferably 30% by mass or more, further preferably 40% by mass or more, furthermore preferably 50% by mass or more, and, preferably 500% by mass or less, more preferably 400% by mass or less, further preferably 300% by mass or less.

<132>

The hydraulic slurry composition according to any one of <112> to <117>, further containing (E) a dispersant (hereinafter, referred to as component (E)).

<133>

The hydraulic slurry composition according to <132>, wherein the total content of component (A) and component (B) relative to 100 parts by mass of water is preferably 0.03 parts by mass or more, more preferably 0.05 parts by mass or more, further preferably 0.07 parts by mass or more, and, preferably 30 parts by mass or less, more preferably 10 parts by mass or less, further preferably 8 parts by mass or less, furthermore preferably 6 parts by mass or less, furthermore preferably 5 parts by mass or less, furthermore preferably 3 parts by mass or less.

<134>

The hydraulic slurry composition according to <133>, wherein the content of component (A) relative to 100 parts by mass of water is preferably 0.01 part by mass or more, more preferably 0.02 parts by mass or more, and, preferably 5 parts by mass or less, more preferably 4 parts by mass or less, further preferably 3 parts by mass or less, furthermore preferably 2 parts by mass or less.

<135>

The hydraulic slurry composition according to <133> or <134>, wherein the content of component (B) relative to 100 parts by mass of water is preferably 0.02 parts by mass or more, more preferably 0.04 parts by mass or more, further preferably 0.05 parts by mass or more, furthermore preferably 0.07 parts by mass or more, and, preferably 5 parts by mass or less, more preferably 4 parts by mass or less, further preferably 3 parts by mass or less, furthermore preferably 2 parts by mass or less.

<136>

The hydraulic slurry composition according to any one of <132> to <135>, wherein the mass ratio of component (A)

to component (B), (A)/(B), is preferably 5/95 or more and 95/5 or less.

<137>

The hydraulic slurry composition according to <136>, wherein the number of carbon atoms of the hydrocarbon group of component (A) is 12 or more and 16 or less, and the mass ratio of component (A) to component (B), (A)/(B), is preferably 5/95 or more, more preferably 15/85 or more, further preferably 25/75 or more, and, preferably 80/20 or less, more preferably 70/30 or less.

<138>

The hydraulic slurry composition according to <136>, wherein the number of carbon atoms of the hydrocarbon group of component (A) is 17 or more and 22 or less, and the mass ratio of component (A) to component (B), (A)/(B), is preferably 5/95 or more, more preferably 15/85 or more, further preferably 25/75 or more, and, preferably 80/20 or less, more preferably 70/30 or less.

<139>

The hydraulic slurry composition according to any one of <132> to <135>, wherein the number of carbon atoms of the hydrocarbon group of component (A) is 12 or more and 16 or less, and the average number of moles of added alkylene oxide is preferably 1 or more, more preferably 2 or more, further preferably 4 or more, furthermore preferably 5 or more, furthermore preferably 7 or more, and, preferably 20 or less, more preferably 15 or less, further preferably 12 or less.

<140>

The hydraulic slurry composition according to any one of <132> to <135>, wherein the number of carbon atoms of the hydrocarbon group of component (A) is 17 or more and 22 or less, and the average number of moles of added alkylene oxide is preferably 1 or more, more preferably 2 or more, further preferably 4 or more, furthermore preferably 5 or more, furthermore preferably 7 or more, furthermore preferably 10 or more, furthermore preferably 15 or more, and furthermore preferably 20 or more.

<141>

The hydraulic slurry composition according to any one of <132> to <140>, wherein the content of component (E) relative to 100 parts by mass of the hydraulic powder is preferably 0.06 parts by mass or more, more preferably 0.09 parts by mass or more, further preferably 0.12 parts by mass or more, and, preferably 1.0 part by mass or less, more preferably 0.8 parts by mass or less, further preferably 0.6 parts by mass or less.

<142>

The hydraulic slurry composition according to any one of <132> to <141>, wherein the mass ratio of the total of the content of component (A) and the content of component (B) to the content of component (E), [(A)+(B)]/(E), is preferably 3/97 or more, more preferably 5/95 or more r, further preferably 10/90 or more, and, preferably 97/3 or less, more preferably 95/5 or less, 90/10 or less.

<143>

The hydraulic slurry composition according to any one of <132> to <142>, wherein the water/hydraulic powder ratio (W/P) is preferably 20% by mass or more, more preferably 25% by mass or more, further preferably 30% by mass or more, and, preferably 70% by mass or less, more preferably 60% by mass or less, further preferably 55% by mass or less.

<144>

The hydraulic slurry composition according to any one of <112> to <143>, further containing (C) a compound having a hydroxy group with an octanol/water partition coefficient of -1.6 or more and 1.2 or less (hereinafter, referred to as component (C)).

<145>

The hydraulic slurry composition according to <144>, wherein the content of component (C) relative to 100 parts by mass of water is preferably 0.2 parts by mass or more, more preferably 0.4 parts by mass or more, further preferably 0.8 parts by mass or more, and, preferably 6 parts by mass or less, more preferably 5 parts by mass or less, further preferably 4 parts by mass or less.

<146>

The hydraulic slurry composition according to any one of <112> to <145>, further containing (D) one or more compounds selected from polyethylene glycols with a weight-average molecular weight of 500 or more, polypropylene glycols with a weight-average molecular weight of 500 or more, copolymers of ethylene oxide and propylene oxide with a weight-average molecular weight of 500 or more, and ether compounds having a hydrocarbon group and a polyoxyalkylene group (hereinafter, referred to as component (D)).

<147>

The hydraulic slurry composition according to <146>, wherein the content of component (D) relative to 100 parts by mass of water is preferably 0.15 parts by mass or more, more preferably 0.25 parts by mass or more, further preferably 0.35 parts by mass or more, furthermore preferably 0.45 parts by mass or more, furthermore preferably 0.5 parts by mass or more, and, 5 parts by mass or less, more preferably 4 parts by mass or less, further preferably

3 parts by mass or less, furthermore preferably 2 parts by mass or less, furthermore preferably 1.5 parts by mass or less, furthermore preferably 1 part by mass or less, for prevention of thickening of the slurry composition.
<148>
The hydraulic slurry composition according to any one of <110> to <147>, further containing one or more selected from AE agents, retarders, foaming agents, thickeners, blowing agents, waterproofing agents, fluidizers, and defoaming agents (with components (A) to (E) excluded).
<149>
A rheology modifier containing an association between an anionic surfactant and a nonionic surfactant.
<150>
A rheology modifier containing an anionic surfactant and a nonionic surfactant, wherein
the viscosity of an aqueous solution containing 5% by mass of the anionic surfactant and 5% by mass of the nonionic surfactant at 20°C is two times or more higher than any of the viscosity of a liquid of the anionic surfactant as a single substance at 20°C, the viscosity of a mixture containing 10% by mass or more of the anionic surfactant and water at 20°C, the viscosity of a liquid of the nonionic surfactant as a single substance at 20°C, and the viscosity of a mixture containing 10% by mass or more of the nonionic surfactant and water at 20°C.
<151>
A method for modifying water rheology, the method including mixing the rheology modifier according to <149> or <150> with water.
<152>
Use of a mixture as a rheology modifier, the mixture containing an association between an anionic surfactant and a nonionic surfactant and water.
<153>
Use of a mixture as a rheology modifier, the mixture containing an anionic surfactant and a nonionic surfactant and water, wherein
the viscosity of an aqueous solution containing 5% by mass of the anionic surfactant and 5% by mass of the nonionic surfactant at 20°C is two times or more higher than any of the viscosity of a liquid of the anionic surfactant as a single substance at 20°C, the viscosity of a mixture containing 10% by mass or more of the anionic surfactant and water at 20°C, the viscosity of a liquid of the nonionic surfactant as a single substance at 20°C, and the viscosity of a mixture containing 10% by mass or more of the nonionic surfactant and water at 20°C.
<154>
A component for a rheology modifier, the component consisting of (A) a sulfate or a salt thereof having a hydrocarbon group with 12 or more and 22 or less carbon atoms and an average number of moles of added alkylene oxide of 0 or more and 25 or less, wherein
the rheology modifier contains (B) a fatty acid alkanolamide having a fatty acid moiety with 10 or more and 22 or less carbon atoms.
<155>
A component for a rheology modifier, the component consisting of (A) a sulfate or a salt thereof having a hydrocarbon group with 12 or more and 22 or less carbon atoms and an average number of moles of added alkylene oxide of 0 or more and 25 or less, wherein
the component is for producing the rheology modifier in combination with (B) a fatty acid alkanolamide having a fatty acid moiety with 10 or more and 22 or less carbon atoms.
<156>
A component for a rheology modifier, the component consisting of (B) a fatty acid alkanolamide having a fatty acid moiety with 10 or more and 22 or less carbon atoms, wherein
the rheology modifier contains (A) a sulfate or a salt thereof having a hydrocarbon group with 12 or more and 22 or less carbon atoms and an average number of moles of added alkylene oxide of 0 or more and 25 or less.
<157>
A component for a rheology modifier, the component consisting of (B) a fatty acid alkanolamide having a fatty acid moiety with 10 or more and 22 or less carbon atoms, wherein
the component is for producing the rheology modifier in combination with (A) a sulfate or a salt thereof having a hydrocarbon group with 12 or more and 22 or less carbon atoms and an average number of moles of added alkylene oxide of 0 or more and 25 or less.

## Examples

<Examples 1 to 10, Comparative Examples 4 to 10>

The following materials were used for component (A), component (B), component (D), component (E), and

comparative components listed in Tables 2 to 9, 11, and 13.

Component (A)

(a-1): alkyl sulfate (in general formula (a1), $R^{1a}$: an alkyl group having 12 carbon atoms, n: 0, $M^1$: an ammonium ion)
(a-2) : alkyl sulfate (in general formula (a1), $R^{1a}$: an alkyl group having 16 carbon atoms, n: 0, $M^1$: an ammonium ion)
(a-3): polyoxyethylene alkyl sulfate (in general formula (a1), $R^{1a}$: an alkyl group having 12 to 16 carbon atoms, $R^{2a}$: an ethylene group, n: 1, $M^1$: an ammonium ion)
(a-4): polyoxyethylene alkyl sulfate (in general formula (a1), $R^{1a}$: an alkyl group having 12 to 16 carbon atoms, $R^{2a}$: an ethylene group, n: 2, $M^1$: an ammonium ion)
(a-5): polyoxyethylene alkyl sulfate (in general formula (a1), $R^{1a}$: an alkyl group having 12 to 16 carbon atoms, $R^{2a}$: an ethylene group, n: 1.5, $M^1$: an ammonium ion)
(a-6): polyoxyethylene alkenyl sulfate (in general formula (a1), $R^{1a}$: an alkenyl group having 18 carbon atoms (oleyl group), $R^{2a}$: an ethylene group, n: 20, $M^1$: an ammonium ion)
(a-7): polyoxyethylene alkyl sulfate (in general formula (a1), $R^{1a}$: an alkyl group having 12 carbon atoms, $R^{2a}$: an ethylene group, n: 2, $M^1$: an ammonium ion)
(a-8): polyoxyethylene alkyl sulfate (in general formula (a1), $R^{1a}$: an alkyl group having 12 carbon atoms, $R^{2a}$: an ethylene group, n: 8, $M^1$: an ammonium ion)
(a-9): polyoxyethylene alkyl sulfate (in general formula (a1), $R^{1a}$: an alkyl group having 12 carbon atoms, $R^{2a}$: an ethylene group, n: 13, $M^1$: an ammonium ion)
(a-10): polyoxyethylene alkyl sulfate (in general formula (a1), $R^{1a}$: an alkyl group having 14 to 16 carbon atoms, $R^{2a}$: an ethylene group, n: 3, $M^1$: an ammonium ion)
(a-11): polyoxyethylene alkenyl sulfate (in general formula (a1), $R^{1a}$: an alkenyl group having 18 carbon atoms (oleyl group), $R^{2a}$: an ethylene group, n: 2, $M^1$: an ammonium ion)
(a-12): polyoxyethylene alkenyl sulfate (in general formula (a1), $R^{1a}$: an alkenyl group having 18 carbon atoms (oleyl group), $R^{2a}$: an ethylene group, n: 5, $M^1$: an ammonium ion)
(a-13): polyoxyethylene alkenyl sulfate (in general formula (a1), $R^{1a}$: an alkenyl group having 18 carbon atoms (oleyl group), $R^{2a}$: an ethylene group, n: 9, $M^1$: an ammonium ion)
(a-14): polyoxyethylene alkyl sulfate (in general formula (a1), $R^{1a}$: an alkyl group having 18 carbon atoms, $R^{2a}$: an ethylene group, n: 12, $M^1$: an ammonium ion)
(a-15): polyoxyethylene alkenyl sulfate (in general formula (a1), $R^{1a}$: an alkenyl group having 18 carbon atoms (oleyl group), $R^{2a}$: an ethylene group, n: 14, $M^1$: an ammonium ion)
(a-16): polyoxyethylene alkyl sulfate (in general formula (a1), $R^{1a}$: an alkyl group having 22 carbon atoms, $R^{2a}$: an ethylene group, n: 9, $M^1$: an ammonium ion)
(a-17): polyoxyethylene alkyl sulfate (in general formula (a1), $R^{1a}$: an alkyl group having 18 carbon atoms, $R^{2a}$: an ethylene group, n: 11, $M^1$: an ammonium ion)
(a-18): polyoxyethylene alkyl sulfate (in general formula (a1), $R^{1a}$: an alkyl group having 12 to 18 carbon atoms, $R^{2a}$: an ethylene group, n: 7, $M^1$: an ammonium ion)
(a-19): polyoxyethylene alkyl sulfate (in general formula (a1), $R^{1a}$: an alkyl group having 16 carbon atoms, $R^{2a}$: an ethylene group, n: 9, $M^1$: an ammonium ion)
(a-20): polyoxyethylene alkenyl sulfate (in general formula (a1), $R^{1a}$: an alkenyl group having 18 carbon atoms (oleyl group), $R^{2a}$: an ethylene group, n: 23, $M^1$: a sodium ion)

Component (A) was produced through sulfation of polyoxyethylene alkyl or alkenyl ether. Component (A) can be produced by using a method described in "Sulfation of Higher Alcohol with Sulfamic Acid" (Journal of Japan Oil Chemists' Society, Vol. 1, No. 2 (1952) p73-76).
To measure the number of carbon atoms of the hydrocarbon group of component (A), polyoxyethylene alkyl or alkenyl ether as a raw material of component (A) was cleaved with hydrogen iodide and subjected to gas chromatography (GC).

(Conditions for sample preparation for GC)

Mixed together were 50 mg of polyoxyethylene alkyl or alkenyl ether and 10 mL of hydrogen iodide, and the mixture was reacted at 150°C under reflux for 90 minutes. Thereafter, the whole of the reaction product, 70 mL of ion-exchange water, and 70 mL of petroleum ether were mixed together in a separatory funnel, and subjected to separation operation. The carbon chain component extracted in the petroleum ether layer was subjected to GC measurement with

a nonpolar column, and the carbon number distribution was calculated.

(Conditions for GC measurement)

- Name of apparatus: Agilent 6850 series II (Agilent Technologies, Inc.)
- Name of column: HP-1 (Agilent Technologies, Inc.)
- Dimensions of column: 30 m in length, 320 mm in inner diameter, 0.25 μm in membrane thickness
- Temperature elevation program: 80°C → 300°C (8°C/min)

In addition, polyoxyethylene alkyl or alkenyl ether as a raw material of component (A) was subjected to measurement with a high-performance liquid chromatograph/mass spectrometer (LC/MS) to calculate the average number of moles of added ethylene oxide in component (A).

(Conditions for LC/MS measurement)

- Apparatus: Agilent 1260 series (Agilent Technologies, Inc.)

- Conditions for HPLC

    Column: L-column ODS 2.1ϕ × 150 mm (Chemicals Evaluation and Research Institute, Japan)

    Column temperature: 40°C

    Flow rate: 0.25 mL/min

    Amount of injection: 5 myu-L

    Mobile phase (gradient)

        Solution A: 10 mmol/L aqueous solution of ammonium acetate

        Solution B: 10 mmol/L ammonium acetate-methanol

        Gradient: as shown in Table 1

[Table 1]

| Time (min) | Solution A (%) | Solution B (%) | Flow rate (ml/min) |
|---|---|---|---|
| 0 | 60 | 40 | 0.25 |
| 10 | 20 | 80 | 0.25 |
| 20 | 20 | 80 | 0.25 |
| 30 | 0 | 100 | 0.25 |
| 39 | 0 | 100 | 0.25 |
| 40 | 0 | 100 | 0.6 |
| 55 | 0 | 100 | 0.6 |
| 55.1 | 60 | 40 | 0.25 |

(Conditions for MS)

Temperature of drying gas: 350°C
Flow rate of drying gas: 7.0 mL/min
Scanning range: 60-1500
Step size: 0.10 amu
Cycle time: 1.06 sec
Fragmentor voltage: 130 V (POSI: 4000 V, NEG: 3500 V)
Threshold: 150

Component (B)

(b-1): fatty acid diethanolamide: a compound in which the fatty acid moiety is an alkenyl group (oleyl group) having 18 carbon atoms
(b-2): fatty acid diethanolamide: a compound in which the fatty acid moiety is an alkyl group having 12 carbon atoms
(b-3): fatty acid diethanolamide: a compound in which the fatty acid moiety is an alkyl group having 10 to 16 carbon atoms
(b-4): fatty acid diethanolamide: a compound in which the fatty acid moiety is an alkyl group having 14 to 16 carbon atoms
(b-5): fatty acid diethanolamide: a mixture of a compound in which the fatty acid moiety is an alkenyl group (oleyl group) having 18 carbon atoms (b-5-1), and a compound in which the fatty acid moiety is an alkyl group having 10 to 18 carbon atoms (b-5-2) (mass ratio (b-5-1): (b-5-2) = 90:10)
(b-6): fatty acid diethanolamide: palm kernel oil fatty acid diethanolamide

The palm kernel oil fatty acid diethanolamide consists of 97% by mass of a compound in which the fatty acid moiety is an alkyl group having 10 to 18 carbon atoms, which corresponds to component (B), and 3% by mass of fatty acid diethanolamide having eight carbon atoms.
In determining the total of the content of component (A) and the content of component (B) relative to 100 parts by mass of water, mass ratio (A)/(B), and mass ratio [(A)+(B)]/(D) for mortar and concrete containing (b-6) in Tables 11 and 13, the content of component (B) was calculated on the basis only of component (B) contained in (b-6).
Component (B) was produced through reaction of a higher fatty acid and diethanolamine. Component (B) can be produced, for example, by using a method described in JP-A 2003-183232.
To determine the number of carbon atoms of the fatty acid moiety of component (B), the OH group at the end of each ethanol group of component (B) was derivatized with a trimethylsilylation reagent (TMSI-H) (manufactured by GL Sciences Inc.) and GC measurement was performed with a nonpolar column to calculate the carbon number distribution.

(Sample preparation for GC measurement)

Reacted together were 2 mg of a sample and 1 mL of a trimethylsilylation reagent (TMSI-H) (manufactured by GL Sciences Inc.), and the mixture was left to stand for 1 minute. Thereafter, the supernatant was collected and subjected to GC measurement.

(Conditions for GC measurement)

- Name of apparatus: Agilent 6850 series II (Agilent Technologies, Inc.)
- Name of column: HP-1 (Agilent Technologies, Inc.)
- Dimensions of column: 30 m in length, 320 mm in inner diameter, 0.25 $\mu$m in membrane thickness
- Temperature elevation program: 60°C $\rightarrow$ 300°C (8°C/min)

Qualitative analysis for by-products or the like was performed by using LC/MS. Conditions for the LC/MS measurement were the same as the conditions described for component (A).

Component (D)

(d-1): polyethylene glycol, with weight-average molecular weight of 2,000, manufactured by Wako Pure Chemical Industries, Ltd.
(d-2): polyethylene glycol, with weight-average molecular weight of 4,000, manufactured by Wako Pure Chemical Industries, Ltd.
(d-3): polyethylene glycol, with weight-average molecular weight of 13,000, manufactured by Mitsui Chemicals, Inc.
(d-4): polyethylene glycol, with weight-average molecular weight of 20,000, manufactured by Wako Pure Chemical Industries, Ltd.
(d-5): polyethylene glycol, with weight-average molecular weight of 80,000, manufactured by Meisei Chemical Works, Ltd.
(d-6): polyethylene glycol, with weight-average molecular weight of 110,000, manufactured by Meisei Chemical Works, Ltd.
(d-7): polypropylene glycol, with weight-average molecular weight of 700, manufactured by Wako Pure Chemical Industries, Ltd.
(d-8): polypropylene glycol, with weight-average molecular weight of 3,000, manufactured by Wako Pure Chemical Industries, Ltd.
(d-9): a copolymer of ethylene oxide and propylene oxide, with weight-average molecular weight of 2,270, Pluronic PE-71, manufactured by Sanyo Chemical Industries, Ltd.
(d-10): a copolymer of ethylene oxide and propylene oxide, with weight-average molecular weight of 3,370, Pluronic PE-74, manufactured by Sanyo Chemical Industries, Ltd.
(d-11): a copolymer of ethylene oxide and propylene oxide, with weight-average molecular weight of 4,290, Pluronic L-121, manufactured by ADEKA Corporation
(d-12): a copolymer of ethylene oxide and propylene oxide, with weight-average molecular weight of 10,200, Pluronic PE-78, manufactured by Sanyo Chemical Industries, Ltd.
(d-13): a copolymer of ethylene oxide and propylene oxide, with weight-average molecular weight of 19,500, Pluronic PE-128, manufactured by Sanyo Chemical Industries, Ltd.

The weight-average molecular weight of component (D) is a value measured in gel permeation chromatography (GPC) using polystyrene as a standard.

Component (E)

(e-1): monomer (e22)/monomer (e21) = methacrylic acid/methoxypolyethylene glycol (120) monomethacrylate = 80 mol/20 mol, weight-average molecular weight = 56,000 (the number in the parenthesis is the average number of added moles)
(e-2): a naphthalenesulfonic acid-formalin condensate (MIGHTY 150: manufactured by Kao Corporation)
(e-3): a ligninsulfonic acid-based dispersant (MasterPozzolith No. 70, manufactured by BASF Japan Ltd.)
(e-4): monomer (e22)/monomer (e21) = methacrylic acid/methoxypolyethylene glycol (23) monomethacrylate = 73 mol/27 mol, weight-average molecular weight = 52,000 (the number in the parenthesis is the average number of added moles)

The weight-average molecular weights of (e-1) and (e-4) are each a value measured in gel permeation chromatography (GPC) using polystyrene as a standard.

Comparative additives

- Methylcellulose: manufactured by Shin-Etsu Chemical Co., Ltd., Hi-Metolose 90SH-30000
- Acrylamide: polyacrylamide, manufactured by Sumitomo Chemical Co., Ltd., Sumifloc FA-50, with weight-average molecular weight of 17000000

[Example 1]

<Method for preparing rheology modifier>

A rheology modifier was prepared with component (A) and component (B) at a mass ratio listed in Table 1 such that the total solid content was 3 parts by mass relative to 100 parts by mass of water. Specifically, component (B) was added to water at 20°C, and the resultant was stirred with a glass rod for approximately 5 minutes until homogeneous dispersion was achieved. Subsequently, component (A) was added thereto, and the resultant was stirred with a glass rod for approximately 5 minutes to afford a rheology modifier listed in Table 2. Although any stirring method which allows sufficient mixing of a composition can be used, care is needed for measurement of dynamic viscoelasticity not to allow bubbles to be included in the composition. The method for preparing the rheology modifier according to the present invention is not limited to the described preparation method.

<Evaluation of viscoelasticity of rheology modifier>

In a 300 ml beaker, 200 ml of the composition obtained was placed, and checked for stringiness and the phenomenon of backward motion using a method described below. A composition for which only stringiness was found was rated as "with viscosity", and a composition for which both stringiness and the phenomenon of backward motion were found was rated as "with viscoelasticity". Table 2 shows the results.

(Stringiness)

A smooth-surfaced glass rod with a diameter of 6 mm was set up at the center of the bottom of the beaker containing a sample, and the glass rod was withdrawn therefrom over approximately 1 second, and the state of stringiness at the tip of the glass rod was then visually observed.

(Phenomenon of backward motion)

The phenomenon of backward motion indicates that the composition has an elastic character caused by tangling of associates in the composition, and refers to a state in which bubbles incorporated in a composition move in the reverse direction to the direction of rotation when stirring is ceased.

A sample was stirred with a smooth-surfaced glass rod with a diameter of 6 mm at 1 rotation/sec for 10 seconds, and visually observed for the presence or absence of the phenomenon of backward motion.

[Table 2]

| | | Component (A) | | | Component (B) | | Sum of content of (A) and content of (B) per 100 parts by mass of water | (A)/(B) (mass ratio) | Rating of viscoelasticity |
|---|---|---|---|---|---|---|---|---|---|
| | | Type | Number of carbon atoms of hydrocarbon group | Average number of moles of added EO | Type | Number of carbon atoms of hydrocarbon group | | | |
| | 1-1 | (a-1) | 12 | 0 | (b-1) | 18 (alkenylgroup) | | 20/80 | with viscoelasticity |
| | 1-2 | | | | | | | 30/70 | with viscoelasticity |
| | 1-3 | | | | | | | 40/60 | with viscosity |
| | 1-4 | | | | (b-2) | 12 | | 5/95 | with viscosity |
| | 1-5 | | | | | | | 10/90 | with viscoelasticity |
| | 1-6 | | | | | | | 20/80 | with viscosity |
| | 1-7 | (a-2) | 16 | 0 | (b-1) | 18 (alkenyl group) | | 20/80 | with viscosity |
| | 1-8 | | | | | | | 30/70 | with viscosity |
| | 1-9 | | | | | | | 40/60 | with viscosity |
| | 1-10 | | | | | | | 50/50 | with viscosity |

(continued)

| | | Component (A) | | | Component (B) | | Sum of content of (A) and content of (B) per 100 parts by mass of water | (A)/(B) (mass ratio) | Rating of viscoelasticity |
|---|---|---|---|---|---|---|---|---|---|
| | | Type | Number of carbon atoms of hydrocarbon group | Average number of moles of added EO | Type | Number of carbon atoms of hydrocarbon group | | | |
| Example | 1-11 | (a-3) | 12-16 | 1 | (b-1) | 18 (alkenylgroup) | 3 | 30/70 | with viscosity |
| | 1-12 | | | | | | | 40/60 | with viscosity |
| | 1-13 | | | | | | | 50/50 | with viscosity |
| | 1-14 | | | | (b-2) | 12 | | 5/95 | with viscoelasticity |
| | 1-15 | | | | | | | 10/90 | with viscoelasticity |
| | 1-16 | | | | | | | 20/80 | with viscosity |
| | 1-17 | | | | (b-3) | 10-16 | | 5/95 | with viscoelasticity |
| | 1-18 | | | | | | | 10/90 | with viscoelasticity |
| | 1-19 | | | | | | | 20/80 | with viscosity |
| | 1-20 | (a-4) | 12-16 | 2 | (b-3) | 10-16 | | 5/95 | with viscoelasticity |
| | 1-21 | | | | | | | 10/90 | with viscoelasticity |
| | 1-22 | (a-5) | 12-16 | 1.5 | (b-2) | 12 | | 5/95 | with viscoelasticity |
| | 1-23 | | | | | | | 10/90 | with viscoelasticity |
| | 1-24 | | | | (b-3) | 10-16 | | 5/95 | with viscoelasticity |
| | 1-25 | | | | | | | 10/90 | with viscoelasticity |

(continued)

| | | Component (A) | | | Component (B) | | Sum of content of (A) and content of (B) per 100 parts by mass of water | (A)/(B) (mass ratio) | Rating of viscoelasticity |
|---|---|---|---|---|---|---|---|---|---|
| | | Type | Number of carbon atoms of hydrocarbon group | Average number of moles of added EO | Type | Number of carbon atoms of hydrocarbon group | | | |
| | 1-26 | (a-6) | 18 (alkenyl group) | 20 | (b-3) | 10-16 | | 20/80 | with viscosity |
| | 1-27 | | | | | | | 30/70 | with viscosity |
| | 1-28 | (a-6) | 18 (alkenyl group) | 9 | (b-1) | 18 (alkenyl group) | | 50/50 | with viscoelasticity |
| | 1-29 | (a-17) | 18 (alkyl group) | 11 | | | | 50/50 | with viscoelasticity |

"Total content of (A) and (B) relative to 100 parts by mass of water" in Table 2 refers to the total of the effective quantities of component (A) and component (B).

<Confirmation of wormlike micelle (behavior similar to that of Maxwell model)>

Dynamic viscoelasticity was measured for the composition of Example 1-28 under conditions set forth below. Figure 1 shows a graph as plots of storage modulus G' and loss modulus G" in a range of angular frequency set forth below.

- Name of measurement apparatus: MCR301 manufactured by Anton Paar Japan K.K.
- Application: RHEOPLUS
- Measurement jig: cone plate CP-50 (d = 0.097 mm)
- Strain: 10%
- Measurement range of angular frequency: 0.00624 to 62.4 (1/s)

The curves in Figure 1 exhibit a behavior similar to that of the Maxwell model. According to a description in "Viscoelasticity Characteristics of Surfactant Aqueous Solution" (Toshiyuki Shikata, Surface vol. 29, No. 5 (1991), p399-499), this behavior suggests the presence of a wormlike micelle formed with a finite molecular weight.

For the composition of Example 1-28, it was confirmed by using a method described below with a field emission scanning electron microscope (FE-SEM) that the structure derived from the wormlike micelle was formed. Figure 2 shows the photograph of the wormlike micelle. Measurement method: The composition of Example 1-28 was collected in a specimen carrier (grooved) for a cryomicrotome, and then the sample was quickly frozen by using a metal contact method. The sample was trimmed in the cryomicrotome, and then a cross-section in the vicinity of the surface layer (about several micrometers) was cut out with a diamond knife to prepare a sample for Cryo-SEM, which was observed under the field emission scanning electron microscope (FE-SEM) S-4000 (Hitachi, Ltd.).

[Examples 2, 3, 4, 5, and Comparative Example 4]

<Preparation of hydraulic slurry composition>

Mixed together were 400 g of water and 400 g of cement (a mixture of ordinary Portland cement manufactured by TAIHEIYO CEMENT CORPORATION and that manufactured by SUMITOMO OSAKA CEMENT Co., Ltd. with a mass ratio of 50/50), and stirred with a commercially available hand mixer at 20°C for 1 minute. Thereafter, component (B) and component (A) listed in Tables 3 to 6 were added thereto in the order presented, and stirring was continued for 2 minutes after each addition, and thus a hydraulic slurry composition was prepared.

In the preparation, the total of the amount of water initially added to the cement and the amount of water in the composition was controlled to 400 g.

In the preparation, the content of component (A) and the content of component (B) relative to 100 parts by mass of water and the mass ratio (A)/(B) were controlled to be similar to those for a composition listed in Tables 3 to 6. The water/hydraulic powder ratio (W/P) of each hydraulic slurry composition prepared was 100% by mass.

<Measurement of slurry viscosity>

The viscosity of each of the hydraulic slurry compositions obtained was measured by using a B-type viscometer (manufactured by RION Co., Ltd., VISCOTESTER VT-04E, Rotor No. 1, rotational frequency: 62.5 rpm). If this viscosity is 100 mPa·s or more, it is preferred because the slurry will be found to have viscoelasticity. Tables 3 to 6 show the results. The slurry temperature was 20°C.

For Examples 5-1 and 5-2 in Table 6, the slurry viscosity was measured at slurry temperatures of 20°C and 40°C.

[Table 3]

| | | Component (A) | | | Component (B) | | Sum of content of(A) and content of(B) per 100 parts by mass of water | (A)/(B) (mass rate) | Slurry viscosity (mPa • s) |
|---|---|---|---|---|---|---|---|---|---|
| | | Type | Number of carbon atoms of hydrocarbon group | Average number of moles of added EO | Type | Number of carbon atoms of hydrocarbon group | | | |
| Example | 2-1 | (a-13) | 18 (alkenyl group) | 9 | (b-1) | 18 (alkenyl group) | 3 | 80/20 | 300 |
| | 2-2 | (a-7) | 12 | 2 | | | | 70/30 | 1000 |
| | 2-3 | (a-8) | 12 | 8 | | | | 60/40 | 600 |
| | 2-4 | (a-9) | 12 | 13 | | | | 50/50 | 400 |
| | 2-5 | (a-10) | 14-16 | 3 | | | | 70/30 | 750 |
| | 2-6 | (a-11) | 18 (akenylgroup) | 2 | | | | 95-5 | 900 |
| | 2-7 | (a-12) | | 5 | | | | 60/40 | 6000 |
| | 2-8 | (a-13) | | 9 | | | | 50/50 | 5000 |
| | 2-9 | (a-14) | | 12 | | | | 50/50 | 4500 |
| | 2-10 | (a-15) | | 14 | | | | 50/50 | 2000 |
| | 2-11 | (a-16) | 22 | 7 | | | | 60/40 | 3500 |
| | 2-12 2-13 2-1 2-8 | (a-13) | 18 (alkenyl group)) | 9 | (b-2) | 12 | 3 | 40/60 | 650 |
| | | | | | (b-4) | 14-16 | | 40/60 | 950 |
| | | | | | (b-1) | 18 (alkenyl group) | | 80/20 | 300 |
| | | | | | | | | 50/50 | 5000 |
| | 2-14 | (a-17) | 18 (alkyl group) | 11 | | | | 50/50 | 4800 |

[Table 4]

| | | Component (A) | | | Component (B) | | Sum of content of (A) and content of (B) per 100 parts by mass of water | (A)/(B) (mass ratio) | Slurry viscosity (mPa • s) |
|---|---|---|---|---|---|---|---|---|---|
| | | Type | Number of carbon atoms of hydrocarbon group | Average number of moles of added EO | Type | Number of carbon atoms of hydrocarbon group | | | |
| Example | 3-1 | (a-13) | 18 (alkenyl group) | 9 | (b-1) | 18 (alkenyl group) | 0.5 | 50/50 | 1250 |
| | 3-2 | | | | | | 1 | | 3300 |
| | 3-3 | | | | | | 2 | | 3750 |
| | 3-4 | | | | | | 3 | | 5000 |
| | 3-5 | | | | | | 4 | | 7000 |
| | 3-6 | | | | | | 5 | | 9000 |
| | 3-7 | | | | | | 10 | | 12000 |

[Table 5]

| | | Component (A) | | | Component (B) | | Sum of content of (A) and content of (B) per 100 parts by mass of water | (A)/(B) (mass ratio) | Slurry viscosity (mPa • s) |
|---|---|---|---|---|---|---|---|---|---|
| | | Type | Number of carbon atoms of hydrocarbon group | Average number of moles of added EO | Type | Number of carbon atoms of hydrocarbon group | | | |
| Comparative Example | 4-1 | (a-13) | 18 (alkenyl group) | 9 | (b-1) | 18 (akenyl group) | 1 | 0/100 | 0 |
| Example | 4-1 | | | | | | | 10/90 | 100 |
| | 4-2 | | | | | | | 20/80 | 300 |
| | 4-3 | | | | | | | 30/70 | 800 |
| | 4-4 | | | | | | | 40/60 | 2500 |
| | 4-5 | | | | | | | 50/50 | 3300 |
| | 4-6 | | | | | | | 60/40 | 1900 |
| | 4-7 | | | | | | | 70/30 | 900 |
| | 4-8 | | | | | | | 80/20 | 300 |
| | 4-9 | | | | | | | 90/10 | 100 |
| Comparative Example | 4-2 | | | | | | | 100/0 | 0 |

[Table 6]

| | | Component (A) | | | Component (B) | | Sum of content of (A) and content of (B) per 100 parts by mass ofwater | (A)/(B) (mass ratio) | Slurry viscosity (mPa • s) | |
|---|---|---|---|---|---|---|---|---|---|---|
| | | Type | Number of carbon atoms of hydrocarbon group | Average number of moles of added EO | Type | Number of carbon atoms of hydrocarbon group | | | Slurry temperature 20°C | Slurry temperature 40°C |
| Example | 5-1 | (a-13) | 18 (alkenyl group) | 9 | (b-1) | 18 (alkenyl group) | 1 | 50/50 | 3300 | 1000 |
| Example | 5-2 | (a-17) | 18 (alkyl group) | 11 | (b-1) | 18 (alkenyl group) | 1 | 50/50 | 3100 | 4500 |

(Discussion)

A large number of calcium ions are present in each hydraulic slurry composition and each calcium ion is forming a salt with component (A), which screens the negative charge at the hydrophilic part of component (A) to weaken the intermolecular electrostatic repulsion of component (A), and formation of a closer array is achieved. This probably generates more intense interaction between component (A) and component (B) to lead to formation of a more robust wormlike micelle. For this reason, if the viscosity is 100 mPa·s or more, the presence of viscoelasticity is expected.

[Example 6 and Comparative Example 6]

<Evaluation of resistance to separation in water>

Mixed together were 1200 g of water, 320 g of cement (a mixture of ordinary Portland cement manufactured by TAIHEIYO CEMENT CORPORATION and that manufactured by SUMITOMO OSAKA CEMENT Co., Ltd. with a mass ratio of 50/50), and 80 g of bentonite (TB-250, manufactured by TACHIBANA MATERIAL Co., Ltd.), and stirred with a commercially available hand mixer at 20°C for 3 minutes. Thereafter, the composition of Comparative Example 6-1 or Example 6-1 was added thereto and the resultant was further stirred for 3 minutes, and thus a hydraulic slurry composition was prepared.

In the preparation, the total of the amount of water initially added to the cement and the amount of water in the composition was controlled to 1200 g. In the preparation, the content of component (A) and the content of component (B) relative to 100 parts by mass of water and the mass ratio (A)/(B) were controlled to be similar to those for a composition listed in Table 7. The water/hydraulic powder ratio (W/P) of each hydraulic slurry composition prepared was 300% by mass. In Comparative Example 6-1, neither component (A) nor component (B) was added, and instead 1 part by mass of a thickener (VISCOTOP 200LS-2, based on anionic/cationic surfactant, manufactured by Kao Corporation) per 100 parts by mass of water was added.

Subsequently, 2000 mL of water was placed in a transparent acrylic container with a capacity of 2500 ml, and a funnel with a smaller diameter of 180 mm was set such that the lower end of the funnel was positioned at 500 mm above the water surface. Through the funnel, 500 g of the hydraulic slurry composition as a paste prepared in the above-described manner was added into the water over 15 seconds. After the addition of the paste, the resultant was left to stand for 3 minutes, and the supernatant was collected, as a sample, from the intermediate point between the water surface and the paste surface, and the turbidity of the sample was measured. In addition, the slurry viscosity was measured as described above. Table 7 shows the results. In the measurement of turbidity, a Turbidimeter TN-100 (manufactured by EUTECH INSTRUMENTS) was used. Further, Figures 3 and 4 show photographs during addition of a paste for the composition of Example 6-1 and the composition of Comparative Example 6-1, respectively.

[Table 7]

| | | Component (A) | | | Component (B) | | Sum of content of (A) and content of (B) per 100 parts by mass of water | (A)/(B) mass ratio) | Slurry viscosity (mPa • s) | Turbidity of supernatant (NTU) |
|---|---|---|---|---|---|---|---|---|---|---|
| | | Type | Number of carbon atoms of hydrocarbon group | Average number of moles of added EO | Type | Number of carbon atoms of hydrocarbon group | | | | |
| Comparative Example | 6-1 | - | - | - | - | - | - | - | 0 | 709 |
| Example | 6-2 | (a-13) | 18 (alkenyl group) | 9 | (b-1) | 18 (alkenyl group) | 1 | 50/50 | 3300 | 4 |

(Discussion)

As compared with Comparative Example 6-1, the diffusion of the paste in water was less significant and as a result the supernatant was less turbid in Example 6-1, which indicates excellent resistance to separation in water. Comparison was made between the photographs during addition of a paste. In Comparative Example 6-1, as shown in Figure 4, the aqueous phase was turbid and the hydraulic slurry composition was scattering in water. In Example 6-1, as shown in Figure 3, on the other hand, the aqueous phase was not turbid, which indicates excellent resistance to separation in water.

[Examples 7, 8, and Comparative Example 7]

<Preparation of cement/bentonite slurry composition>

Mixed together were 300 g of water and 30 g of bentonite (TB-250, manufactured by TACHIBANA MATERIAL Co., Ltd.), and stirred with a commercially available hand mixer at 20°C for 60 seconds. The resultant was then mixed with 120 g of cement (a mixture of ordinary Portland cement manufactured by TAIHEIYO CEMENT CORPORATION and that manufactured by SUMITOMO OSAKA CEMENT Co., Ltd. with a mass ratio of 50/50), and stirred with a commercially available hand mixer at 20°C for 30 seconds. Thereafter, component (B), component (A), and component (D) listed in Tables 8 and 9 were added thereto in the order presented, and stirring was continued for 2 minutes after each addition, and thus a cement/bentonite slurry composition was prepared.
In the preparation, the total of the amount of water initially added to the cement and the amount of water in the composition was controlled to 300 g.
In the preparation, the content of component (A) and the content of component (B) relative to 100 parts by mass of water, the mass ratio (A)/(B), and the content of component (D) relative to 100 parts by mass of water were controlled to be similar to those for a composition listed in Tables 8 and 9. The water/hydraulic powder ratio (W/P) of each cement/bentonite slurry composition prepared was 200% by mass.

<Measurement of cement/bentonite slurry viscosity>

The viscosity of the cement/bentonite slurry composition obtained was measured by using a B-type viscometer (manufactured by RION Co., Ltd., VISCOTESTER VT-04E, Rotor No. 2 for measurements of viscosity of more than 300 mPa·s and Rotor No. 3 for measurements of viscosity of 300 mPa·s or less, rotational frequency: 62.5 rpm). Tables 8 and 9 show the results. The slurry temperature was 20°C.

<Evaluation of resistance to separation in water>

In a glass beaker, 200 ml of ion-exchange water was placed, and 125 g of the cement/bentonite slurry composition prepared was weighed and divided into 10 portions, and the portions were gently allowed to free-fall from the water surface portion by portion with a spatula. The falling of the sample was completed within 30 seconds, and the resultant was left to stand for 3 minutes, and then the degree of turbidity in water was evaluated based on evaluation criteria below. If being rated as "A" or "B" for resistance to separation in water, the cement/bentonite slurry composition is available for practical use. However, "A" is more preferred.

A: not turbid
B: slightly turbid
C: turbid

If a cement/bentonite slurry composition has a viscosity of 400 mPa·s or more and is rated as "A" or "B" for inseparability in water, the cement/bentonite slurry composition is available for practical use and thus preferred.

[Table 8]

| | | Component (A) | | | Component (B) | Sum of content of (A) and content of (B) per 100 parts by mass of water | (A)/(B) (mass ratio) | Component (D) | | Content of (D) per 100 parts by mass of water | Cement/bentonite slurry viscosity (20°C) (mPa・s) | Resistance to separation in water |
|---|---|---|---|---|---|---|---|---|---|---|---|---|
| | | Type | Number of carbon atoms of hydrocarbon group | Average number of moles of added EO | Type | | | Type | Weight-average molecular weight | | | |
| Comparative Example | 7-1 | - | - | - | - | - | - | - | - | - | 450 | C |
| Comparative Example | 7-2 | (a-17) | 18 | 11 | - | 0.75 | - | - | - | - | 100 | C |
| Comparative Example | 7-3 | - | - | - | (b-5) | 0.75 | - | - | - | - | 1300 | C |
| Comparative Example | 7-4 | - | - | - | - | - | - | (d-6) | 110,000 | 1.00 | 500 | C |
| Comparative Example | 7-5 | - | - | - | - | - | - | (d-3) | 13,000 | 1.00 | 200 | C |
| Example | 7-1 | (a-17) | 18 | 11 | (b-5) | 1.5 | 50/50 | - | - | - | 450 | B |
| Example | 7-2 | (a-17) | 18 | 11 | (b-5) | 1.5 | 50/50 | (d-1) | 2,000 | 0.25 | 1500 | A |
| Example | 7-3 | (a-17) | 18 | 11 | (b-5) | 1.5 | 50/50 | (d-1) | 2,000 | 1.50 | 2300 | A |
| Example | 7-4 | (a-17) | 18 | 11 | (b-5) | 1.5 | 50/50 | (d-1) | 2,000 | 3.00 | 4800 | A |
| Example | 7-5 | (a-17) | 18 | 11 | (b-5) | 1.5 | 50/50 | (d-2) | 4,000 | 0.25 | 1500 | A |
| Example | 7-6 | (a-17) | 18 | 11 | (b-5) | 1.5 | 50/50 | (d-2) | 4,000 | 0.50 | 3700 | A |
| Example | 7-7 | (a-17) | 18 | 11 | (b-5) | 1.5 | 50/50 | (d-2) | 4,000 | 1.00 | 6000 | A |
| Example | 7-8 | (a-17) | 18 | 11 | (b-5) | 1.5 | 50/50 | (d-3) | 13,000 | 0.25 | 3400 | A |
| Example | 7-9 | (a-17) | 18 | 11 | (b-5) | 1.5 | 50/50 | (d-3) | 13,000 | 0.50 | 6500 | A |
| Example | 7-10 | (a-17) | 18 | 11 | (b-5) | 1.5 | 50/50 | (d-3) | 13,000 | 1.00 | 9000 | A |
| Example | 7-11 | (a-17) | 18 | 11 | (b-5) | 1.5 | 50/50 | (d-4) | 20,000 | 0.25 | 3000 | A |
| Example | 7-12 | (a-17) | 18 | 11 | (b-5) | 1.5 | 50/50 | (d-4) | 20,000 | 0.50 | 5000 | A |
| Example | 7-13 | (a-17) | 18 | 11 | (b-5) | 1.5 | 50/50 | (d-4) | 20,000 | 1.00 | 7500 | A |
| Example | 7-14 | (a-17) | 18 | 11 | (b-5) | 1.5 | 50/50 | (d-5) | 80,000 | 0.25 | 3400 | A |
| Example | 7-15 | (a-17) | 18 | 11 | (b-5) | 1.5 | 50/50 | (d-5) | 80,000 | 0.50 | 6500 | A |
| Example | 7-16 | (a-17) | 18 | 11 | (b-5) | 1.5 | 50/50 | (d-5) | 80,000 | 1.00 | 8000 | A |
| Example | 7-17 | (a-17) | 18 | 11 | (b-5) | 1.5 | 50/50 | (d-6) | 110,000 | 0.25 | 3000 | A |
| Example | 7-18 | (a-17) | 18 | 11 | (b-5) | 1.5 | 50/50 | (d-6) | 110,000 | 0.50 | 6500 | A |
| Example | 7-19 | (a-17) | 18 | 11 | (b-5) | 1.5 | 50/50 | (d-6) | 110,000 | 1.00 | 7500 | A |
| Example | 7-20 | (a-17) | 18 | 11 | (b-5) | 1.5 | 50/50 | (d-7) | 700 | 0.50 | 1600 | A |
| Example | 7-21 | (a-17) | 18 | 11 | (b-5) | 1.5 | 50/50 | (d-8) | 3,000 | 0.50 | 2600 | A |
| Example | 7-22 | (a-17) | 18 | 11 | (b-5) | 1.5 | 50/50 | (d-9) | 2,270 | 0.50 | 3900 | A |
| Example | 7-23 | (a-17) | 18 | 11 | (b-5) | 1.5 | 50/50 | (d-10) | 3,370 | 0.50 | 4100 | A |
| Example | 7-24 | (a-17) | 18 | 11 | (b-5) | 1.5 | 50/50 | (d-11) | 4,290 | 0.50 | 2500 | A |
| Example | 7-25 | (a-17) | 18 | 11 | (b-5) | 1.5 | 50/50 | (d-12) | 10,200 | 0.50 | 4600 | A |
| Example | 7-26 | (a-17) | 18 | 11 | (b-5) | 1.5 | 50/50 | (d-13) | 19,500 | 0.50 | 6500 | A |

[Table 9]

| | Component (A) | | | Component (B) | Sum of content of (A) and content of (B) per 100 parts by mass of water | (A)/(B) (mass ratio) | Component (D) | | Content of (D) per 100 parts by mass of water | Cement/bentonite slurry viscosity (20°C) (mPa • s) | Resistance to separation in water |
|---|---|---|---|---|---|---|---|---|---|---|---|
| | Type | Number of carbon atoms of hydrocarbon group | Average number of moles of added EO | Type | | | Type | Weight-average molecular weight | | | |
| Example 8-1 | (a-18) | 12-18 | 7 | (b-5) | 1.5 | 50/50 | - | - | - | 400 | B |
| Example 8-2 | | | | | | | (d-3) | 13,000 | 0.5 | 7000 | A |
| Example 8-3 | | | | (b-1) | 1.5 | 50/50 | - | - | - | 500 | B |
| Example 8-4 | | | | | | | (d-3) | 13,000 | 0.5 | 6500 | A |
| Example 8-5 | (a-13) | 18 (alkenyl group) | 9 | (b-5) | 1.5 | 50/50 | - | - | - | 500 | B |
| Example 8-6 | | | | | | | (d-3) | 13,000 | 0.5 | 6500 | A |
| Example 8-7 | | | | (b-1) | 1.5 | 50/50 | - | - | - | 500 | B |
| Example 8-8 | | | | | | | (d-3) | 13,000 | 0.5 | 6000 | A |
| Example 8-9 | (a-17) | 18 (alkyl group) | 11 | (b-1) | 1.5 | 50/50 | - | - | - | 500 | B |
| Example 8-10 | | | | | | | (d-3) | 13,000 | 0.5 | 7000 | A |

(Discussion)

It can be seen that the viscosity of the cement/bentonite slurry was relatively low, and the result for resistance to separation in water was poor in each of Comparative Examples 7-1 to 7-5, in which component (A), component (B), or component (D) was used singly, and that in each of Examples 7 and 8, in contrast, the viscosity of the cement/bentonite slurry was relatively high and the result for resistance to separation in water was good. Further, it can be seen that additional use of component (D) in combination with component (A) and component (B) as in Examples 7 and 8 imparted higher viscosity to a cement/bentonite slurry and provided a better result for resistance to separation in water.

[Example 9 and Comparative Example 9]

<Preparation of mortar>

Cement and sand with a formulation listed in Table 10 were added into a Hobart mixer (manufactured by Kansai Kiki Seisakusho K.K., KC-8) and dry-mixed for 10 seconds. Subsequently, water containing components listed in Table 11 was added thereto, and the resultant was stirred (stirring speed: 62 rpm for revolution, 141 rpm for rotation) for 2 minutes to prepare a mortar.

In the preparation, the loading of water was controlled to reach the amount of water in a motor formulation listed in Table 10. The amount of water blended includes the loadings of component (A), component (B), and component (E).

[Table 10]

| | | W/C (%) | Mortar formulation ($kg/m^3$) | | |
|---|---|---|---|---|---|
| | | | Water (W) | Cement (C) | Sand (S) |
| Mortar formulation | 1 | 35 | 140 | 400 | 700 |
| | 2 | 50 | 200 | 400 | 700 |
| | 3 | 65 | 260 | 400 | 700 |

Materials used for the mortar formulations in Table 10 were as follows.

Water: tap water (the amount of water blended included the loadings of component (A), component (B), and component (E))

Cement: a mixture of ordinary Portland cement manufactured by TAIHEIYO CEMENT CORPORATION and that manufactured by SUMITOMO OSAKA CEMENT Co., Ltd. with a mass ratio of 50/50, specific gravity: 3.16

Sand: from Joyo, Kyoto prefecture, Japan, specific gravity in saturated surface-dry condition: 2.54 $g/cm^3$

<Evaluation of fluidity of mortar>

A flow cone described in JIS R 5201 (70 mm in upper diameter × 100 mm in lower diameter × 60 mm in height) was filled with the mortar immediately after being kneaded, and the mortar flow was measured. Table 11 shows the results.

<Evaluation of resistance of mortar to material separation>

The state of each of the mortars (300 mm ± 10 mm) after being measured for the mortar flow for evaluation of the fluidity of the mortar was visually checked, and evaluated based on evaluation criteria below. Table 11 shows the results.

4: No separation of sand and cement was found even at the edge of a mortar, and no bleeding was found.
3: No separation of sand and cement was found even at the edge of a mortar, and little bleeding was found.
2: Separation of sand and cement was found at the edge of mortar, and the occurrence of slight bleeding was found.
1: Separation of sand and cement was found over the entire of a mortar, and the occurrence of much bleeding was found.

[Table 11]

| | | Mortar formulation | Component (A) | | | Component (B) | Sum of content of (A) and content of (B) per 100 parts by mass of water | (A)/(B) (mass ratio) | Component (E) | Content of (E) per 100 parts by mass of cement | [(A)+(B)]/(E) (mass ratio) | Mortar flow (mm) | Resistance to material separation |
|---|---|---|---|---|---|---|---|---|---|---|---|---|---|
| | | | Type | Number of carbon atoms of hydrocarbon group | Average number of moles of added EO | Type | | | Type | | | | |
| Comparative Example | 9-1 | 1 | - | - | - | (b-6) | 0.097 | - | (e-1) | 0.26 | 12/88 | 298 | 1 |
| | 9-2 | 1 | - | - | - | (b-1) | 0.1 | - | | 0.26 | 12/88 | 301 | 1 |
| | 9-3 | 1 | (a-19) | 16 | 9 | - | 0.1 | - | | 0.26 | 12/88 | 302 | 1 |
| | 9-4 | 1 | (a-20) | 18 | 23 | - | 0.1 | - | | 0.26 | 12/88 | 294 | 1 |
| | 9-5 | 2 | - | - | - | (b-6) | 0.97 | - | | 0.12 | 80.2/19.8 | 297 | 1 |
| | 9-6 | 2 | - | - | - | - | - | - | (e-2) | 0.4 | - | 255 | 4 |
| | 9-7 | 2 | - | - | - | - | - | - | | 0.6 | - | 307 | 1 |
| | 9-8 | 3 | - | - | - | - | - | - | (e-3) | 1.00 | - | 296 | 1 |
| Example | 9-1 | 1 | (a-19) | 16 | 9 | (b-6) | 0.197 | 51/49 | (e-1) | 0.26 | 21/79 | 296 | 3 |
| | 9-2 | 1 | | | | | 0.196 | 41/59 | | 0.26 | 21/79 | 298 | 4 |
| | 9-3 | 1 | | | | | 0.196 | 31/69 | | 0.26 | 21/79 | 300 | 4 |
| | 9-4 | 1 | (a-20) | 18 | 23 | | 0.196 | 41/59 | | 0.26 | 21/79 | 301 | 3 |
| | 9-5 | 1 | | | | | 0.393 | 41/59 | | 0.26 | 35/65 | 300 | 4 |
| | 9-6 | 1 | (a-19) | 16 | 9 | (b-1) | 0.2 | 50/50 | | 0.26 | 21/79 | 298 | 4 |
| | 9-7 | 1 | | | | | 0.2 | 40/60 | | 0.26 | 21/79 | 296 | 3 |
| | 9-8 | 1 | (a-20) | 18 | 23 | | 0.2 | 40/60 | | 0.26 | 21/79 | 297 | 3 |
| | 9-9 | 2 | (a-19) | 16 | 9 | | 1.6 | 50/50 | | 0.12 | 87/13 | 299 | 3 |
| | 9-10 | 2 | | | | | 2 | 50/50 | | 0.12 | 89/11 | 301 | 4 |
| | 9-11 | 2 | (a-20) | 18 | 23 | (b-6) | 0.985 | 51/49 | (e-2) | 0.40 | 55/45 | 306 | 3 |
| | 9-12 | 3 | (a-19) | 16 | 9 | (b-1) | 2 | 50/50 | (e-3) | 1.00 | 57/43 | 294 | 4 |

(Discussion)

It can be seen that, in comparison with Comparative Example 9, reduction of bleeding and improvement of resistance to material separation were observed in Example 9, because the rheology modifier according to the present invention in Example 9, which contained component (A) and component (B), imparted viscosity to the water. In addition, it can be seen that the fluidity-imparting effect due to addition of component (E) was not deteriorated in Example 9 in contrast to Comparative Example 9. This is probably because the rheology modifier according to the present invention does not act on cement, and as a result the dispersion behavior of cement particles caused by component (E) remains

unaffected.

[Example 10 and Comparative Example 10]

<Preparation of concrete>

Concrete was prepared with a formulation listed in Table 12. Gravel, an approximately half quantity of sand, cement, calcium carbonate, and the rest of the sand were loaded into a biaxial forced mixer (manufactured by IHI Corporation) in the order presented, and dry-mixed for 10 seconds. Subsequently, water described below was quickly added thereto, and the resultant was kneaded for 120 seconds to obtain concrete. In the preparation, component (A), component (B), component (E), and a comparative additive listed in Table 13 were added into water for concrete formulation, and the mixture was stirred to homogenize for use.

[Table 12]

| W/C (%) | W/P (%) | Fine aggregate ratio (%) | Concrete formulation (ks/$m^3$) | | | | |
|---|---|---|---|---|---|---|---|
| | | | Water (W) | Cement (C) | Calcium carbonate | Sand (S) | Gravel (G) |
| 43.8 | 33.7 | 46.3 | 175 | 400 | 120 | 745 | 896 |

In Table 12, P indicates the total amount of cement (C) and calcium carbonate. The fine aggregate ratio is calculated from the volume ratio, S/(S+G).

In Table 12, materials used for concrete formulation were as follows.

Water: tap water (the amount of water blended included the loadings of component (A), component (B), and component (E))

Cement: a mixture of ordinary Portland cement manufactured by TAIHEIYO CEMENT CORPORATION and that manufactured by SUMITOMO OSAKA CEMENT Co., Ltd. with a mass ratio of 50/50, specific gravity: 3.16

Calcium carbonate: manufactured by SHIMIZU INDUSTRIAL, CO., LTD., Neoflow 150, specific gravity: 2.71 g/$cm^3$

Sand: from Joyo, Kyoto prefecture, from Joyo, Kyoto prefecture, specific gravity in saturated surface-dry condition: 2.54 g/$cm^3$

Gravel: crashed stone from Ieshima, Hyogo prefecture, Japan, density: 2.63 g/$cm^3$

<Evaluation of fluidity of concrete>

The slump flow of the concrete immediately after being kneaded was measured in accordance with JIS A 1150. Table 13 shows the results.

<Evaluation of resistance of concrete to material separation>

The state of each of the concretes after being measured for the slump flow for evaluation of the fluidity of the concrete was visually checked, and evaluated based on evaluation criteria below. Table 13 shows the results.

4: No separation of aggregates was found, and no bleeding was found.
3: No separation of aggregates was found, and little bleeding was found.
2: Separation of coarse aggregates was found at the edge of concrete, and the occurrence of slight bleeding was found.
1: Separation of aggregates was found over the entire of concrete, and the occurrence of much bleeding was found.

[Table 13]

| | | Component (A) | Component (B) | Sum of content of (A) and content of (B) per 100 parts by mass of water | (A)/(B) (mass ratio) | Comparative additive | Content of comparative additive per 100 parts by mass of water | Component (E) | Content of (E) per 100 parts by mass of cement | [(A)+(B)]/(E) (mass ratio) | Slump flow (mm) | Resistance to material separation |
|---|---|---|---|---|---|---|---|---|---|---|---|---|
| | | Type | Type | | | Type | | Type | | | | |
| Comparative Example | 10-1 | — | — | — | — | methylcellulose | 0.06 | (e-1) | 0.16 | — | 450 | 4 |
| Comparative Example | 10-2 | — | — | — | — | methylcellulose | 0.02 | (e-1) | 0.16 | — | 610 | 3 |
| Comparative Example | 10-3 | — | — | — | — | methylcellulose | 0.005 | (e-1) | 0.16 | — | 710 | 1 |
| Comparative Example | 10-4 | — | — | — | — | acrylamide | 0.06 | (e-1) | 0.16 | — | 590 | 4 |
| Comparative Example | 10-5 | — | — | — | — | acrylamide | 0.02 | (e-1) | 0.16 | — | 710 | 1 |
| Example | 10-1 | (a-19) | (b-6) | 0.196 | 31/69 | — | — | (e-1) | 0.16 | 29/71 | 710 | 3 |
| Example | 10-2 | (a-19) | (b-6) | 0.450 | 31/69 | — | — | (e-1) | 0.16 | 49/51 | 690 | 4 |
| Example | 10-3 | (a-20) | (b-6) | 0.196 | 41/59 | — | — | (e-1) | 0.16 | 29/71 | 715 | 3 |
| Example | 10-5 | (a-20) | (b-6) | 0.442 | 41/59 | — | — | (e-1) | 0.16 | 48/52 | 695 | 4 |
| Example | 10-4 | (a-20) | (b-6) | 0.196 | 41/59 | — | — | (e-4) | 0.16 | 29/71 | 700 | 3 |

(Discussion)

The methylcellulose-based and polyacrylamide-based thickeners, which were used as comparative additives in Comparative Example 10, are capable of imparting viscosity through acting on cement particles. However, the results for Comparative Examples 10-1 to 10-5 show that when such a thickener was used in combination with a dispersant as component (E), increase of the loading of the comparative additive to ensure resistance to material separation resulted in lowered fluidity, and decrease of the loading of the comparative additive to ensure fluidity resulted in deteriorated resistance to material separation, which indicates that it is difficult to achieve fluidity and resistance to material separation in combination. In contrast, the results for Examples 10-1 to 10-5 demonstrate that the rheology modifier according to

the present invention can achieve high resistance to separation and high fluidity in combination. This is probably because the rheology modifier according to the present invention imparts viscosity to water, and as a result, when the rheology modifier according to the present invention is used in combination with component (E), the dispersion behavior of cement particles caused by component (E) remains unaffected.

<Tests No. 11 to 13>

The following materials were used for component (A), component (B), component (C), and component (D) listed in Tables 14 to 20.

Component (A)

(aa-1): polyoxyethylene alkyl sulfate (in general formula (al), $R^{1a}$: an alkyl group having 18 carbon atoms, $R^{2a}$: an ethylene group, n: 11, $M^1$: an ammonium ion)
(aa-2): polyoxyethylene alkyl sulfate (in general formula (al), $R^{1a}$: an alkyl group having 12 to 18 carbon atoms, $R^{2a}$: an ethylene group, n: 7, $M^1$: an ammonium ion)
(aa-3): polyoxyethylene alkenyl sulfate (in general formula (al), $R^{1a}$: an alkenyl group having 18 carbon atoms (oleyl group), $R^{2a}$: an ethylene group, n: 9, $M^1$: an ammonium ion)

Component (B)

(bb-1): fatty acid diethanolamide: a compound in which the fatty acid moiety is an alkenyl group (oleyl group) having 18 carbon atoms
(bb-2): fatty acid diethanolamide: a compound in which the fatty acid moiety is a mixture of an alkyl group and alkenyl group having 10 to 18 carbon atoms (bb-12): a mixture of (bb-1)/(bb-2) = 90/10 (mass ratio)

Component (C)

Compounds listed in the tables were used.

Component (D)

(dd-1): polyethylene glycol, with weight-average molecular weight of 2,000, Wako Pure Chemical Industries, Ltd.
(dd-2): polyethylene glycol, with weight-average molecular weight of 4,000, Wako Pure Chemical Industries, Ltd.
(dd-3): polyethylene glycol, with weight-average molecular weight of 13,000, Mitsui Chemicals, Inc.
(dd-4): polyethylene glycol, with weight-average molecular weight of 20,000, Wako Pure Chemical Industries, Ltd.
(dd-5): polyethylene glycol, with weight-average molecular weight of 80,000, Meisei Chemical Works, Ltd.
(dd-6): polyethylene glycol, with weight-average molecular weight of 110,000, Meisei Chemical Works, Ltd.
(dd-7): polypropylene glycol, with weight-average molecular weight of 700, Wako Pure Chemical Industries, Ltd.
(dd-8): polypropylene glycol, with weight-average molecular weight of 3,000, Wako Pure Chemical Industries, Ltd.
(dd-9): a copolymer of ethylene oxide and propylene oxide, with weight-average molecular weight of 2,270, Pluronic PE-71, ethylene oxide/propylene oxide mass ratio = 18/82, manufactured by Sanyo Chemical Industries, Ltd.
(dd-10): a copolymer of ethylene oxide and propylene oxide, with weight-average molecular weight of 3,370, Pluronic PE-74, ethylene oxide/propylene oxide mass ratio = 46/54, manufactured by Sanyo Chemical Industries, Ltd.
(dd-11): a copolymer of ethylene oxide and propylene oxide, with weight-average molecular weight of 4,290, Pluronic L-121, ethylene oxide/propylene oxide mass ratio = 10/90, manufactured by ADEKA Corporation (dd-12): a copolymer of ethylene oxide and propylene oxide, with weight-average molecular weight of 10,200, Pluronic PE-78, ethylene oxide/propylene oxide mass ratio = 63/37, manufactured by Sanyo Chemical Industries, Ltd.
(dd-13): a copolymer of ethylene oxide and propylene oxide, with weight-average molecular weight of 19,500, Pluronic PE-128, ethylene oxide/propylene oxide mass ratio = 48/52, manufactured by Sanyo Chemical Industries, Ltd.

<Method for preparing liquid rheology modifier>

Component (A), component (B), and component (C) with their respective content listed in Tables 14 to 20 and water were mixed together to prepare a liquid rheology modifier. In some examples, component (D) was additionally mixed. The content in the tables is that of effective components.

Specifically, water at 20°C, component (A), and component (C) were blended in a screw tube, and heated in a thermostatic bath (60°C) until component (A) was completely dissolved. After the complete dissolution of component (A) was confirmed, component (B) was blended therein, and the resultant in the screw tube was stirred until component (B) was homogeneously dispersed. In a case where component (D) was blended, component (D) was blended when water, component (A), and component (C) were blended. In the described manner, the rheology modifiers listed in Tables 14 to 20 were obtained.

A hydraulic slurry composition having viscoelasticity can be obtained through mixing a liquid rheology modifier of any of Examples in the tables with water and a hydraulic powder.

<Evaluation of liquid rheology modifier>

(1) Appearance and viscosity

The appearance of each of the liquid rheology modifiers obtained immediately after being prepared was visually observed.

In addition, the viscosity of each of the liquid rheology modifiers obtained immediately after being prepared was measured in the following manner.

In a screw tube (manufactured by Maruemu Corporation, No. 7, 35 mm × 78 mm), 50 g of a liquid rheology modifier to be measured was placed, and a value measured 3 minutes after stirring at a rotational frequency of 12 rpm with a B-type viscometer (manufactured by Toki Sangyo Co., Ltd., VISCOMETER TVB-10, Rotor M21) was used as the viscosity of the liquid rheology modifier.

(2) Low-temperature stability

For some examples, the low-temperature stability of the liquid rheology modifier was evaluated in the following manner.

In a screw tube (manufactured by Maruemu Corporation, No. 7, 35 mm × 78 mm), 50 g of a liquid rheology modifier was placed, and left to stand at 5°C for 2 weeks, and thereafter the appearance was observed. Evaluation was performed based on the following criteria.

A: liquid, with slight white turbidity
AA: liquid, transparent

<Rheology-modifying effect on hydraulic slurry composition>

(1) Cement slurry

Mixed together were 400 g of water and 400 g of cement to prepare a cement slurry with a W/C of 100% by mass. In the preparation, a liquid rheology modifier listed in the tables was added to the water such that the apparent loading of the liquid rheology modifier relative to the amount of the water (represented as W×% in the tables) was 4% by mass (% for additives is % by mass in the tables). The cement used was ordinary Portland cement (a mixture of ordinary Portland cement manufactured by TAIHEIYO CEMENT CORPORATION and that manufactured by SUMITOMO OSAKA CEMENT Co., Ltd. with a mass ratio of 50/50). The water used was tap water.

(2) Bentonite-containing cement slurry

Mixed together were 300 g of water, 120 g of cement, and 30 g of bentonite to prepare a bentonite-containing cement slurry with a W/P of 200% by mass (represented as "BT-Cement slurry" in the tables). In the preparation, a liquid rheology modifier listed in the tables was added to the water such that the apparent loading of the liquid rheology modifier relative to the amount of the water (represented as W×% in the tables) was an amount listed in the tables. W/P is water / (cement + bentonite) in % by mass. The cement used was ordinary Portland cement (a mixture of ordinary Portland cement manufactured by TAIHEIYO CEMENT CORPORATION and that manufactured by SUMITOMO OSAKA CEMENT Co., Ltd. with a mass ratio of 50/50). The water used was tap water. The bentonite used was TB-250 from

TACHIBANA MATERIAL Co., Ltd.

(3) Measurement of viscosity of slurry

The viscosity of each of the cement slurries or bentonite-containing cement slurries obtained was measured by using a B-type viscometer (manufactured by RION Co., Ltd., VISCOTESTER VT-04E, Rotor No. 2, rotational frequency: 62.5 rpm). When the viscosity was 300 mPa·s or less, Rotor No. 3 was used. A value 1 minute after stirring was employed. The slurry temperature was 20°C for all cases. In the case of a cement slurry, if this viscosity is 2500 mPa·s or more, it is preferred because the slurry will be found to have viscoelasticity. In the case of a bentonite-containing cement slurry, if this viscosity is 1500 mPa·s or more, it is preferred because the slurry will be found to have viscoelasticity.
The results for the cement slurries are shown in Table 16, and the results for the bentonite-containing cement slurries are shown in Table 19.

[Table 14]

| Test Ns | Liquid rheology modifier | | | | | | | | | | | | |
|---|---|---|---|---|---|---|---|---|---|---|---|---|---|
| | Component (A) | | | | Component (B) | | | Component (C) | | | | Appearance | Viscosity 20□ (mPa • s) |
| | Type | Number of carbon atoms of hydrocarbon group | Average number of moles of added EO | Content (% by mass) | Type | Number of carbon atoms of fatty acid moiety | Content (% by mass) | Type | LogPow | SP value | Content (% by mass) | | |
| 11-1 | (aa-1) | 18 (alkyl group) | 11 | 12.5 | - | - | - | - | - | - | - | transparent pale yellow liquid | 20 |
| 11-2 | - | - | - | - | (bb-12) | 18 (alkenyl group) 10 to 18 (mixture of alkyl group + alkenyl group) | 12.5 | - | - | - | - | pale yellow gel with white turbidity | unmeasurable |
| 11-3 | - | - | - | - | - | - | - | propylene glycol | -0.92 | 15.9 | 40 | transparent liquid | 15 |
| 11-4 | (aa-1) | 18 (alkyl group) | 11 | 12.5 | - (bb-12) | 18 (alkenyl group) 10 to 18 (mixture of alkyl group + alkenyl group) | 12.5 | - | - | - | - | yellow gel with white turbidity | 7000 or more |

(continued)

| Test Ns | Liquid rheology modifier | | | | | | | | | | | | |
|---|---|---|---|---|---|---|---|---|---|---|---|---|---|
| | Component (A) | | | | Component (B) | | | Component (C) | | | | Appearance | Viscosity 20□ (mPa • s) |
| | Type | Number of carbon atoms of hydrocarbon group | Average number of moles of added EO | Content (% by mass) | Type | Number of carbon atoms of fatty acid moiety | Content (% by mass) | Type | LogPow | SP value | Content (% by mass) | | |
| 11-5 | | | | | | | | benzyl alcohol | 1.10 | 9.3 | 5 | yellow liquid with white turbidity | 570 |
| 11-6 | | | | | | | | | | | 10 | transparent pale yellow liquid | 130 |
| 11-7 | | | | | | | | | | | 20 | transparent pale yellow liquid | 61 |
| 11-8 | | | | | | | | diethylene glycol monobutyl ether | 0.56 | 10.5 | 5 | yellow liquid with white turbidity | 498 |
| 11-9 | | | | | | | | | | | 10 | transparent pale yellow liquid | 148 |
| 11-10 | | | | | | | | | | | 20 | transparent pale yellow liquid | 62 |

(continued)

| Test Ns | Liquid rheology modifier | | | | | | | | | | | | |
|---|---|---|---|---|---|---|---|---|---|---|---|---|---|
| | Component (A) | | | | Component (B) | | | Component (C) | | | | Appearance | Viscosity 20□ (mPa • s) |
| | Type | Number of carbon atoms of hydrocarbon group | Average number of moles of added EO | Content (% by mass) | Type | Number of carbon atoms of fatty acid moiety | Content (% by mass) | Type | LogPow | SP value | Content (% by mass) | | |
| 11-11 | (aa-1) | 18 (alkyl group) | 11 | 12.5 | (bb-12) | 18 (alkenyl group) 10 to 18 (mixture of alkyl group + alkenyl group) | 12.5 | 2-butoxyethanol | 0.83 | 10.8 | 5 | yellow liquid with white turbidity | 316 |
| 11-12 | | | | | | | | | | | 10 | transparent pale yellow liquid | 88 |
| 11-13 | | | | | | | | | | | 20 | transparent pale yellow liquid | 50 |
| 11-14 | | | | | | | | ethylene glycol monoisopropyl ether | 0.05 | 11.1 | 5 | yellow liquid with white turbidity | 1025 |
| 11-15 | | | | | | | | | | | 10 | transparent pale yellow liquid | 378 |
| 11-16 | | | | | | | | | | | 20 | transparent pale yellow liquid | 70 |

(continued)

| Test Ns | Liquid rheology modifier | | | | | | | | | | | | |
|---|---|---|---|---|---|---|---|---|---|---|---|---|---|
| | Component (A) | | | | Component (B) | | | Component (C) | | | | Appearance | Viscosity 20□ (mPa • s) |
| | Type | Number of carbon atoms of hydrocarbon group | Average number of moles of added EO | Content (% by mass) | Type | Number of carbon atoms of fatty acid moiety | Content (% by mass) | Type | LogPow | SP value | Content (% by mass) | | |
| 11-17 | | | | | | | | 1-butanol | 0.90 | 11.3 | 5 | pale yellow liquid with white turbidity | 378 |
| 11-18 | | | | | | | | | | | 10 | transparent pale yellow liquid | 80 |
| 11-19 | | | | | | | | | | | 20 | transparent pale yellow liquid | 75 |
| 11-20 | | | | | | | | 2-methoxyethanol | -0.77 | 12.0 | 5 | pale yellow liquid with white turbidity | 1654 |
| 11-21 | | | | | | | | | | | 10 | pale yellow liquid with white turbidity | 1412 |
| 11-22 | | | | | | | | | | | 20 | transparent pale yellow liquid | 482 |

[Table 15]

| Test No | Liquid rheology modifier | | | | | | | | | | | | |
|---|---|---|---|---|---|---|---|---|---|---|---|---|---|
| | Component (A) | | | | Component (B) | | | Component (C) | | | | Appearance | Viscosity 20□ (mPa • s) |
| | Type | Number of carbon atoms of hydrocarbon group | Average number of moles of added EO | Content (% by mass) | Type | Number of carbon atoms of fatty acid moiety | Content (% by mass) | Type | LogPow | SP value | Content (% by mass) | | |
| 11-23 | | | | | | | | 2-methylpentane-2,4-diol | 0.58 | 13.1 | 5 | yellow liquid with white turbidity | 1133 |
| 11-24 | | | | | | | | | | | 10 | transparent pale yellow liquid | 356 |
| 11-25 | | | | | | | | | | | 20 | transparent pale yellow liquid | 110 |
| 11-26 | | | | | | | | | | | 30 | transparent pale yellow liquid | 100 |
| 11-27 | | | | | | | | dipropylene glycol | -0.70 | 13.3 | 10 | yellow liquid with white turbidity | 898 |
| 11-28 | | | | | | | | | | | 20 | transparent pale yellow liquid | 458 |
| 11-29 | | | | | | | | | | | 30 | transparent pale yellow liquid | 150 |

(continued)

| Test No | Liquid rheology modifier | | | | | | | | | | | | |
|---|---|---|---|---|---|---|---|---|---|---|---|---|---|
| | Component (A) | | | | Component (B) | | | Component (C) | | | | Appearance | Viscosity 20□ (mPa • s) |
| | Type | Number of carbon atoms of hydrocarbon group | Average number of moles of added EO | Content (% by mass) | Type | Number of carbon atoms of fatty acid moiety | Content (% by mass) | Type | LogPow | SP value | Content (% by mass) | | |
| 11-30 | (aa-1) | 18 (alkyl group) | 11 | 12.5 | (bb-12) | 18 (alkenyl group) 10 to 18 (mixture of alkyl group + alkenyl group) | 12.5 | 1,3-butanediol | -0.85 | 14.8 | 20 | transparent pale yellow liquid | 1456 |
| 11-31 | | | | | | | | | | | 30 | transparent pale yellow liquid | 380 |
| 11-32 | | | | | | | | | | | 40 | transparent pale yellow liquid | 145 |
| 11-33 | | | | | | | | 1,4-butanediol | -1.00 | 15.0 | 30 | transparent pale yellow liquid | 654 |
| 11-34 | | | | | | | | | | | 40 | transparent pale yellow liquid | 288 |
| 11-35 | | | | | | | | diethylene glycol | -1.30 | 15.0 | 30 | transparent pale yellow liquid | 789 |
| 11-36 | | | | | | | | | | | 40 | transparent pale yellow liquid | 465 |

(continued)

| Test No | Liquid rheology modifier | | | | | | | | | | | | | |
|---|---|---|---|---|---|---|---|---|---|---|---|---|---|---|
| | Component (A) | | | | Component (B) | | | Component (C) | | | | Appearance | Viscosity 20□ (mPa • s) |
| | Type | Number of carbon atoms of hydrocarbon group | Average number of moles of added EO | Content (% by mass) | Type | Number of carbon atoms of fatty acid moiety | Content (% by mass) | Type | LogPow | SP value | Content (% by mass) | | |
| 11-37 | | | | | | | | neopentyl glycol | 0.23 | 13.8 | 5 | transparent pate yellow liquid | 1256 |
| 11-38 | | | | | | | | | | | 10 | transparent pate yellow liquid | 446 |
| 11-39 | | | | | | | | | | | 20 | transparent pate yellow liquid | 160 |
| 11-40 | | | | | | | | | | | 30 | transparent pale yellow liquid | 170 |
| 11-41 | | | | | | | | propylene glycol | -0.92 | 15.9 | 20 | transparent pale yellow liquid | 1168 |
| 11-42 | | | | | | | | | | | 30 | transparent pale yellow liquid | 450 |
| 11-43 | | | | | | | | | | | 40 | transparent pale yellow liquid | 134 |
| 11-44 | | | | | | | | | | | 50 | transparent pale yellow liquid | 130 |

(continued)

| Test No | Liquid rheology modifier | | | | | | | | | | | | |
|---|---|---|---|---|---|---|---|---|---|---|---|---|---|
| | Component (A) | | | | Component (B) | | | Component (C) | | | | Appearance | Viscosity 20□ (mPa • s) |
| | Type | Number of carbon atoms of hydrocarbon group | Average number of moles of added EO | Content (% by mass) | Type | Number of carbon atoms of fatty acid moiety | Content (% by mass) | Type | LogPow | SP value | Content (% by mass) | | |
| 11-45 | | | | | | | | ethylene glycol | -1.36 | 17.8 | 40 | transparent pale yellow liquid | 442 |
| 11-46 | | | | | | | | | | | 50 | transparent pale yellow liquid | 266 |
| 11-47 | | | | | | | | glycerin | -1.76 | 16.5 | 50 | pale yellow gel | viscosity of 7000 or more |

[Table 16]

| Test № | Liquid rheology modifier: Component (A): Type | Component (A): Number of carbon atoms of hydrocarbon group | Component (A): Average number of moles of added EO | Component (A): Content (% by mass) | Component (B): Type | Component (B): Number of carbon atoms of fatty acid moiety | Component (B): Content (% by mass) | Component (C): Type | Component (C): LogPow | Component (C): SP value | Component (C): Content (% by mass) | Appearance | Viscosity 20□ (mPa・s) | Low-temperature stability | Cement slurry: Loading (W x %) | Cement slurry: Viscosity 20□ (mPa・s) |
|---|---|---|---|---|---|---|---|---|---|---|---|---|---|---|---|---|
| 12-1 | (aa-2) | 12-18 (alkyl group) | 7 | 12.5 | (bb-12) | 18 (alkenyl group) 10 to 18 (mixture of alkyl group + alkenyl group) | 12.5 | — | — | — | — | pale yellow gel | viscosity of 7000 or more | — | — | — |
| 12-2 | | | | | (bb-1) | 18 (alkenyl group) | 12.5 | — | — | — | — | pale yellow gel | viscosity of 7000 or more | — | — | — |
| 12-3 | | | | | (bb-12) | 18 (alkenyl group) 10 to 18 (mixture of alkyl group + alkenyl group) | 12.5 | propylene glycol | -0.92 | 15.9 | 20 | transparent pale yellow liquid | 980 | — | — | — |
| 12-4 | | | | | | | | | | | 30 | transparent pale yellow liquid | 443 | — | — | — |
| 12-5 | | | | | | | | | | | 40 | transparent pale yellow liquid | 124 | — | — | — |
| 12-6 | | | | | | | | | | | 50 | transparent pale yellow liquid | 120 | — | — | — |
| 12-7 | | | | | (bb-1) | 18 (alkenyl group) | 12.5 | propylene glycol | -0.92 | 15.9 | 20 | transparent pale yellow liquid | 1030 | — | — | — |
| 12-8 | | | | | | | | | | | 30 | transparent pale yellow liquid | 576 | — | — | — |
| 12-9 | | | | | | | | | | | 40 | transparent pale yellow liquid | 135 | — | — | — |
| 12-10 | | | | | | | | | | | 50 | transparent pale yellow liquid | 133 | — | — | — |
| 12-11 | (aa-3) | 18 (alkenyl group) | 9 | 12.5 | (bb-1) | 18 (alkenyl group) | 12.5 | - | - | - | — | pale yellow gel | viscosity of 7000 or more | — | — | — |
| 12-12 | | | | | (bb-12) | 18 (alkenyl group) 10 to 18 (mixture of alkyl group + alkenyl group) | 12.5 | | | | — | pale yellow gel | viscosity of 7000 or more | — | — | — |
| 12-13 | | | | | (bb-1) | 18 (alkenyl group) | 12.5 | propylene glycol | -0.92 | 15.9 | 20 | transparent pale yellow liquid | 1065 | — | — | — |
| 12-14 | | | | | | | | | | | 30 | transparent pale yellow liquid | 553 | — | — | — |
| 12-15 | | | | | | | | | | | 40 | transparent pale yellow liquid | 138 | — | — | — |
| 12-16 | | | | | | | | | | | 50 | transparent pale yellow liquid | 137 | — | — | — |
| 12-17 | | | | | (bb-12) | 18 (alkenyl group) 10 to 18 (mixture of alkyl group + alkenyl group) | 12.5 | propylene glycol | -0.92 | 15.9 | 20 | transparent pale yellow liquid | 1170 | — | — | — |
| 12-18 | | | | | | | | | | | 30 | transparent pale yellow liquid | 443 | — | — | — |
| 12-19 | | | | | | | | | | | 40 | transparent pale yellow liquid | 140 | — | — | — |
| 12-20 | | | | | | | | | | | 50 | transparent pale yellow liquid | 137 | — | — | — |
| 12-21 | (aa-1) | 18 (alkyl group) | 11 | 12.5 | (bb-1) | 18 (alkenyl group) | 12.5 | - | - | - | - | pale yellow gel | viscosity of 7000 or more | — | — | — |
| 12-22 | | | | | (bb-1) | 18 (alkenyl group) | 12.5 | propylene glycol | -0.92 | 15.9 | 20 | transparent pale yellow liquid | 870 | A | 4% | 2500 |
| 12-23 | | | | | | | | | | | 30 | transparent pale yellow liquid | 570 | A | | 2600 |
| 12-24 | | | | | | | | | | | 40 | transparent pale yellow liquid | 170 | A | | 2600 |
| 12-25 | | | | | | | | | | | 50 | transparent pale yellow liquid | 166 | A | | 2500 |
| 12-26 | | | | | (bb-1) | 18 (alkenyl group) | 12.5 | propylene glycol: 57.5% neopentyl glycol: 42.5% | -.092 0.23 | 15.9 13.8 | 20 | transparent pale yellow liquid | 770 | AA | | 2500 |
| 12-27 | | | | | | | | | | | 30 | transparent pale yellow liquid | 180 | AA | | 2700 |
| 12-28 | | | | | | | | | | | 40 | transparent pale yellow liquid | 170 | AA | | 2600 |
| 12-29 | | | | | | | | | | | 50 | transparent pale yellow liquid | 170 | AA | | 2600 |
| 12-30 | | | | | (bb-12) | 18 (alkenyl group) 10 to 18 (mixture of alkyl group + alkenyl group) | 12.5 | propylene glycol: 57.5% neopentyl glycol: 42.5% | -.092 0.23 | 15.9 13.8 | 20 | transparent pale yellow liquid | 661 | AA | | 3200 |
| 12-31 | | | | | | | | | | | 30 | transparent pale yellow liquid | 150 | AA | | 3100 |
| 12-32 | | | | | | | | | | | 40 | transparent pale yellow liquid | 138 | AA | | 3000 |
| 12-33 | | | | | | | | | | | 50 | transparent pale yellow liquid | 135 | AA | | 3100 |

[Table 17]

| Test № | Liquid rheology modifier | | | | | | | | | | | | | | | |
|---|---|---|---|---|---|---|---|---|---|---|---|---|---|---|---|---|
| | Component (A) | | | | Component (B) | | | Component (C) | | | | Component (D) | | | Appearance | Viscosity 20□ (mPa • s) |
| | Type | Number of carbon atoms of | moles of added EO | Content (% by mass) | Type | Number of carbon atoms of fatty acid | Content (% by masss) | Type | LogPow | SP value | Content (% by mass) | Type | Weight-average molecular | Content (% by mass) | | |
| 13-1 | (aa-1) | (18 alkyl group) | 11 | 12.5 | - | - | - | - | - | - | - | - | - | - | pale yellow liquid with white turbidity | 20 |
| 13-2 | - | - | - | - | (bb-12) | 18 (alkenyl group) 10 to 18 (mixture of alkyl group + alkenyl group) | 12.5 | - | - | - | - | - | - | - | pale yellow gel with white turbidity | unmeasurable |
| 13-3 | - | - | - | - | - | - | - | - | - | - | - | (dd-3) | 13,000 | 10.5 | transparent liquid | 60 |
| 13-4 | - | - | - | - | - | - | - | propylene glycol | -0.92 | 15.9 | 40 | - | - | - | transparent liquid | 15 |
| 13-5 | (aa-1) | 18 (alkyl group) | 11 | 12.5 | (bb-12) | 18 (alkenyl group) 10 to 18 (mixture of alkyl group + alkenyl group) | 12.5 | propylene glycol | -0.92 | 15.9 | 40 | - | - | - | transparent pale yellow liquid | 134 |

(continued)

| Test No | Liquid rheology modifier | | | | | | | | | | | | | | | | |
|---|---|---|---|---|---|---|---|---|---|---|---|---|---|---|---|---|---|
| | Component (A) | | | | Component (B) | | | Component (C) | | | | Component (D) | | | Appearance | Viscosity 20□ (mPa • s) |
| | Type | Number of carbon atoms of | moles of added EO | Content (% by mass) | Type | Number of carbon atoms of fatty acid | Content (% by masss) | Type | LogPow | SP value | Content (% by mass) | Type | Weight-average molecular | Content (% by mass) | | |
| 13-6 | | | | | | | | benzyl alcohol | 1.10 | 9.3 | 5 | | | | yellow liquid with white turbidity | 644 |
| 13-7 | | | | | | | | | | | 10 | | | | transparent pale yellow liquid | 128 |
| 13-8 | | | | | | | | | | | 20 | | | | transparent pale yellow liquid | 61 |
| 13-9 | | | | | | | | diethylene glycol monobutyl ether | 0.56 | 10.5 | 5 | | | | yellow liquid with white turbidity | 548 |
| 13-10 | | | | | | | | | | | 10 | | | | transparent pale yellow liquid | 161 |
| 13-11 | | | | | | | | | | | 20 | | | | transparent pale yellow liquid yellow liquid with | 71 |
| 13-12 | | | | | | | | 2-butoxyethanol | 0.83 | 10.8 | 5 | | | | white turbidity | 388 |
| 13-13 | | | | | | | | | | | 10 | | | | | 105 |
| 13-14 | | | | | | | | | | | 20 | | | | transparent pale yellow liquid | 53 |

(continued)

| Test No | Liquid rheology modifier | | | | | | | | | | | | | | | |
|---|---|---|---|---|---|---|---|---|---|---|---|---|---|---|---|---|
| | Component (A) | | | | Component (B) | | | Component (C) | | | | Component (D) | | | Appearance | Viscosity 20□ (mPa • s) |
| | Type | Number of carbon atoms of | moles of added EO | Content (% by mass) | Type | Number of carbon atoms of fatty acid | Content (% by masss) | Type | LogPow | SP value | Content (% by mass) | Type | Weight-average molecular | Content (% by mass) | | |
| 13-15 | | | | | | | | ethylene glycol monoisopropyl ether | 0.05 | 11.1 | 5 | | | | yellow liquid with white turbidity | 1636 |
| 13-16 | | | | | | | | | | | 10 | | | | transparent pale yellow liquid | 500 |
| 13-17 | | | | | | | | | | | 20 | | | | transparent pale yellow liquid | 80 |
| 13-18 | | | | | | | | 1-butanol | 0.90 | 11.3 | 5 | | | | pale yellow liquid with white turbidity | 443 |
| 13-19 | | | | | | | | | | | 10 | | | | transparent pale yellow liquid | 94 |
| 13-20 | | | | | | | | | | | 20 | | | | transparent pale yellow liquid | 70 |

(continued)

| Test No | Liquid rheology modifier | | | | | | | | | | | | | | | |
|---|---|---|---|---|---|---|---|---|---|---|---|---|---|---|---|---|
| | Component (A) | | | | Component (B) | | | Component (C) | | | | Component (D) | | | Appearance | Viscosity 20□ (mPa • s) |
| | Type | Number of carbon atoms of | moles of added EO | Content (% by mass) | Type | Number of carbon atoms of fatty acid | Content (% by masss) | Type | LogPow | SP value | Content (% by mass) | Type | Weight-average molecular | Content (% by mass) | | |
| 13-21 | (aa-1) | 18 (alkyl group) | 11 | 12.5 | (bb-12) | 18 (alkenyl group) 10 to 18 (mixture of alkyl group + alkenyl group) | 12.5 | 2-methoxyethanol | -0.77 | 12.0 | 5 | | 13,000 | 10.5 | pale yellow liquid with white turbidity | 2865 |
| 13-22 | | | | | | | | | | | 10 | | | | pale yellow liquid with white turbidity | 2325 |
| 13-23 | | | | | | | | | | | 20 | | | | yellow liquid with | 751 |
| 13-24 | | | | | | | | 2-methylpentane -2,4-diol | 0.58 | 13.1 | 5 | | | | white turbidity | 1571 |
| 13-25 | | | | | | | | | | | 10 | | | | transparent pale yellow liquid | 422 |
| 13-26 | | | | | | | | | | | 20 | | | | transparent pale yellow liquid | 119 |
| 13-27 | | | | | | | | | | | 30 | | | | transparent pale yellow liquid yellow liquid with | |

(continued)

| Test No | Liquid rheology modifier | | | | | | | | | | | | | | | |
|---|---|---|---|---|---|---|---|---|---|---|---|---|---|---|---|---|
| | Component (A) | | | | Component (B) | | | Component (C) | | | | Component (D) | | | Appearance | Viscosity 20□ (mPa • s) |
| | Type | Number of carbon atoms of | moles of added EO | Content (% by mass) | Type | Number of carbon atoms of fatty acid | Content (% by masss) | Type | LogPow | SP value | Content (% by mass) | Type | Weight-average molecular | Content (% by mass) | | |
| 13-28 | | | | | | | | dipropylene glycol | -0.70 | 13.3 | 10 | | | | white turbidity | 1240 |
| 13-29 | | | | | | | | | | | 20 | | | | transparent pale yellow liquid | 651 |
| 13-30 | | | | | | | | | | | 30 | | | | transparent pale yellow liquid | 190 |
| 13-31 | | | | | | | | 1,3-butanediol | -0.85 | 14.8 | 20 | | | | transparent pale yellow liquid | 1911 |
| 13-32 | | | | | | | | | | | 30 | | | | transparent pale yellow liquid | 540 |
| 13-33 | | | | | | | | | | | 40 | | | | transparent pale yellow liquid | 290 |
| 13-34 | | | | | | | | 1,4-butanediol | -1.00 | 15.0 | 30 | | | | transparent pale yellow liquid | 980 |
| 13-35 | | | | | | | | | | | 40 | | | | transparent pale yellow liquid | 417 |

(continued)

| Test No | Liquid rheology modifier | | | | | | | | | | | | | | | Appearance | Viscosity 20□ (mPa • s) |
|---|---|---|---|---|---|---|---|---|---|---|---|---|---|---|---|---|---|
| | Component (A) | | | | Component (B) | | | Component (C) | | | | Component (D) | | | | | |
| | Type | Number of carbon atoms of | moles of added EO | Content (% by mass) | Type | Number of carbon atoms of fatty acid | Content (% by masss) | Type | LogPow | SP value | Content (% by mass) | Type | Weight-average molecular | Content (% by mass) | | | |
| 13-36 | | | | | | | | diethylene glycol | -1.30 | 15.0 | 30 | | | | | transparent pale yellow liquid | 995 |
| 13-37 | | | | | | | | | | | 40 | | | | | transparent pale yellow liquid | 774 |
| 13-38 | | | | | | | | neopentyl glycol | 0.23 | 13.8 | 5 | | | | | transparent pale yellow liquid | 1413 |
| 13-39 | | | | | | | | | | | 10 | | | | | transparent pale yellow liquid | 323 |
| 13-40 | | | | | | | | | | | 20 | | | | | transparent pale yellow liquid | 200 |
| 13-41 | | | | | | | | | | | 30 | | | | | transparent pale yellow liquid | 196 |

[Table 18]

| Test N | Liquid rheology modifier | | | | | | | | | | | | | | | |
|---|---|---|---|---|---|---|---|---|---|---|---|---|---|---|---|---|
| | Component (A) | | | | Component (B) | | | Component (C) | | | | Component (D) | | | Appearance | Viscosity 20°C (mPa·s) |
| | Type | Number of carbon atoms of hydrocarbon group | Average number of moles of added EO | Content (% by mass) | Type | Number of carbon atoms of fatty acid moiety | Content (% by mass) | Type | LogPow | SP value | Content (% by mass) | Type | Weight-average molecular weight | Content (% by mass) | | |
| 13-42 | | | | | | | | | | | 20 | (dd-3) | 13.000 | 10.5 | transparent pale yellow | 2248 |
| 13-43 | | | | | | | | | | | 30 | | | | transparent pale yellow | 737 |
| 13-44 | | | | | | | | | | | 40 | | | | transparent pale yellow | 269 |
| 13-45 | | | | | | | | | | | 50 | | | | transparent pale yellow | 260 |
| 13-46 | | | | | | | | | | | | | | 5.0 | transparent pale yellow | 204 |
| 13-47 | | | | | | | | | | | | | | 15.0 | transparent pale yellow | 405 |
| 13-48 | | | | | | | | | | | | (dd-1) | 2.000 | 5.0 | transparent pale yellow | 136 |
| 13-49 | | | | | | | | | | | | | | 10.5 | transparent pale yellow | 149 |
| 13-50 | | | | | | | | | | | | | | 15.0 | transparent pale yellow | 155 |

(continued)

| Test N | Liquid rheology modifier | | | | | | | | | | | | | | | | |
|---|---|---|---|---|---|---|---|---|---|---|---|---|---|---|---|---|---|
| | Component (A) | | | | Component (B) | | | Component (C) | | | | Component (D) | | | Appearance | Viscosity 20°C (mPa·s) |
| | Type | Number of carbon atoms of hydrocarbon group | Average number of moles of added EO | Content (% by mass) | Type | Number of carbon atoms of fatty acid moiety | Content (% by mass) | Type | LogPow | SP value | Content (% by mass) | Type | Weight-average molecular weight | Content (% by mass) | | |
| 13-51 | (aa-1) | 18 (alkyl group) | 11 | 12.5 | (bb-12) | 18 (alkenyl group) 10 to 18 (mixture of alkyl group+ alkenyl group) | 12.5 | propylene glycol | -0.92 | 15.9 | 40 | (dd-2) | 4.000 | 5.0 | transparent pale yellow | 144 |
| 13-52 | | | | | | | | | | | | | | 10.5 | transparent pale yellow | 164 |
| 13-53 | | | | | | | | | | | | | | 15.0 | transparent pale yellow | 176 |
| 13-54 | | | | | | | | | | | | (dd-4) | 20.000 | 5.0 | transparent pale yellow | 222 |
| 13-55 | | | | | | | | | | | | | | 10.5 | transparent pale yellow | 413 |
| 13-56 | | | | | | | | | | | | | | 15.0 | transparent pale yellow | 656 |
| 13-57 | | | | | | | | | | | | (dd-5) | 80.000 | 5.0 | transparent pale yellow | 751 |
| 13-58 | | | | | | | | | | | | | | 7.5 | transparent pale yellow | 1248 |
| 13-59 | | | | | | | | | | | | | | 10.5 | transparent pale yellow | 3893 |

(continued)

| Test N | Liquid rheology modifier | | | | | | | | | | | | | | | | |
|---|---|---|---|---|---|---|---|---|---|---|---|---|---|---|---|---|---|
| | Component (A) | | | | Component (B) | | | Component (C) | | | | Component (D) | | | Appearance | Viscosity 20°C (mPa·s) |
| | Type | Number of carbon atoms of hydrocarbon group | Average number of moles of added EO | Content (% by mass) | Type | Number of carbon atoms of fatty acid moiety | Content (% by mass) | Type | LogPow | SP value | Content (% by mass) | Type | Weight-average molecular weight | Content (% by mass) | | |
| 13-60 | | | | | | | | | | | | (dd-6) | 110.000 | 2.5 | transparent pale yellow | 442 |
| 13-61 | | | | | | | | | | | | | | 6.5 | transparent pale yellow | 2020 |
| 13-62 | | | | | | | | | | | | | | 10.5 | transparent pale yellow | 6390 |

[Table 19]

| Test No | Liquid rheology modifier | | | | | | | | | | | | | | | | BT-Cement slurry | |
|---|---|---|---|---|---|---|---|---|---|---|---|---|---|---|---|---|---|---|
| | Component (A) | | | | Component (B) | | | Component (C) | | | | Component (D) | | | Appearance | Viscosity 20□ (mPa • s) | Loading (W×%) | Viscosity 20□ (mPa • s) |
| | Type | Number of carbon atoms of | Average number of moles of | Content (% by mass) | Type | Number of carbon atoms of fatty acid moiety | Content (% by mass) | Type | LogPow | SP value | Content (% by mass) | Type | Weight-average molecular | Content (% by mass) | | | | |
| 13-63 | (aa-1) | 18 (alkyl group) | 11 | 12.5 | (bb-1) | 18 (alkenyl group) | 12.5 | propylene glycol : 57.5% neopentyl glycol : 42.5 % | -.092 0.23 | 15.9 13.8 | 20 | (dd-3) | 13,000 | 10.5 | transparent pale yellow liquid | 879 | 6% | 7000 |
| 13-64 | | | | | | | | | | | 30 | | | | transparent pale yellow liquid | 264 | | 6800 |
| 13-65 | | | | | | | | | | | 40 | | | | transparent pale yellow liquid | 260 | | 7000 |
| 13-66 | | | | | | | | | | | 50 | | | | transparent pale yellow liquid | 260 | | 6800 |

(continued)

| Test No | Liquid rheology modifier | | | | | | | | | | | | | | | | BT-Cement slurry | |
|---|---|---|---|---|---|---|---|---|---|---|---|---|---|---|---|---|---|---|
| | Component (A) | | | | Component (B) | | | Component (C) | | | | Component (D) | | | Appearance | Viscosity 20□ (mPa • s) | Loading (W×%) | Viscosity 20□ (mPa • s) |
| | Type | Number of carbon atoms of | Average number of moles of | Content (% by mass) | Type | Number of carbon atoms of fattyacid moiety | Content (% by mass) | Type | LogPow | SP value | Content (% by mass) | Type | Weight-average molecular | Content (% by mass) | | | | |
| 13-67 | (aa-1) | 18 (alkyl group) | 11 | 12.5 | (bb-12) | 18 (alkenyl group) 10 to 18 (mixture of alkyl group + alkenyl group) | 12.5 | propylene glycol : 57.5% neopentyl glycol : 42.5% | -.092 0.23 | 15.9 13.8 | 20 | (dd-3) | 13,000 | 10.5 | transparent pale yellow liquid | 753 | 6% | 6800 |
| 13-68 | | | | | | | | | | | 30 | | | | transparent pale yellow liquid | 233 | | 7000 |
| 13-69 | | | | | | | | | | | 40 | | | | transparent pale yellow liquid | 226 | | 7000 |
| 13-70 | | | | | | | | | | | 50 | | | | transparent pale yellow liquid | 220 | | 7000 |
| 13-71 | | | | | | | | ethylene glycol | -1.36 | 17.8 | 40 | (dd-3) | 13,000 | 10.5 | transparent pale yellow liquid | 888 | - | - |
| 13-72 | | | | | | | | | | | 50 | | | | transparent pale yellow liquid | 534 | - | - |

(continued)

<table>
<tr><th rowspan="3">Test No</th><th colspan="17">Liquid rheology modifier</th><th colspan="2">BT-Cement slurry</th></tr>
<tr><th colspan="4">Component (A)</th><th colspan="3">Component (B)</th><th colspan="4">Component (C)</th><th colspan="3">Component (D)</th><th rowspan="2">Appear-ance</th><th rowspan="2">Viscosity 20□ (mPa • s)</th><th rowspan="2">Loading (W×%)</th><th rowspan="2">Viscosity 20□ (mPa • s)</th></tr>
<tr><th>Type</th><th>Number of car-bon at-oms of</th><th>Average number of moles of</th><th>Content (% by mass)</th><th>Type</th><th>Number of car-bon at-oms of fattyacid moiety</th><th>Content (% by mass)</th><th>Type</th><th>LogPow</th><th>SP value</th><th>Content (% by mass)</th><th>Type</th><th>Weight-average molecular</th><th>Content (% by mass)</th></tr>
<tr><td>13-73</td><td rowspan="2">(aa-1)</td><td rowspan="2">18 (alkyl group)</td><td rowspan="2">11</td><td rowspan="2">12.5</td><td rowspan="2">(bb-12)</td><td rowspan="2">18 (alke-nyl group) 10 to 18 (mixture of alkyl group + alkenyl group)</td><td rowspan="2">12.5</td><td>glycerin</td><td>-1.76</td><td></td><td>50</td><td rowspan="2">(dd-3)</td><td rowspan="2">13,000</td><td rowspan="2">10.5</td><td>pale yellow gel</td><td>7000 or higher</td><td>-</td><td>-</td></tr>
<tr><td>13-74</td><td>-</td><td>-</td><td>-</td><td>0</td><td>pale yellow gel</td><td>7000 or higher</td><td>-</td><td>-</td></tr>
</table>

(continued)

| Test No | Liquid rheology modifier | | | | | | | | | | | | | | | BT-Cement slurry | |
|---|---|---|---|---|---|---|---|---|---|---|---|---|---|---|---|---|---|
| | Component (A) | | | | Component (B) | | | Component (C) | | | | Component (D) | | | Appearance | Viscosity 20□ (mPa • s) | Loading (W×%) | Viscosity 20□ (mPa • s) |
| | Type | Number of carbon atoms of | Average number of moles of | Content (% by mass) | Type | Number of carbon atoms of fatty acid moiety | Content (% by mass) | Type | LogPow | SP value | Content (% by mass) | Type | Weight-average molecular | Content (% by mass) | | | | |
| 13-75 | (aa-1) | 18 (alkyl group) | 11 | 12.5 | (bb-12) | 18 (alkenyl group) 10 to 18 (mixture of alkyl group + alkenyl group) | 12.5 | propylene glycol | -0.92 | 15.9 | 40 | (dd-7) | 700 | 10.5 | transparent pale yellow liquid | 80.2 | - | - |
| 13-76 | | | | | | | | | | | 40 | (dd-8) | 3,000 | | pale yellow liquid with white turbidity | 104 | - | - |
| 13-77 | | | | | | | | | | | 40 | (dd-13) | 19,500 | 10.5 | transparent pale yellow liquid | 418 | - | - |
| 13-78 | | | | | | | | | | | 40 | (dd-11) | 4,290 | | transparent pale yellow liquid | 281 | - | - |
| 13-79 | | | | | | | | | | | 40 | (dd-9) | 2,270 | | transparent pale yellow liquid | 125 | - | - |
| 13-80 | | | | | | | | | | | 40 | (dd-10) | 3,370 | | transparent pale yellow liquid | 164 | - | - |
| 13-81 | | | | | | | | | | | 40 | (dd-12) | 10,200 | | transparent pale yellow liquid | 211 | - | - |

[Table 20]

| Test No | Liquid rheology modifier | | | | | | | | | | | | | | | |
|---|---|---|---|---|---|---|---|---|---|---|---|---|---|---|---|---|
| | Component (A) | | | | Component (B) | | | Component (C) | | | | Component (D) | | | Appearance | Viscosity 20□ (mPa • s) |
| | Type | Number of carbon atoms of hydrocarbon group | Average number of moles of added EO | Content (% by mass) | Type | Number of carbon atoms of fatty acid moiety | Content (% by mass) | Type | LogPow | SP value | Content (% by mass) | Type | Weight-average molecular weight | Content (% by mass) | | |
| 13-82 | (aa-2) | 12-18 (alkyl group) | 7 | 12.5 | (bb-12) | 18 (alkenyl group) 10 to 18 (mixture of alkyl group + alkenyl group) | 12.5 | propylene glycol | -0.92 | 15.9 | 20 | (dd-3) | 13,000 | 10.5 | transparent pale yellow liquid | 1686 |
| 13-83 | | | | | | | | | | | 30 | | | | transparent pale yellow liquid | 759 |
| 13-84 | | | | | | | | | | | 40 | | | | transparent pale yellow liquid | 278 |
| 13-85 | | | | | | | | | | | 50 | | | | transparent pale yellow liquid | 288 |
| 13-86 | | | | | (bb-1) | 18 (alkenyl group) | 12.5 | | | | 20 | | | | transparent pale yellow liquid | 1710 |
| 13-87 | | | | | | | | | | | 30 | | | | transparent pale yellow liquid | 989 |
| 13-88 | | | | | | | | | | | 40 | | | | transparent pale yellow liquid | 300 |
| 13-89 | | | | | | | | | | | 50 | | | | transparent pale yellow liquid | 293 |

(continued)

| Test No | Liquid rheology modifier | | | | | | | | | | | | | | | |
|---|---|---|---|---|---|---|---|---|---|---|---|---|---|---|---|---|
| | Component (A) | | | | Component (B) | | | Component (C) | | | | Component (D) | | | Appearance | Viscosity 20□ (mPa • s) |
| | Type | Number of carbon atoms of hydrocarbon group | Average number of moles of added EO | Content (% by mass) | Type | Number of carbon atoms of fatty acid moiety | Content (% by mass) | Type | LogPow | SP value | Content (% by mass) | Type | Weight-average molecular weight | Content (% by mass) | | |
| 13-90 | (aa-3) | 18 (alkenyl group) | 9 | 12.5 | (bb-1) | 18 (alkenyl group) | 12.5 | propylene glycol | -0.92 | 15.9 | 20 | (dd-3) | 13,000 | 10.5 | transparent pale yellow liquid | 2033 |
| 13-91 | | | | | | | | | | | 30 | | | | transparent pale yellow liquid | 894 |
| 13-92 | | | | | | | | | | | 40 | | | | transparent pale yellow liquid | 298 |
| 13-93 | | | | | | | | | | | 50 | | | | transparent pale yellow liquid | 298 |
| 13-94 | | | | | (bb-12) | 18 (alkenyl group) 10 to 18 (mixture of alkyl group + alkenyl group) | 12.5 | | | | 20 | | | | transparent pale yellow liquid | 2320 |
| 13-95 | | | | | | | | | | | 30 | | | | transparent pale yellow liquid | 772 |
| 13-96 | | | | | | | | | | | 40 | | | | transparent pale yellow liquid | 280 |
| 13-97 | | | | | | | | | | | 50 | | | | transparent pale yellow liquid | 274 |

(continued)

| Test No | Liquid rheology modifier | | | | | | | | | | | | | | | |
|---|---|---|---|---|---|---|---|---|---|---|---|---|---|---|---|---|
| | Component (A) | | | | Component (B) | | | Component (C) | | | | Component (D) | | | Appearance | Viscosity 20□(mPa • s) |
| | Type | Number of carbon atoms of hydrocarbon group | Average number of moles of added EO | Content (% by mass) | Type | Number of carbon atoms of fatty acid moiety | Content (% by mass) | Type | LogPow | SP value | Content (% by mass) | Type | Weight-average molecular weight | Content (% by mass) | | |
| 13-98 | (aa-1) | 18 (alkyl group) | 11 | 12.5 | (bb-1) | 18 (alkenyl group) | 12.5 | propylene glycol | -0.92 | 15.9 | 20 | (dd-3) | 13,000 | 10.5 | transparent pale yellow liquid | 1418 |
| 13-99 | | | | | | | | | | | 30 | | | | transparent pale yellow liquid | 986 |
| 13-100 | | | | | | | | | | | 40 | | | | transparent pale yellow liquid | 314 |
| 13-101 | | | | | | | | | | | 50 | | | | transparent pale yellow liquid | 296 |

Although a mixture containing component (A) and component (B) mixed with high concentrations is usable, it tends to have high viscosity, leading to lower handleability. By containing component (C) as in the present invention, the viscosity of the mixture is reduced even when component (A) and component (B) are mixed with high concentrations, and in practical use, for example, addition of this mixture to a cement slurry is expected to raise viscosity and lead to ease of use.

<Test No. 14>

By using (a-17) used in the above as component (A), (b-1) used in the above as component (B), and distilled water, aqueous solutions or liquids listed in Table 21 were prepared. Each of the aqueous solutions or liquids prepared was subjected to viscosity measurement at 20°C and evaluation of viscoelasticity. Table 21 shows the results. Here, concentrations of component (A) and component (B) listed in Table 21 are effective quantities.

(1) Viscosity measurement

In a screw tube (manufactured by Maruemu Corporation, No. 7, 35 mm × 78 mm), 50 g of the aqueous solution or liquid prepared was placed, and a value measured 3 minutes after stirring with a B-type viscometer (manufactured by Toki Sangyo Co., Ltd., VISCOMETER TVB-10, Rotor M2) at a rotational frequency of 6 rpm was used as the viscosity at 20°C.

(2) Evaluation of viscoelasticity

In a 300 ml beaker, 200 ml of the aqueous solution or liquid prepared was placed, and checked for stringiness and the phenomenon of backward motion in a manner below. An aqueous solution or liquid for which both stringiness and the phenomenon of backward motion were found was rated as "with viscoelasticity", and otherwise rated as "without viscoelasticity". Table 21 shows the results.

(Stringiness)

A smooth-surfaced glass rod with a diameter of 6 mm was set up at the center of the bottom of the beaker containing a sample, and the glass rod was withdrawn therefrom over approximately 1 second, and the state of stringiness at the tip of the glass rod was then visually observed.

(Backward motion)

Each sample was stirred with a smooth-surfaced glass rod with a diameter of 6 mm at 2 rotations/sec in a circular motion, and a sample for which the phenomenon that the solution moved in the reverse direction to the direction of stirring was observed when the stirring was ceased was rated as "with phenomenon of backward motion".

[Table 21]

| Test No | Rheology modifier | | | | | | | | |
|---|---|---|---|---|---|---|---|---|---|
| | Component (A) | | | | Component (B) | | | Viscosity 20□ (mPa • s) | Viscoelasticity |
| | Type | Number of carbon atoms of hydrocarbon group | Average number of moles of added EO | Content (% by mass) | Type | Number of carbon atoms of fatty acid moiety | Content (% by mass) | | |
| 14-1 | (a-17) | 18 (alkyl group) | 11 | 10 | - | - | - | 107 | without viscoelasticity |
| 14-2 | - | - | - | - | (b-1) | 18 (alkenyl group) | 100 | 728 | without viscoelasticity |
| 14-3 | (a-17) | 18 (alkyl group) | 11 | 5 | (b-1) | 18 (alkenyl group) | 5 | 1612 | with viscoelasticity |

From the results in Table 21, it can be seen that the viscosity of the aqueous solution containing 5% by mass of component (A) as an anionic surfactant and 5% by mass of component (B) as a nonionic surfactant at 20°C was two times or more higher than the viscosity of the aqueous solution containing 10% by mass or more of component (A) as an anionic surfactant at 20°C and the viscosity of the liquid of component (B) as a single substance of a nonionic surfactant at 20°C.

The reason for such increase in viscosity is that a wormlike micelle is formed in the aqueous solution containing 5% by mass of component (A) as an anionic surfactant and 5% by mass of component (B) as a nonionic surfactant, and the result that the aqueous solution had viscoelasticity supports that the anionic surfactant and the nonionic surfactant are forming a wormlike micelle.

## Claims

**1.** A rheology modifier comprising: (A) a sulfate or a salt thereof having a hydrocarbon group with 12 or more and 22 or less carbon atoms and an average number of moles of added alkylene oxide of 0 or more and 25 or less (hereinafter, referred to as a component (A)); and (B) a fatty acid alkanolamide having a fatty acid moiety with 10 or more and 22 or less carbon atoms (hereinafter, referred to as a component (B)).

**2.** The rheology modifier according to claim 1, wherein a mass ratio of the component (A) to the component (B), (A)/(B), is 3/97 or more and 95/5 or less.

**3.** The rheology modifier according to claim 1 or 2, further comprising water, wherein a total of a content of the component (A) and a content of the component (B) relative to 100 parts by mass of water is 0.5 parts by mass or more and 99 parts by mass or less.

**4.** The rheology modifier according to claim 3, wherein the rheology modifier comprises a wormlike micelle formed of the component (A) and the component (B).

**5.** The rheology modifier according to any one of claims 1 to 4, further comprising (C) a compound having a hydroxy group with an octanol/water partition coefficient of -1.6 or more and 1.2 or less (hereinafter, referred to as a component (C)), wherein the rheology modifier is a liquid.

**6.** The rheology modifier according to claim 5, further comprising water, wherein the total content of the component (A) and the component (B) is 6% by mass or more and 50% by mass or less relative to water.

**7.** The rheology modifier according to any one of claims 1 to 6, further comprising (D) one or more compounds selected from polyethylene glycols with a weight-average molecular weight of 500 or more, polypropylene glycols with a weight-average molecular weight of 500 or more, copolymers of ethylene oxide and propylene oxide with a weight-average molecular weight of 500 or more, and ether compounds having a hydrocarbon group and a polyoxyalkylene group (hereinafter, referred to as a component (D)).

**8.** The rheology modifier according to any one of claims 1 to 7, for a hydraulic slurry.

**9.** A slurry composition comprising the rheology modifier according to any one of claims 1 to 7, water, and a powder.

**10.** The slurry composition according to claim 9, wherein the powder is a hydraulic powder or a mixture of a hydraulic powder and bentonite.

**11.** A method for modifying water rheology, the method comprising mixing (A) a sulfate or a salt thereof having a hydrocarbon group with 12 or more and 22 or less carbon atoms and an average number of moles of added alkylene oxide of 0 or more and 25 or less (hereinafter, referred to as a component (A)); and (B) a fatty acid alkanolamide having a fatty acid moiety with 10 or more and 22 or less carbon atoms (hereinafter, referred to as a component (B)), with water.

**12.** The method for modifying water rheology according to claim 11, wherein the component (A) and the component (B) form a wormlike micelle.

**13.** The method for modifying water rheology according to claim 11 or 12, wherein the component (B) and water are

mixed together, and the component (A) is then added thereto and mixed together.

**14.** A method for producing a slurry composition, the method comprising mixing the rheology modifier according to any one of claims 1 to 8, a powder, and water.

**15.** The method for producing a slurry composition according to claim 14, wherein a slurry comprising water and a powder is prepared and the rheology modifier is added to the slurry and mixed together.

**16.** The method for producing a slurry composition according to claim 14 or 15, wherein the powder is a hydraulic powder or a mixture of a hydraulic powder and bentonite.

**17.** A kit comprising: a first agent comprising (A) a sulfate or a salt thereof having a hydrocarbon group with 12 or more and 22 or less carbon atoms and an average number of moles of added alkylene oxide of 0 or more and 25 or less (hereinafter, referred to as a component (A)); and a second agent comprising (B) a fatty acid alkanolamide having a fatty acid moiety with 10 or more and 22 or less carbon atoms (hereinafter, referred to as a component (B)).

**18.** The kit according to claim 17, wherein the first agent comprising the component (A) and the second agent comprising the component (B) are each an aqueous solution.

**19.** The kit according to claim 17 or 18, wherein the first agent comprising the component (A) and the second agent comprising the component (B) are mixed together such that a mass ratio of the component (A) to the component (B), (A)/(B), is 3/97 or more and 95/5 or less.

**20.** The kit according to any one of claims 17 to 19, wherein the first agent comprising the component (A) and the second agent comprising the component (B) are mixed together with water for use such that a total of a content of the component (A) and a content of the component (B) relative to 100 parts by mass of water is 0.5 parts by mass or more and 99 parts by mass or less.

**21.** The kit according to any one of claims 17 to 20, wherein the first agent comprising the component (A) and the second agent comprising the component (B) are mixed together to form a wormlike micelle.

**22.** The kit according to any one of claims 17 to 21, wherein at least one of the first agent comprising the component (A) and the second agent comprising the component (B) further comprises (D) one or more compounds selected from polyethylene glycols with a weight-average molecular weight of 500 or more, polypropylene glycols with a weight-average molecular weight of 500 or more, copolymers of ethylene oxide and propylene oxide with a weight-average molecular weight of 500 or more, and ether compounds having a hydrocarbon group and a polyoxyalkylene group (hereinafter, referred to as a component (D)).

**23.** The kit according to any one of claims 17 to 22, for rheology modification.

**24.** The kit according to any one of claims 17 to 22, for producing a slurry composition.

**25.** The kit according to any one of claims 17 to 22, for producing a hydraulic slurry composition.

**26.** Use of a mixture as a rheology modifier, the mixture comprising: (A) a sulfate or a salt thereof having a hydrocarbon group with 12 or more and 22 or less carbon atoms and an average number of moles of added alkylene oxide of 0 or more and 25 or less (hereinafter, referred to as a component (A)); (B) a fatty acid alkanolamide having a fatty acid moiety with 10 or more and 22 or less carbon atoms (hereinafter, referred to as a component (B)); and water.

**27.** The use as a rheology modifier according to claim 26, wherein the mixture further comprises (C) a compound having a hydroxy group with an octanol/water partition coefficient of -1.6 or more and 1.2 or less (hereinafter, referred to as a component (C)).

**28.** The use as a rheology modifier according to claim 26 or 27, wherein the mixture comprises a wormlike micelle formed of the component (A) and the component (B).

**29.** An admixture for a hydraulic slurry composition, the admixture comprising: (A) a sulfate or a salt thereof having a hydrocarbon group with 12 or more and 22 or less carbon atoms and an average number of moles of added alkylene

oxide of 0 or more and 25 or less (hereinafter, referred to as a component (A)); (B) a fatty acid alkanolamide having a fatty acid moiety with 10 or more and 22 or less carbon atoms (hereinafter, referred to as a component (B)); and (E) a dispersant (hereinafter, referred to as a component (E)).

**30.** The admixture for a hydraulic slurry composition according to claim 29, wherein a mass ratio of the component (A) to the component (B), (A)/(B), is 3/97 or more and 95/5 or less.

**31.** The admixture for a hydraulic slurry composition according to claim 29 or 30, wherein a mass ratio of a total of a content of the component (A) and a content of the component (B) to a content of the component (E), [(A)+(B)]/(E), is 3/97 or more and 95/5 or less.

**32.** The admixture for a hydraulic slurry composition according to any one of claims 29 to 31, wherein the component (E) is one or more dispersants selected from (E1) naphthalene-based dispersants, (E2) polycarboxylic acid-based dispersants, (E3) dispersants consisting of the following polycondensation products, (E4) lignin-based dispersants, and (E5) melamine-based dispersants:
<polycondensation products>
polycondensation products consisting of the following component E31, component E33, and optional component E32:

[component E31]
an aromatic compound or heteroaromatic compound having 5 to 10 carbon atoms or heteroatoms, and having 1 to 300 oxyethylene and/or oxypropylene groups, on average per molecule, bonded to the aromatic compound or heteroaromatic compound via an O atom or an N atom;
[component E32]
at least one aromatic compound, as an optional component, selected from the group consisting of (E32-1) phenol, (E32-2) phenol ether, (E32-3) naphthol, (E32-4) naphthol ether, (E32-5) aniline, (E32-6) furfuryl alcohol, and (E32-7) aminoplast-forming agent selected from the group consisting of melamine or derivatives thereof, urea or derivatives thereof, and carboxamides; and
[component E33]
an aldehyde selected from the group consisting of formaldehyde, glyoxylic acid, and benzaldehyde, and mixtures thereof, the benzaldehyde optionally and further having an acidic group represented by a formula $COOM_a$, $SO_3M_a$, or $PO_3M_a$, wherein M represents H, an alkali metal or an alkali earth metal, ammonium, or an organic amine group, and a may be 1/2, 1, or 2.

**33.** The admixture for a hydraulic slurry composition according to claim 32, wherein the component (E) is (E2) a polycarboxylic acid-based dispersant.

**34.** A hydraulic slurry composition comprising the admixture for a hydraulic slurry composition according to any one of claims 29 to 33, water, and a hydraulic powder.

**35.** A rheology modifier comprising an association between an anionic surfactant and a nonionic surfactant.

**36.** A rheology modifier comprising an anionic surfactant and a nonionic surfactant, wherein
the viscosity of an aqueous solution containing 5% by mass of the anionic surfactant and 5% by mass of the nonionic surfactant at 20°C is two times or more higher than any of the viscosity of a liquid of the anionic surfactant as a single substance at 20°C, the viscosity of a mixture containing 10% by mass or more of the anionic surfactant and water at 20°C, the viscosity of a liquid of the nonionic surfactant as a single substance at 20°C, and the viscosity of a mixture containing 10% by mass or more of the nonionic surfactant and water at 20°C.

**37.** A method for modifying water rheology, the method comprising mixing the rheology modifier according to claim 35 or 36 with water.

**38.** Use of a mixture as a rheology modifier, the mixture comprising an association between an anionic surfactant and a nonionic surfactant and water.

**39.** Use of a mixture as a rheology modifier, the mixture comprising an anionic surfactant and a nonionic surfactant and water, wherein
the viscosity of an aqueous solution containing 5% by mass of the anionic surfactant and 5% by mass of the nonionic

surfactant at 20°C is two times or more higher than any of the viscosity of a liquid of the anionic surfactant as a single substance at 20°C, the viscosity of a mixture containing 10% by mass or more of the anionic surfactant and water at 20°C, the viscosity of a liquid of the nonionic surfactant as a single substance at 20°C, and the viscosity of a mixture containing 10% by mass or more of the nonionic surfactant and water at 20°C.

**40.** A component for a rheology modifier, the component consisting of (A) a sulfate or a salt thereof having a hydrocarbon group with 12 or more and 22 or less carbon atoms and an average number of moles of added alkylene oxide of 0 or more and 25 or less, wherein
the rheology modifier comprises (B) a fatty acid alkanolamide having a fatty acid moiety with 10 or more and 22 or less carbon.

**41.** A component for a rheology modifier, the component consisting of (A) a sulfate or a salt thereof having a hydrocarbon group with 12 or more and 22 or less carbon atoms and an average number of moles of added alkylene oxide of 0 or more and 25 or less, wherein
the component is for producing the rheology modifier in combination with (B) a fatty acid alkanolamide having a fatty acid moiety with 10 or more and 22 or less carbon.

**42.** A component for a rheology modifier, the component consisting of (B) a fatty acid alkanolamide having a fatty acid moiety with 10 or more and 22 or less carbon, wherein
the rheology modifier comprises (A) a sulfate or a salt thereof having a hydrocarbon group with 12 or more and 22 or less carbon atoms and an average number of moles of added alkylene oxide of 0 or more and 25 or less.

**43.** A component for a rheology modifier, the component consisting of (B) a fatty acid alkanolamide having a fatty acid moiety with 10 or more and 22 or less carbon, wherein
the component is for producing the rheology modifier in combination with (A) a sulfate or a salt thereof having a hydrocarbon group with 12 or more and 22 or less carbon atoms and an average number of moles of added alkylene oxide of 0 or more and 25 or less.

[Figure 1]

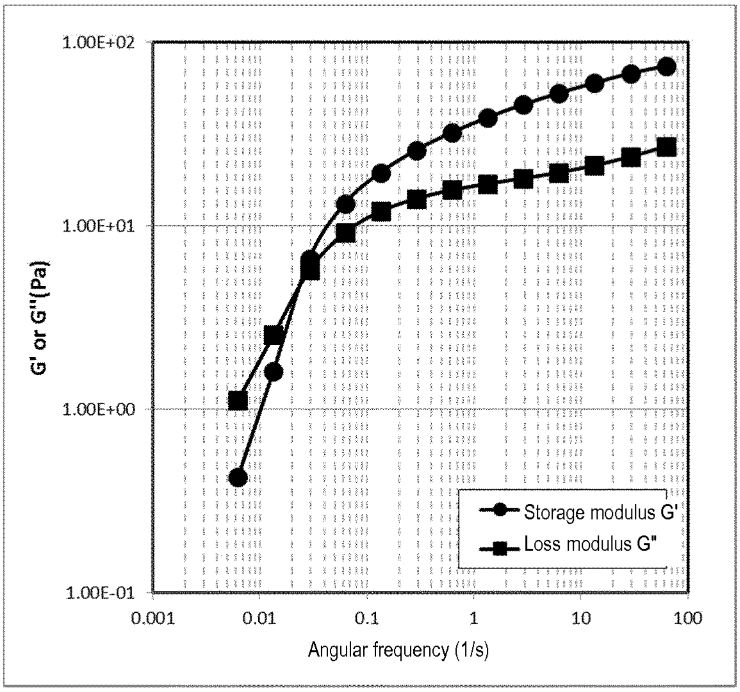


[Figure 2]

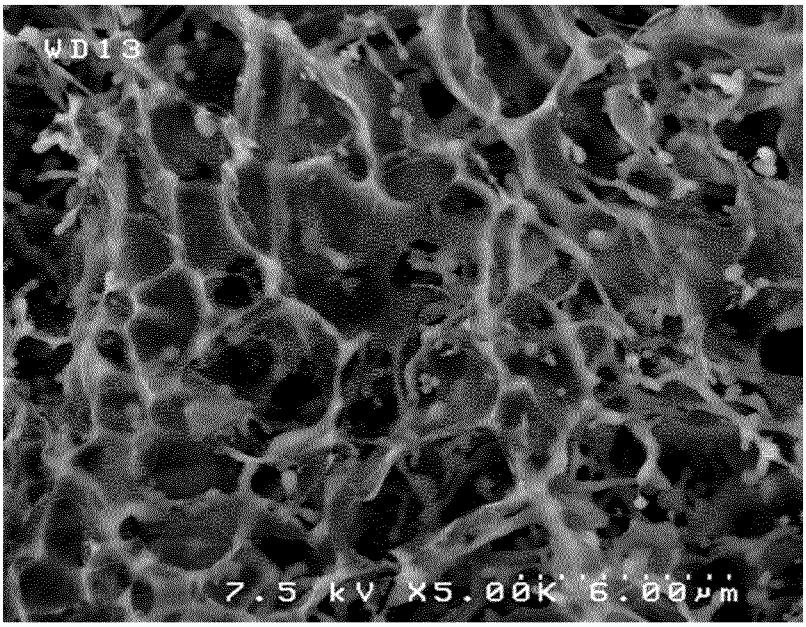

[Figure 3]

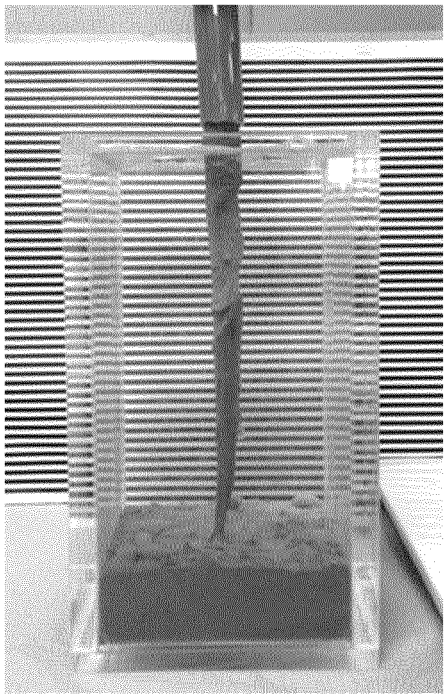

[Figure 4]

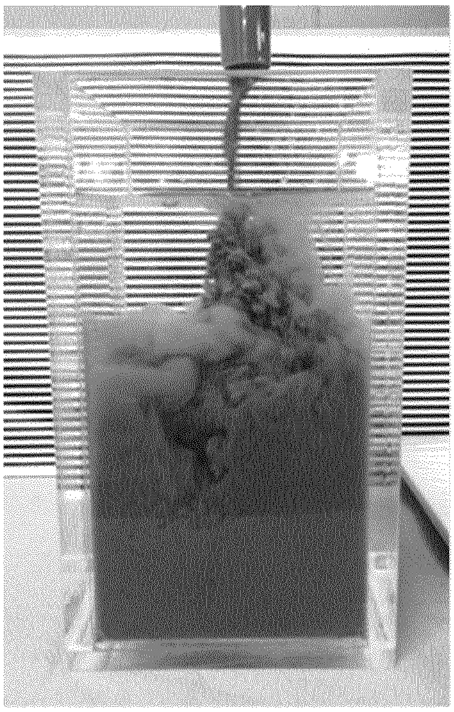

## INTERNATIONAL SEARCH REPORT

International application No.
PCT/JP2017/021918

A. CLASSIFICATION OF SUBJECT MATTER
*C09K3/00*(2006.01)i

According to International Patent Classification (IPC) or to both national classification and IPC

B. FIELDS SEARCHED

Minimum documentation searched (classification system followed by classification symbols)
C09K3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2011-219663 A (Shiseido Co., Ltd.), 04 November 2011 (04.11.2011), claims; paragraphs [0008] to [0009], [0015] to [0022], [0031], [0040] to [0044], [0054], [0057] to [0058]; examples & US 2013/0053295 A1 claims; paragraphs [0015] to [0016], [0029] to [0040], [0057], [0071] to [0083], [0106], [0109] to [0110]; examples & WO 2011/129034 A1 & EP 2559749 A1 & TW 201134939 A & CN 102947436 A & KR 10-2013-0040802 A | 1-6,11-13, 17-21,23-24, 26-28,35-43 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 July 2017 (14.07.17) | 25 July 2017 (25.07.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

INTERNATIONAL SEARCH REPORT

International application No. PCT/JP2017/021918

C (Continuation). DOCUMENTS CONSIDERED TO BE RELEVANT

| Category* | Citation of document, with indication, where appropriate, of the relevant passages | Relevant to claim No. |
|---|---|---|
| X | JP 2004-091522 A (Lion Corp.), 25 March 2004 (25.03.2004), claims; paragraphs [0005], [0008] to [0010], [0014], [0021]; examples (Family: none) | 1-7,11-12, 17,19-21, 23-24,26-28, 35-43 |
| X | JP 2009-067903 A (Diversey IP International B.V.), 02 April 2009 (02.04.2009), claims; paragraphs [0011], [0021] to [0028], [0032] to [0036]; examples (Family: none) | 1-7,11-12, 17,19-21, 23-24,26-28, 35-43 |
| X | JP 2005-255777 A (New Japan Chemical Co., Ltd.), 22 September 2005 (22.09.2005), claims; paragraphs [0010], [0025] to [0046]; examples (Family: none) | 1-7,11-12, 17,19-24, 26-28,35-43 |
| X | JP 56-145996 A (The Procter & Gamble Co.), 13 November 1981 (13.11.1981), claims; page 2, lower left column, line 19 to lower right column, line 5; page 3, upper right column, line 1 to page 6, upper right column, line 3; page 6, lower left column, line 7 to lower right column, line 5; page 6, lower right column, line 17 to page 7, upper left column, line 15; page 8, upper right column, line 12 to page 9, upper right column, line 12; examples & US 4457856 A claims; column 1, lines 47 to 54; column 2, line 25 to column 5, line 68; column 6, lines 27 to 51; column 6, line 65 to column 7, line 12; column 8, line 51 to column 10, line 12; examples & EP 21545 A1 & CA 1160134 A | 1-6,8-12, 14-17,19-21, 23-28,35-43 |
| X | JP 2013-185061 A (Yamaguchi Mica Co., Ltd.), 19 September 2013 (19.09.2013), claims; paragraphs [0007], [0034] to [0035]; examples & WO 2013/133091 A1 & CN 103547650 A & KR 10-2014-0133772 A | 1-6,8-12, 14-17,19-21, 23-28,35-43 |

Form PCT/ISA/210 (continuation of second sheet) (January 2015)

**INTERNATIONAL SEARCH REPORT**

International application No.
PCT/JP2017/021918

C (Continuation). DOCUMENTS CONSIDERED TO BE RELEVANT

| Category* | Citation of document, with indication, where appropriate, of the relevant passages | Relevant to claim No. |
|---|---|---|
| X | JP 2001-517207 A (Rhodia Inc.), 02 October 2001 (02.10.2001), claims; page 23, lines 13 to 26; page 26, line 13 to page 27, line 2; page 29, lines 12 to 14; page 30, lines 4 to 13; examples & US 6375969 B1 claims; column 3, line 63 to column 4, line 12; column 5, lines 53 to 65; column 8, lines 20 to 23, 33 to 44; examples & WO 1998/012920 A1 & EP 935411 A1 & AU 4392497 A & BR 9715000 A & CA 2266735 A & KR 10-2000-0048618 A | 1-6,8-12, 14-17,19-21, 23-43 |
| X | JP 2011-213676 A (Kose Corp.), 27 October 2011 (27.10.2011), claims; paragraph [0006]; examples (Family: none) | 1-6,11-12, 17,19-21, 23-24,26-43 |
| X | JP 2007-210931 A (Shiseido Co., Ltd.), 23 August 2007 (23.08.2007), claims; examples (Family: none) | 1-6,11-12, 17,19-21, 23-24,26-43 |
| X | JP 2003-082386 A (ICI Americas Inc.), 19 March 2003 (19.03.2003), claims; examples & US 2003/0036498 A1 claims; examples & WO 2002/092740 A1 & EP 1395644 A1 & CA 2447042 A & EG 23011 A & TW 573008 B & BR 209673 A & PL 370692 A & CN 1535309 A & RU 2003136093 A & ZA 200308357 A & KR 10-0887861 B1 & AU 2002342563 B & CO 5650174 A & IL 158452 A & AR 35893 A | 1-6,11-12, 17,19-21, 23-24,26-28, 35-43 |
| X | JP 10-183176 A (Kawaken Fine Chemicals Co., Ltd.), 14 July 1998 (14.07.1998), claims; paragraphs [0006], [0019]; examples (Family: none) | 1-6,11-12, 17,19-21, 23-24,26-28, 35-43 |
| A | JP 3-024199 A (Lion Corp.), 01 February 1991 (01.02.1991), entire text (Family: none) | 1-43 |
| A | JP 2007-051261 A (Matsumoto Yushi-Seiyaku Co., Ltd.), 01 March 2007 (01.03.2007), entire text (Family: none) | 1-43 |

Form PCT/ISA/210 (continuation of second sheet) (January 2015)

**INTERNATIONAL SEARCH REPORT**

International application No. PCT/JP2017/021918

C (Continuation). DOCUMENTS CONSIDERED TO BE RELEVANT

| Category* | Citation of document, with indication, where appropriate, of the relevant passages | Relevant to claim No. |
|---|---|---|
| A | JP 62-105979 A (Sumitomo Metal Mining Co., Ltd.), 16 May 1987 (16.05.1987), entire text (Family: none) | 1-43 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010270169 A
- JP 2003313536 A
- JP 2009161607 A
- JP 58185692 A
- JP 49104919 A
- JP 8012397 A
- JP 2008517080 A
- JP 2016108183 A
- JP 2015229764 A
- JP 2003002714 A
- JP 2007105899 A
- JP 2007261119 A
- JP 2015193804 A
- JP 2011240224 A
- JP 2015212216 A
- JP 63037058 B
- JP 2003183232 A


### Non-patent literature cited in the description


- **A. LEO.** Comprehensive Medicinal Chemistry. Pergamon Press, 1990, vol. 4, 295
- **TOSHIYUKI SHIKATA.** Viscoelasticity Characteristics of Surfactant Aqueous Solution. *Surface,* 1991, vol. 29 (5), 399-499
- Concrete Souran. Overview of Concrete. Gijutsu Shoin, 10 June 1998
- Sulfation of Higher Alcohol with Sulfamic Acid. *Journal of Japan Oil Chemists' Society,* 1952, vol. 1 (2), 73-76
- Viscoelasticity Characteristics of Surfactant Aqueous Solution. *Toshiyuki Shikata, Surface,* 1991, vol. 29 (5), 399-499